(19) Europäisches Patentamt / European Patent Office / Office européen des brevets

(11) **EP 3 811 704 B1**

(12) **EUROPÄISCHE PATENTSCHRIFT**

(45) Veröffentlichungstag und Bekanntmachung des Hinweises auf die Patenterteilung:
**03.08.2022 Patentblatt 2022/31**

(21) Anmeldenummer: **19732972.5**

(22) Anmeldetag: **19.06.2019**

(51) Internationale Patentklassifikation (IPC):
**H04W 72/04** *(2009.01)* **H04B 1/7143** *(2011.01)*
**H04W 72/08** *(2009.01)* H04B 1/715 *(2011.01)*

(52) Gemeinsame Patentklassifikation (CPC):
**H04W 72/0446; H04B 1/7143; H04W 72/0453; H04W 72/048; H04W 72/082;** H04B 1/715

(86) Internationale Anmeldenummer:
**PCT/EP2019/066288**

(87) Internationale Veröffentlichungsnummer:
**WO 2019/243465 (26.12.2019 Gazette 2019/52)**

(54) **KANALZUGRIFF ÜBER HIERARCHISCH ORGANISIERTE KANALZUGRIFFSMUSTER**

CHANNEL ACCESS VIA HIERARCHICALLY ORGANISED CHANNEL ACCESS PATTERNS

ACCÈS AU CANAL PAR MODÈLE D'ACCÈS AU CANAL ORGANISÉ DE MANIÈRE HIÉRARCHIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **22.06.2018 DE 102018210243**

(43) Veröffentlichungstag der Anmeldung:
**28.04.2021 Patentblatt 2021/17**

(73) Patentinhaber:
• **Fraunhofer-Gesellschaft zur Förderung der angewandten Forschung e.V.
80686 München (DE)**
• **Friedrich-Alexander-Universität Erlangen-Nürnberg
91054 Erlangen (DE)**

(72) Erfinder:
• **OBERNOSTERER, Frank
90411 Nürnberg (DE)**
• **MEYER, Raimund
90765 Fürth (DE)**

• **KILIAN, Gerd
91058 Erlangen (DE)**
• **BERNHARD, Josef
91058 Erlangen (DE)**
• **WECHSLER, Johannes
91058 Erlangen (DE)**
• **KNEISSL, Jakob
91058 Erlangen (DE)**
• **SCHLICHT, Michael
91058 Erlangen (DE)**
• **ROBERT, Jörg
91080 Uttenreuth (DE)**

(74) Vertreter: **Schlenker, Julian et al
Schoppe, Zimmermann, Stöckeler Zinkler, Schenk & Partner mbB
Patentanwälte
Radlkoferstraße 2
81373 München (DE)**

(56) Entgegenhaltungen:
**WO-A2-2017/162742 US-A1- 2009 074 033
US-A1- 2015 163 814**

**Beschreibung**

Ausführungsbeispiele der vorliegenden Erfindung beziehen sich auf einen Controller für einen Teilnehmer eines Kommunikationssystems, auf eine Basisstation eines Kommunikationssystems, auf einen Endpunkt des Kommunikationssystems sowie auf das Kommunikationssystem, wobei das Kommunikationssystem in einem Frequenzband drahtlos kommuniziert, welches von einer Mehrzahl von Kommunikationssystemen zur Kommunikation genutzt wird. Manche Ausführungsbeispiele beziehen sich auf einen Kanalzugriff über hierarchisch organisierte Kanalzugriffsmuster.

Bei der drahtlosen Kommunikation zwischen Teilnehmern eines Kommunikationssystems in einem Frequenzband, welches von einer Mehrzahl von Kommunikationssystemen zur Kommunikation genutzt wird, ist eine Vermeidung von Interferenzen zwischen den Teilnehmern des Kommunikationssystems sowie eine Vermeidung durch Störsignale anderer Kommunikationssysteme (= Kommunikation zwischen Teilnehmer anderer Kommunikationssysteme) erforderlich.

Allgemeine Methoden der Interferenzvermeidung

Störungen von Teilnehmern innerhalb des eigenen Funknetzwerks (oder Kommunikationssystems) werden oftmals durch eine (z.B. durch eine Basisstation) koordinierte, konfliktfreie Zuteilung von Funkressourcen vermieden. Dies erfolgt z.B. in den Mobilfunkstandards GSM, UMTS und LTE, wo (außerhalb der initialen Netzwerk-Anmeldungsphase) Kollisionen von Funkteilnehmern innerhalb desselben Netzwerks durch sogenanntes "Scheduling" (dt. Ablaufplanung) vollständig vermieden werden können.

Störungen durch Funkteilnehmer außerhalb des eigenen Netzwerks werden oftmals durch geeignete Funknetzplanung reduziert. Hierbei wird jedem Netzwerk ein bestimmter nutzbarer Frequenzbereich (seinerseits eventuell bestehend aus mehreren Frequenzkanälen) aus dem gesamten zur Verfügung stehenden Frequenzband zugewiesen. Örtlich benachbarte Netzwerke verwenden unterschiedliche Frequenzbereiche, wodurch direkte Störungen zwischen Teilnehmern örtlich benachbarter Netzwerke nicht vorkommen. Diese Methode stellt letztlich auch eine Form der Koordination zwischen Netzwerken dar.

Wenn eine solche festgelegte Zuteilung von Frequenzbereichen oder Funkkanälen zu individuellen Netzwerken nicht möglich oder nicht praktikabel ist (wie z.B. oftmals in nicht lizenzierten Frequenzbändern), kann ein Netzwerk aus einem Satz von vorgegebenen Frequenzbereichen einen ungenutzten oder z.B. den am wenigsten genutzten durch eine Lastmessung ermitteln und diesen dann belegen bzw. dorthin wechseln.

Interferenzvermeidung bei Einsatz des TSMA-Verfahrens

Einen weiteren Fall stellt die Übertragung von Nachrichten (Datenpaketen) mittels des sog. Telegram-Splitting-Multiple-Access (TSMA, dt. Telegrammaufteilungs-Verfahren) Verfahrens dar [1]. Hier wird der von einem Netzwerk nutzbare Frequenzbereich in eine vorgegebene Anzahl von Frequenzkanälen unterteilt, wobei ein Datenpaket auf eine Mehrzahl von Teil-Datenpaketen aufgeteilt übertragen wird, welche typischerweise zu unterschiedlichen Zeitpunkten und auf unterschiedlichen Frequenzkanälen gesendet werden. Hierbei spielt das für die Übertragung der Teil-Datenpakete verwendete Sprungmuster (oder Zeit-/Frequenzsprungmuster) eine besondere Rolle, wie z.B. in [2] gezeigt wird. Eine besonders hohe Auslastung von Netzwerken lässt sich erzielen, wenn es möglichst viele verschiedene Sprungmuster gibt, welche untereinander nur möglichst wenige und auch kurze Überlappungssequenzen enthalten. Um Interferenz von mehreren Netzwerken untereinander zu verringern, können die Netzwerke relativ zueinander unterschiedliche Sprungmuster verwenden. Diese Netzwerk-individuellen Sprungmuster müssen allen Teilnehmern in den jeweiligen Netzwerken bekannt sein. Zudem ist anzustreben, dass die Sprungmuster - wie oben beschrieben - nur möglichst kurze Überlappungssequenzen zueinander haben, um systematische Kollisionen zwischen Teil-Datenpaketen von Teilnehmern unterschiedlicher Netzwerke zu vermeiden.

In untereinander koordinierten Netzwerken ist es möglich, jedem Netzwerk ein individuelles Sprungmuster zuzuweisen, welches möglichst wenig Überlappung mit den Sprungmustern anderer Netzwerke in Empfangsreichweite hat. Die Gesamtheit aller verfügbaren Sprungmuster kann als Satz (von Sprungmustern) tabelliert werden, aus welchem die Netzwerk-übergreifende, koordinierende Instanz jedem Netzwerk ein/mehrere individuelle(s) Sprungmuster zuweist. Die Berechnung eines Satzes geeigneter Sprungmuster kann vorab nach geeigneten Optimierungskriterien erfolgen.

Sind Netzwerke untereinander nicht koordiniert und ggf. auch zeitlich und im Frequenzbereich nicht synchronisiert, so kann die obige Methode (tabellierte, vorberechnete Sprungmuster) zwar prinzipiell auch angewandt werden, jedoch besteht das Risiko, dass zwei Netzwerke zufällig dasselbe Sprungmuster verwenden. Um die Wahrscheinlichkeit, dass zwei (sich gegenseitig beeinflussende) Netzwerke das gleiche Sprungmuster verwenden, auf ein sinnvolles Maß zu verringern, müsste eine außerordentlich große Zahl von verfügbaren Sprungmustern existieren, insbesondere in einem Szenario mit vielen Netzwerken.

Die US 2015/163814 A1 bezieht auf ein drahtloses Feuerdetektionssystem, bei dem ein zu überwachender Bereich, der mit entsprechenden Sensoren ausgestattet ist, von mehreren sog. Gateways bedient wird. Die Gateways bedienen hierbei jeweils diejenigen Sensoren, die in einem Empfangsbereich des jeweiligen Gateways angeordnet sind. Zur Kommunikation mit den jeweiligen Sensoren nutzten die Gateways ein gemeinsames Sprungmuster, das jedoch mit jeweils mit unterschiedlichen Offsets beaufschlagt ist, so dass die von den Gateways verwendeten Sprungmuster in der Zeit verschobene Versionen voneinander sind.

Die US 2009/074033 A1 bezieht sich auf die Generierung eines Sprungmusters, welches möglichst wenig Interferenzen zu benachbarten Systemen aufweisen soll. Hierbei kann die Basisstation in einer übertragungsfreien Zeit die Frequenzkanäle abhören und das von dem Kommunikationssystem verwendete Sprungmuster dahingehend anpassen, dass Frequenzkanäle, in denen eine Interferenz detektiert wurde, aus einem so generierten neuen Sprungmuster ausgenommen werden. Das so erhaltene neue Sprungmuster wird dem Knoten mittels einer sog. Management-Nachricht kommuniziert.

Die WO 2017/162742 A2 bezieht sich auf ein Telegrammaufteilungsübertragungsverfahren für bidirektionale Netze. Der Datensender umfasst eine Einrichtung zum Erzeugen von Sendedatenpaketen, die ausgebildet ist, um ein erstes für einen ersten Datenempfänger bestimmtes Datenpaket in mehrere Sendedatenpakete aufzuteilen, wobei jedes der für den ersten Datenempfänger bestimmten Sendedatenpakete kürzer ist als das erste Datenpaket. Ferner umfasst der Datensender eine Einrichtung zum Senden von Datenpaketen, die ausgebildet ist, um die für den ersten Datenempfänger bestimmten Sendedatenpakete mit einem zeitlichen Abstand über einen Kommunikationskanal zu senden. Die Einrichtung zum Senden von Datenpaketen kann dabei ausgebildet sein, um

- zumindest ein weiteres Sendedatenpaket zu dem ersten Datenempfänger oder einem zweiten Datenempfänger in dem zeitlichen Abstand zwischen den mehreren für den ersten Datenempfänger bestimmten Sendedatenpaketen zu senden; oder
- ein zum Senden anstehendes Sendedatenpaket der mehreren Sendedatenpakte nicht, nur teilweise oder später zu senden, wenn zu dem Zeitpunkt des Sendes des einen Sendedatenpakets ein weiteres Sendedatenpaket zum Senden ansteht; oder
- ein zum Senden anstehendes Sendedatenpaket der mehreren Sendedatenpakte in Abhängigkeit von äußeren Gegebenheiten nicht, nur teilweise oder später zu senden; oder
- ein zum Senden anstehendes Sendedatenpaket der mehreren Sendedatenpakte nicht, nur teilweise oder später über den Kommunikationskanal zu senden, wenn zu dem Zeitpunkt des Sendens des Datenpakets eine Störung oder eine Übertragung von einem anderen Datensender erkannt wird.

Der vorliegenden Erfindung liegt somit die Aufgabe zugrunde, ein Konzept zu schaffen, welches die Übertragungssicherheit zwischen Teilnehmern eines Kommunikationssystems erhöht, wenn die Teilnehmer des Kommunikationssystems auf ein Frequenzband zugreifen, welches von mehreren untereinander unkoordinierten Kommunikationssysteme zur drahtlosen Kommunikation verwendet wird.

Diese Aufgabe wird durch die unabhängigen Patentansprüche gelöst.

Vorteilhafte Weiterbildungen finden sich in den abhängigen Patentansprüchen.

Es sollte beachtet werden, dass in der gesamten Beschreibung Kanalzugriffsmuster erwähnt werden, die verwendbare frequenz- und/oder zeitsprungbasierte Belegungen von Ressourcen angeben. In den Umfang der Ansprüche fallen jedoch nur Kanalzugriffsmuster, die verwendbare frequenz- und zeitsprungbasierte Belegungen von Ressourcen angeben.

Ausführungsbeispiele schaffen einen Endpunkt eines Kommunikationssystems, wobei das Kommunikationssystem in einem Frequenzband [z.B. einem lizenzfreien und/oder genehmigungsfreien Frequenzband; z.B. ISM Band] drahtlos kommuniziert, welches von einer Mehrzahl von Kommunikationssystemen zur Kommunikation genutzt wird, wobei der Endpunkt ausgebildet ist, um ein Signal [z.B. ein Baken-Signal] zu empfangen, wobei das Signal eine Information über ein netzwerkspezifisches Kanalzugriffsmuster aufweist, wobei das netzwerkspezifische Kanalzugriffsmuster eine für die Kommunikation des Kommunikationssystems verwendbare frequenz- und/oder zeitsprungbasierte Belegung von Ressourcen des Frequenzbands angibt [z.B. eine zeitliche Abfolge von für die Kommunikation des Kommunikationssystems verwendbare (z.B. über das Frequenzband verteilte) Frequenzressourcen], wobei der Endpunkt ausgebildet ist, um Daten unter Verwendung von einem relativen Kanalzugriffsmuster zu übertragen [z.B. zu senden oder zu empfangen], wobei das relative Kanalzugriffsmuster eine für die Übertragung zu verwendende Belegung von Ressourcen aus der verwendbaren frequenz- und/oder zeitsprungbasierten Belegung von Ressourcen des netzwerkspezifischen Kanalzugriffsmusters angibt [z.B. gibt das relative Kanalzugriffsmuster an, welche der durch das netzwerkspezifische Kanalzugriffsmuster für die Kommunikation des Kommunikationssystems freigegebenen oder verwendbaren Ressourcen tatsächlich für die Übertragung von Daten durch den Endpunkt zu verwenden sind].

Gemäß der Erfindung ist die für die Übertragung zu verwendende Belegung von Ressourcen des relativen Kanalzugriffsmusters eine Teilmenge der verwendbaren frequenzund zeitsprungbasierten Belegung von Ressourcen des netzwerkspezifischen Kanalzugriffsmusters sein [z.B. wobei das relative Kanalzugriffsmuster nur eine Teilmenge der Ressourcen des netzwerkspezifischen Kanalzugriffsmusters aufweist].

Bei Ausführungsbeispielen kann sich das relative Kanalzugriffsmuster von einem anderen relativen Kanalzugriffsmuster, basierend auf dem ein anderer Teilnehmer [z.B. Endpunkt und/oder Basisstation; z.B. Basisstation an einen anderen Teilnehmer] des Kommunikationssystems Daten überträgt [z.B. sendet und/oder empfängt], unterscheiden, wobei das andere relative Kanalzugriffsmuster eine für die Übertragung durch den anderen Teilnehmer zu verwendende Belegung von Ressourcen aus der verwendbaren frequenz- und/oder zeitsprungbasierten Belegung von Ressourcen des netzwerkspezifischen Kanalzugriffsmusters angibt.

Bei Ausführungsbeispielen kann das netzwerkspezifische Kanalzugriffsmuster die für die Kommunikation des Kommunikationssystems verwendbare frequenz- und/oder zeitsprungbasierte Belegung von Ressourcen des Frequenzbands in Frequenzkanälen [z.B. in die das Frequenzband unterteilt ist] und zugeordneten Zeitschlitzen oder in Frequenzkanalindizes und zugordneten Zeitschlitzindizes angeben.

Bei Ausführungsbeispielen kann das netzwerkspezifische Kanalzugriffsmuster in Frequenzrichtung [z.B. pro Zeitschlitz oder Zeitschlitzindex] eine Mehrzahl von benachbarten oder voneinander beabstandeten Ressourcen [z.B. Frequenzkanälen oder Frequenzkanalindizes] des Frequenzbands angeben.

Bei Ausführungsbeispielen kann das relative Kanalzugriffsmuster in Frequenzrichtung höchstens eine Teilmenge [z.B. höchstens eine Ressource, d.h. eine oder keine Ressource] der Mehrzahl von benachbarten oder voneinander beabstandeten Ressourcen des netzwerkspezifischen Kanalzugriffsmusters angeben.

Bei Ausführungsbeispielen kann das relative Kanalzugriffsmuster für zumindest einen Zeitsprung [z.B. für zumindest einen Zeitschlitz oder Zeitschlitzindex] in Frequenzrichtung eine andere Ressource der Mehrzahl von benachbarten oder voneinander beabstandeten Ressourcen des netzwerkspezifischen Kanalzugriffsmusters angeben als ein anderes relatives Kanalzugriffsmuster, basierend auf dem ein anderer Teilnehmer [z.B. Endpunkt und/oder Basisstation; z.B. Basisstation an einen anderen Teilnehmers] des Kommunikationssystems Daten überträgt [z.B. sendet und/oder empfängt], wobei das andere relative Kanalzugriffsmuster eine für die Übertragung durch den anderen Teilnehmer zu verwendende Belegung von Ressourcen aus der verwendbaren frequenz- und/oder zeitsprungbasierten Belegung von Ressourcen des netzwerkspezifischen Kanalzugriffsmusters angibt.

Bei Ausführungsbeispielen können zumindest zwei Ressourcen [z.B. Frequenzkanälen oder Frequenzkanalindizes] der Mehrzahl von benachbarten oder voneinander beabstandeten Ressourcen in Frequenzrichtung unterschiedliche Symbolraten und/oder unterschiedliche Anzahlen an Symbolen zugeordnet sein.

Bei Ausführungsbeispielen kann die Mehrzahl von benachbarten Ressourcen in Frequenzrichtung einen Block [z.B. Cluster] von zusammenhängenden Ressourcen bilden, wobei unterschiedlichen Teilen des Blocks von zusammenhängenden Ressourcen unterschiedliche Symbolraten und/oder unterschiedliche Anzahlen von Symbolen zugeordnet sind.

Bei Ausführungsbeispielen kann der Endpunkt ausgebildet sein, um das relative Kanalzugriffsmuster aus einem Satz [z.B. Vorrat] von M relativen Kanalzugriffsmustern auszuwählen, wobei die M relativen Kanalzugriffsmuster eine für die Übertragung zu verwendende Belegung von Ressourcen aus der verwendbaren frequenz- und/oder zeitsprungbasierten Belegung von Ressourcen des netzwerkspezifischen Kanalzugriffsmusters angeben, wobei die M relativen Kanalzugriffsmuster unterschiedlich sind [z.B. sich in zumindest der Belegung von einer Ressource unterscheiden].

Bei Ausführungsbeispielen kann der Endpunkt ausgebildet sein, um das relative Kanalzugriffsmuster zufällig aus dem Satz von M relativen Kanalzugriffsmustern auszuwählen.

Bei Ausführungsbeispielen kann der Endpunkt ausgebildet sein, um das relative Kanalzugriffsmuster auf Basis eines immanenten Parameters aus dem Satz von M relativen Kanalzugriffsmustern auszuwählen.

Bei Ausführungsbeispielen kann der immanente Parameter eine digitale Signatur des Telegramms [z. B. CMAC (One-key MAC)] oder ein Codewort für die Detektion von Übertragungsfehlern [z. B. eine CRC] sein.

Bei Ausführungsbeispielen kann der Endpunkt ausgebildet sein, um das relative Kanalzugriffsmuster in Abhängigkeit von Anforderungen der zu übertragenen Daten an Übertragungseigenschaften [z.B. Latenz, oder Robustheit gegen Interferenzen] aus einem Satz von relativen Kanalzugriffsmustern mit unterschiedlichen Übertragungseigenschaften [z.B. unterschiedlicher Latenz, oder unterschiedlicher Robustheit gegen Interferenzen] auszuwählen.

Bei Ausführungsbeispielen kann der Endpunkt ausgebildet sein, um als Daten ein Datenpaket, welches in eine Mehrzahl von Sub-Datenpaketen aufgeteilt ist, entsprechend des relativen Kanalzugriffsmuster zu übertragen [z.B. zu senden oder zu empfangen], wobei die Mehrzahl von Sub-Datenpaketen jeweils nur einen Teil des Datenpakets aufweisen.

Bei Ausführungsbeispielen kann die Information einen Zustand eines Zahlenfolgengenerators [z.B. eines periodischen Zahlenfolgengenerators oder eines deterministischen Zufallszahlengenerators] zur Erzeugung einer Zahlenfolge beschreiben, wobei die Zahlenfolge das Kanalzugriffsmuster bestimmt.

Bei Ausführungsbeispielen kann die Information eine Zahl [z.B. ein Zeitschlitzindex und/oder ein Bakenindex] einer Zahlenfolge [z.B. einer periodischen Zeitschlitzindexfolge und/oder periodischen Bakenindexfolge] beschreiben, wobei die Zahlenfolge das Kanalzugriffsmuster bestimmt.

Weitere Ausführungsbeispiele schaffen eine Basisstation eines Kommunikationssystems, wobei das Kommunikationssystem in einem Frequenzband [z.B. einem lizenzfreien und/oder genehmigungsfreien Frequenzband; z.B. ISM Band] drahtlos kommuniziert, welches von einer Mehrzahl von Kommunikationssystemen zur Kommunikation genutzt wird, wobei die Basisstation ausgebildet ist, um ein Signal [z.B. ein Baken-Signal] zu senden, wobei das Signal eine Information über ein netzwerkspezifisches Kanalzugriffsmuster aufweist, wobei das netzwerkspezifische Kanalzugriffsmuster eine für die Kommunikation des Kommunikationssystems verwendbare frequenz- und/oder zeitsprungbasierte Belegung von Ressourcen des Frequenzbands angibt [z.B. eine zeitliche Abfolge von für die Kommunikation des Kommunikationssystems verwendbare (z.B. über das Frequenzband verteilte) Frequenzressourcen], wobei die Basisstation ausgebildet ist, um Daten unter Verwendung von einem relativen Kanalzugriffsmuster zu übertragen [z.B. zu senden oder zu empfangen], wobei das relative Kanalzugriffsmuster eine für die Übertragung zu verwendende Belegung von Ressourcen aus der verwendbaren frequenz- und/oder zeitsprungbasierten Belegung von Ressourcen des netzwerkspezifischen Kanalzugriffsmusters angibt [z.B. gibt das relative Kanalzugriffsmuster an, welche der durch das netzwerkspezifische Kanalzugriffsmuster für die Kommunikation des Kommunikationssystems freigegebenen oder verwendbaren Ressourcen tatsächlich für die Übertragung von Daten durch die Basisstation zu verwenden sind].

Gemäß der Erfindung ist die für die Übertragung zu verwendende Belegung von Ressourcen des relativen Kanalzugriffsmusters eine Teilmenge der verwendbaren frequenz- und zeitsprungbasierten Belegung von Ressourcen des netzwerkspezifischen Kanalzugriffsmusters sein [z.B. wobei das relative Kanalzugriffsmuster nur eine Teilmenge der Ressourcen des netzwerkspezifischen Kanalzugriffsmusters aufweist].

Bei Ausführungsbeispielen ist der Basisstation vorab nicht bekannt, welches relative Sprungmuster von einem Endpunkt verwendet wird.

Bei Ausführungsbeispielen kann die Basisstation ausgebildet sein, um das verwendete relative Sprungmuster mittels einer Detektion [z. B. durch Korrelation und Schwellwertentischeidung] zu ermitteln.

Bei Ausführungsbeispielen kann sich das relative Kanalzugriffsmuster von einem anderen relativen Kanalzugriffsmuster, basierend auf dem die Basisstation andere Daten überträgt [z.B. sendet und/oder empfängt, z.B. zu einem anderen Teilnehmer sendet und von einem anderen Teilnehmer empfängt], unterscheiden, wobei das andere relative Kanalzugriffsmuster eine für die Übertragung zu verwendende Belegung von Ressourcen aus der verwendbaren frequenz- und/oder zeitsprungbasierten Belegung von Ressourcen des netzwerkspezifischen Kanalzugriffsmusters angibt.

Bei Ausführungsbeispielen kann das netzwerkspezifische Kanalzugriffsmuster die für die Kommunikation des Kommunikationssystems verwendbare frequenz- und/oder zeitsprungbasierte Belegung von Ressourcen des Frequenzbands in Frequenzkanälen [z.B. in die das Frequenzband unterteilt ist] und zugeordneten Zeitschlitzen oder in Frequenzkanalindizes und zugordneten Zeitschlitzindizes angeben.

Bei Ausführungsbeispielen kann das netzwerkspezifische Kanalzugriffsmuster in Frequenzrichtung [z.B. pro Zeitschlitz oder Zeitschlitzindex] eine Mehrzahl von benachbarten oder voneinander beabstandeten Ressourcen [z.B. Frequenzkanälen oder Frequenzkanalindizes] des Frequenzbands angeben.

Bei Ausführungsbeispielen kann das relative Kanalzugriffsmuster in Frequenzrichtung höchstens eine Teilmenge [z.B. höchstens eine Ressource, d.h. eine oder keine Ressource] der Mehrzahl von benachbarten oder voneinander beabstandeten Ressourcen des netzwerkspezifischen Kanalzugriffsmusters angeben.

Bei Ausführungsbeispielen kann das relative Kanalzugriffsmuster für zumindest einen Zeitsprung [z.B. für zumindest einen Zeitschlitz oder Zeitschlitzindex] in Frequenzrichtung eine andere Ressource der Mehrzahl von benachbarten oder voneinander beabstandeten Ressourcen des netzwerkspezifischen Kanalzugriffsmusters angeben als ein anderes relatives Kanalzugriffsmuster, basierend auf dem die Basisstation andere Daten überträgt [z.B. sendet und/oder empfängt, z.B. zu einem anderen Teilnehmer sendet und von einem anderen Teilnehmer empfängt], wobei das andere relative Kanalzugriffsmuster eine für die Übertragung zu verwendende Belegung von Ressourcen aus der verwendbaren frequenz- und/oder zeitsprungbasierten Belegung von Ressourcen des netzwerkspezifischen Kanalzugriffsmusters angibt.

Bei Ausführungsbeispielen können zumindest zwei Ressourcen [z.B. Frequenzkanälen oder Frequenzkanalindizes] der Mehrzahl von benachbarten oder voneinander beabstandeten Ressourcen in Frequenzrichtung unterschiedliche Symbolraten und/oder eine unterschiedliche Anzahl an Symbolen zugeordnet sein.

Bei Ausführungsbeispielen können die Mehrzahl von benachbarten Ressourcen in Frequenzrichtung einen Block [z.B. Cluster] von zusammenhängenden Ressourcen bilden, wobei unterschiedlichen Teilen des Blocks von zusammenhängenden Ressourcen unterschiedliche Symbolraten und/oder unterschiedliche Anzahlen von Symbolen zugeordnet sind.

Bei Ausführungsbeispielen kann die Basisstation ausgebildet sein, um das relative Kanalzugriffsmuster aus einem Satz [z.B. Vorrat] von M relativen Kanalzugriffsmustern auszuwählen, wobei die M relativen Kanalzugriffsmuster eine für die Übertragung zu verwendende Belegung von Ressourcen aus der verwendbaren frequenz- und/oder zeitsprungbasierten Belegung von Ressourcen des netzwerkspezifischen Kanalzugriffsmusters angeben, wobei die M relativen Kanalzugriffsmuster unterschiedlich sind [z.B. sich in zumindest der Belegung von einer Ressource unterscheiden].

Bei Ausführungsbeispielen kann die Basisstation ausgebildet sein, um das relative Kanalzugriffsmuster zufällig aus dem Satz von M relativen Kanalzugriffsmustern auszuwählen.

Bei Ausführungsbeispielen kann die Basisstation ausgebildet sein, um das relative Kanalzugriffsmuster auf Basis eines immanenten Parameters aus dem Satz von M relativen Kanalzugriffsmustern auszuwählen.

Bei Ausführungsbeispielen kann der immanente Parameter eine digitale Signatur des Telegramms [z. B. CMAC (One-key MAC)] oder ein Codewort für die Detektion von Übertragungsfehlern [z. B. eine CRC] sein.

Bei Ausführungsbeispielen kann die Basisstation ausgebildet sein, um das relative Kanalzugriffsmuster in Abhängigkeit von Anforderungen der zu übertragenen Daten an Übertragungeigenschaften [z.B. Latenz, oder Robustheit gegen Interferenzen] aus einem Satz von relativen Kanalzugriffsmustern mit unterschiedlichen Übertragungeigenschaften [z.B. unterschiedlicher Latenz, oder unterschiedlicher Robustheit gegen Interferenzen] auszuwählen.

Bei Ausführungsbeispielen kann die Basisstation ausgebildet sein, um das relative Kanalzugriffsmuster in Abhängigkeit von Anforderungen der zu übertragenen Daten an Übertragungeigenschaften [z.B. Latenz, oder Robustheit gegen Interferenzen] zu erzeugen.

Bei Ausführungsbeispielen kann die Basisstation ausgebildet sein, um als Daten ein Datenpaket, welches in eine Mehrzahl von Sub-Datenpaketen aufgeteilt ist entsprechend des relativen Kanalzugriffsmuster zu übertragen [z.B. zu senden oder zu empfangen], wobei die Mehrzahl von Sub-Datenpaketen jeweils nur einen Teil des Datenpakets aufweisen.

Bei Ausführungsbeispielen kann die Information einen Zustand eines Zahlenfolgengenerators [z.B. eines periodischen Zahlenfolgengenerators oder eines deterministischen Zufallszahlengenerators] zur Erzeugung einer Zahlenfolge beschreiben, wobei die Zahlenfolge das Kanalzugriffsmuster bestimmt.

Bei Ausführungsbeispielen kann die Information eine Zahl [z.B. ein Zeitschlitzindex und/oder ein Bakenindex] einer Zahlenfolge [z.B. einer periodischen Zeitschlitzindexfolge und/oder periodischen Bakenindexfolge] beschreiben, wobei die Zahlenfolge das Kanalzugriffsmuster bestimmt.

Weitere Ausführungsbeispiele schaffen ein Kommunikationssystem mit zumindest einem der oben beschriebenen Endpunkte und einer der oben beschriebenen Basisstationen.

Weitere Ausführungsbeispiele schaffen ein Verfahren zum Betreiben eines Endpunkts eines Kommunikationssystems, wobei das Kommunikationssystem in einem Frequenzband [z.B. einem lizenzfreien und/oder genehmigungsfreien Frequenzband; z.B. ISM Band] drahtlos kommuniziert, welches von einer Mehrzahl von Kommunikationssystemen zur Kommunikation genutzt wird. Das Verfahren umfasst einen Schritt des Empfangens eines Signals [z.B. ein Baken-Signals], wobei das Signal eine Information über ein netzwerkspezifisches Kanalzugriffsmuster aufweist, wobei das netzwerkspezifische Kanalzugriffsmuster eine für die Kommunikation des Kommunikationssystems verwendbare frequenz- und/oder zeitsprungbasierte Belegung von Ressourcen des Frequenzbands angibt [z.B. eine zeitliche Abfolge von für die Kommunikation des Kommunikationssystems verwendbare (z.B. über das Frequenzband verteilte) Frequenzressourcen]. Das Verfahren umfasst ferner einen Schritt des Übertragens von Daten unter Verwendung eines relativen Kanalzugriffsmusters, wobei das relative Kanalzugriffsmuster eine für die Übertragung zu verwendende Belegung von Ressourcen aus der verwendbaren frequenz- und/oder zeitsprungbasierten Belegung von Ressourcen des netzwerkspezifischen Kanalzugriffsmusters angibt [z.B. gibt das relative Kanalzugriffsmuster an, welche der durch das netzwerkspezifische Kanalzugriffsmuster für die Kommunikation des Kommunikationssystems freigegebenen oder verwendbaren Ressourcen tatsächlich für die Übertragung von Daten durch den Endpunkt zu verwenden sind].

Weitere Ausführungsbeispiele schaffen ein Verfahren zum Betreiben einer Basisstation eines Kommunikationssystems, wobei das Kommunikationssystem in einem Frequenzband [z.B. einem lizenzfreien und/oder genehmigungsfreien Frequenzband; z.B. ISM Band] drahtlos kommuniziert, welches von einer Mehrzahl von Kommunikationssystemen zur Kommunikation genutzt wird. Das Verfahren umfasst einen Schritt des Sendens eines Signals [z.B. eines Baken-Signals], wobei das Signal eine Information über ein netzwerkspezifisches Kanalzugriffsmuster aufweist, wobei das netzwerkspezifische Kanalzugriffsmuster eine für die Kommunikation des Kommunikationssystems verwendbare frequenz- und/oder zeitsprungbasierte Belegung von Ressourcen des Frequenzbands angibt [z.B. eine zeitliche Abfolge von für die Kommunikation des Kommunikationssystems verwendbare (z.B. über das Frequenzband verteilte) Frequenzressourcen]. Das Verfahren umfasst ferner einen Schritt des Übertragens von Daten unter Verwendung eines relativen Kanalzugriffsmusters, wobei das relative Kanalzugriffsmuster eine für die Übertragung zu verwendende Belegung von Ressourcen aus der verwendbaren frequenz- und/oder zeitsprungbasierten Belegung von Ressourcen des netzwerkspezifischen Kanalzugriffsmusters angibt [z.B. gibt das relative Kanalzugriffsmuster an, welche der durch das netzwerkspezifische Kanalzugriffsmuster für die Kommunikation des Kommunikationssystems freigegebenen oder verwendbaren Ressourcen tatsächlich für die Übertragung von Daten durch die Basisstation zu verwenden sind].

Weitere Ausführungsbeispiele schaffen einen Controller für einen Teilnehmer eines Kommunikationssystems, wobei das Kommunikationssystem in einem Frequenzband drahtlos kommuniziert, welches von einer Mehrzahl von Kommunikationssystemen zur Kommunikation genutzt wird, wobei der Controller ausgebildet ist, um ein netzwerkspezifisches Kanalzugriffsmuster zu ermitteln, wobei das netzwerkspezifische Kanalzugriffsmuster eine für die Kommunikation des Kommunikationssystems verwendbare frequenz- und/oder zeitsprungbasierte Belegung von Ressourcen des Frequenzbands angibt, wobei der Controller ausgebildet ist, um ein relatives Kanalzugriffsmuster zu ermitteln, wobei das relative Kanalzugriffsmuster eine für eine Übertragung von Daten des Teilnehmers zu verwendende Belegung von Ressourcen aus der verwendbaren frequenz- und/oder zeitsprungbasierten Belegung von Ressourcen des netzwerkspezifischen Kanalzugriffsmusters angibt.

Gemäß der Erfindung ist die für die Übertragung zu verwendende Belegung von Ressourcen des relativen Kanalzugriffsmusters eine Teilmenge der verwendbaren frequenz- und zeitsprungbasierten Belegung von Ressourcen des netzwerkspezifischen Kanalzugriffsmusters sein [z.B. wobei das relative Kanalzugriffsmuster nur eine Teilmenge der Ressourcen des netzwerkspezifischen Kanalzugriffsmusters aufweist].

Bei Ausführungsbeispielen kann sich das relative Kanalzugriffsmuster von einem anderen relativen Kanalzugriffsmuster, basierend auf dem der Teilnehmer andere Daten überträgt [z.B. sendet und/oder empfängt] oder basierend auf dem ein anderer Teilnehmer [z.B. Endpunkt und/oder Basisstation] des Kommunikationssystems Daten überträgt [z.B. sendet und/oder empfängt], unterscheiden, wobei das andere relative Kanalzugriffsmuster eine für die Übertragung zu verwendende Belegung von Ressourcen aus der verwendbaren frequenz- und/oder zeitsprungbasierten Belegung von Ressourcen des netzwerkspezifischen Kanalzugriffsmusters angibt.

Bei Ausführungsbeispielen kann das netzwerkspezifische Kanalzugriffsmuster die für die Kommunikation des Kommunikationssystems verwendbare frequenz- und/oder zeitsprungbasierte Belegung von Ressourcen des Frequenzbands in Frequenzkanälen [z.B. in die das Frequenzband unterteilt ist] und zugeordneten Zeitschlitzen oder in Frequenzkanalindizes und zugordneten Zeitschlitzindizes angeben.

Bei Ausführungsbeispielen kann das netzwerkspezifische Kanalzugriffsmusters in Frequenzrichtung [z.B. pro Zeitschlitz oder Zeitschlitzindex] eine Mehrzahl von benachbarten oder voneinander beabstandeten Ressourcen [z.B. Frequenzkanälen oder Frequenzkanalindizes] des Frequenzbands angeben.

Bei Ausführungsbeispielen kann das relative Kanalzugriffsmuster in Frequenzrichtung höchstens eine Teilmenge [z.B. höchstens eine Ressource, d.h. eine oder keine Ressource] der Mehrzahl von benachbarten oder voneinander beabstandeten Ressourcen des netzwerkspezifischen Kanalzugriffsmusters angeben.

Bei Ausführungsbeispielen kann das relative Kanalzugriffsmuster in Frequenzrichtung eine andere Ressource der Mehrzahl von benachbarten oder voneinander beabstandeten Ressourcen des netzwerkspezifischen Kanalzugriffsmusters angeben als ein anderes relatives Kanalzugriffsmuster, basierend auf dem der Teilnehmer andere Daten überträgt [z.B. sendet und/oder empfängt] oder basierend auf dem ein anderer Teilnehmer [z.B. Endpunkt und/oder Basisstation] des Kommunikationssystems Daten überträgt [z.B. sendet und/oder empfängt], wobei das andere relative Kanalzugriffsmuster eine für die Übertragung zu verwendende Belegung von Ressourcen aus der verwendbaren frequenz- und/oder zeitsprungbasierten Belegung von Ressourcen des netzwerkspezifischen Kanalzugriffsmusters angibt.

Bei Ausführungsbeispielen können zumindest zwei Ressourcen [z.B. Frequenzkanälen oder Frequenzkanalindizes] der Mehrzahl von benachbarten oder voneinander beabstandeten Ressourcen in Frequenzrichtung unterschiedliche Symbolraten und/oder unterschiedliche Anzahlen an Symbolen zugeordnet sein.

Bei Ausführungsbeispielen können die Mehrzahl von benachbarten Ressourcen in Frequenzrichtung einen Block [z.B. Cluster] von zusammenhängenden Ressourcen bilden, wobei unterschiedlichen Teilen des Blocks von zusammenhängenden Ressourcen unterschiedliche Symbolraten und/oder unterschiedliche Anzahlen von Symbolen zugeordnet sind.

Bei Ausführungsbeispielen kann der Controller ausgebildet sein, um das relative Kanalzugriffsmuster in Abhängigkeit von Anforderungen der zu übertragenen Daten an Übertragungseigenschaften [z.B. Latenz, oder Robustheit gegen Interferenzen] aus einem Satz von relativen Kanalzugriffsmustern mit unterschiedlichen Übertragungseigenschaften [z.B. unterschiedlicher Latenz, oder unterschiedlicher Robustheit gegen Interferenzen] auszuwählen.

Bei Ausführungsbeispielen kann der Controller ausgebildet sein, um das relative Kanalzugriffsmuster in Abhängigkeit von Anforderungen der zu übertragenen Daten an Übertragungseigenschaften [z.B. Latenz, oder Robustheit gegen Interferenzen] zu erzeugen.

Bei Ausführungsbeispielen kann der Controller ausgebildet sein, um das Kanalzugriffsmuster in Abhängigkeit von einem Zustand eines Zahlenfolgengenerators zur Erzeugung einer Zahlenfolge oder einer Zahl einer Zahlenfolge pseudozufällig zu ermitteln.

Bei Ausführungsbeispielen kann der Controller ausgebildet sein, um das Kanalzugriffsmuster in Abhängigkeit von dem Zustand des Zahlenfolgengenerators oder einer von dem Zustand des Zahlenfolgengenerators abgeleiteten Zahl der Zahlenfolge zu ermitteln.

Bei Ausführungsbeispielen können basierend auf dem Zustand des Zahlenfolgengenerators auf den Zustand des Zahlenfolgengenerators [z.B. unmittelbar] folgende Zustände des Zahlenfolgengenerators ermittelbar sein, wobei Controller ausgebildet sein kann, um in Abhängigkeit von den folgenden Zuständen des Zahlenfolgengenerators oder davon abgeleiteten folgenden Zahlen der Zahlenfolge das Kanalzugriffsmuster zu ermitteln.

Bei Ausführungsbeispielen kann der Controller ausgebildet, um das Kanalzugriffsmuster in Abhängigkeit von einer individuellen Information des Kommunikationssystems [z.B. einer immanenten Information des Kommunikationssystems, wie z.B. einem netzwerkspezifischen Identifikator] zu ermitteln.

Bei Ausführungsbeispielen kann der Controller ausgebildet sein, um

- den Zustand des Zahlenfolgengenerators, oder eine von dem Zustand des Zahlenfolgengenerators abgeleitete Zahl der Zahlenfolge, oder die Zahl der Zahlenfolge, und
- die individuelle Information des Kommunikationssystems

unter Verwendung einer Abbildungsfunktion auf eine Zeitinformation und eine Frequenzinformation abzubilden, wobei die Zeitinformation und die Frequenzinformation eine Ressource des Kanalzugriffsmusters beschreiben.

Bei Ausführungsbeispielen kann der Controller ausgebildet sein, um in Abhängigkeit von

- dem Zustand des Zahlenfolgengenerators oder einer von dem Zustand des Zahlenfolgengenerators abgeleiteten Zahl der Zahlenfolge, oder der Zahl der Zahlenfolge, und
- einer individuellen Information des Kommunikationssystems

eine Pseudozufallszahl R zu ermitteln, wobei die Pseudozufallszahl R das Kanalzugriffsmuster bestimmt.

Bei Ausführungsbeispielen kann der Controller ausgebildet sein, um basierend auf der Pseudozufallszahl R eine Ressource [z.B. Frequenzkanal und/oder Zeitschlitz, oder Frequenzkanalindex und/oder Zeitschlitzindex] des Kanalzugriffsmusters zu ermitteln.

Weitere Ausführungsbeispiele schaffen ein Verfahren zum Betreiben eines Teilnehmers eines Kommunikationssystems, wobei das Kommunikationssystem in einem Frequenzband drahtlos kommuniziert, welches von einer Mehrzahl von Kommunikationssystemen zur Kommunikation genutzt wird. Das Verfahren umfasst einen Schritt des Ermittelns eines netzwerkspezifischen Kanalzugriffsmusters, wobei das netzwerkspezifische Kanalzugriffsmuster eine für die Kommunikation des Kommunikationssystems verwendbare frequenz- und/oder zeitsprungbasierte Belegung von Ressourcen des Frequenzbands angibt. Das Verfahren umfasst ferner einen Schritt des Ermittelns eines relativen Kanalzugriffsmusters, wobei das relative Kanalzugriffsmuster eine für eine Übertragung von Daten des Teilnehmers zu verwendende Belegung von Ressourcen aus der verwendbaren frequenz- und/oder zeitsprungbasierten Belegung von Ressourcen des netzwerkspezifischen Kanalzugriffsmusters angibt.

Ausführungsbeispiele erhöhen die Leistungsfähigkeit eines digitalen Funkübertragungssystems, indem die wechselseitige Störung zwischen verschiedenen Teilnehmern innerhalb eines Funknetzwerks (Intra-Netzwerk-Interferenz) und zwischen untereinander unkoordinierten Funknetzwerken (Inter-Netzwerk-Interferenz) reduziert werden. Dieser Effekt wird gemäß Ausführungsbeispielen durch die Nutzung von relativen Kanalzugriffsmustern innerhalb eines Netzwerks erzielt, welche hierarchisch unterhalb der netzwerkspezifischen Kanalzugriffsmuster angeordnet sind und in Kombination mit diesen dazu führen, dass es bei einer Paketdatenübertragung nach dem TSMA-Verfahren möglichst wenige Funkressourcen gibt, die gleichzeitig von mehreren Teilnehmern (innerhalb oder außerhalb des eigenen Netzwerks) genutzt werden. Dies führt zu einer Reduzierung der Kollisionen von Teil-Datenpaketen. Der Nutzen der Erfindung steigt mit zunehmender Anzahl von verfügbaren relativen Kanalzugriffsmustern, da somit die Wahrscheinlichkeit, dass mindestens zwei Teilnehmer gleichzeitig dasselbe Kanalzugriffsmuster nutzen (Vollkollision der Teil-Datenpakete), entsprechend sinkt.

Die erhöhte Leistungsfähigkeit wirkt sich wahlweise (bei gegebener Last) in Form einer verringerten Paketfehlerrate aus oder (bei gegebener Paketfehlerrate) in Form einer höheren Auslastung der Netzwerke.

Ausführungsbeispiele der vorliegenden Erfindung werden bezugnehmend auf die beiliegenden Figuren näher beschrieben. Es zeigen:

Fig. 1    ein schematisches Blockschaltbild einer Kommunikationsanordnung mit einem ersten Kommunikationssystem, gemäß einem Ausführungsbeispiel der vorliegenden Erfindung,

Fig. 2    ein schematisches Blockschaltbild einer Kommunikationsanordnung von zwei untereinander unkoordinierten Netzwerken mit je einer Basisstation und jeweils vier zugehörigen Endgeräten, gemäß einem Ausführungsbeispiel der vorliegenden Erfindung,

Fig. 3    in einem Diagramm eine Aufteilung des Frequenzbands in Ressourcen sowie eine durch zwei unterschiedliche Kanalzugriffsmuster definierte frequenz- und zeitsprungbasierte Belegung der Ressourcen des Frequenzbands, gemäß einem Ausführungsbeispiel der vorliegenden Erfindung,

Fig. 4    ein schematisches Blockschaltbild eines Kommunikationssystems mit einer Basisstation und einer Mehrzahl von Endpunkten, gemäß einem Ausführungsbeispiel der vorliegenden Erfindung,

Fig. 5    ein schematisches Blockschaltbild eines Controllers zur Erzeugung eines Kanalzugriffsmusters, gemäß einem Ausführungsbeispiel der vorliegenden Erfindung,

Fig. 6   ein schematisches Blockschaltbild eines Controllers zur Erzeugung eines Kanalzugriffsmusters, gemäß einem weiteren Ausführungsbeispiel der vorliegenden Erfindung,

Fig. 7   ein schematisches Blockschaltbild eines Ausschnitts des Controllers, gemäß einem Ausführungsbeispiel der vorliegenden Erfindung,

Fig. 8   in einem Diagramm ein auf einer Monte-Carlo-Simulation beruhendes Histogramm über die Variable $\Delta f_i$,

Fig. 9   in einem Diagramm eine durch ein Kanalzugriffsmuster definierte frequenz- und zeitsprungbasierte Belegung der Ressourcen des Frequenzbands sowie eine Projektion des Kanalzugriffsmusters auf eine Zeitachse, gemäß einem Ausführungsbeispiel der vorliegenden Erfindung,

Fig. 10   in einem Diagramm auf eine Zeitachse projizierte Ressourcenelemente eines Kanalzugriffsmusters, die in ungenutzten Zeitschlitzen resultiert, gemäß einem Ausführungsbeispiel der vorliegenden Erfindung,

Fig. 11   in einem Diagramm auf eine Zeitachse projizierte Ressourcenelemente eines Kanalzugriffsmusters mit einer Aktivitätsrate A=1/4, gemäß einem Ausführungsbeispiel der vorliegenden Erfindung,

Fig. 12   in einem Diagramm auf eine Zeitachse projizierte Ressourcenelemente eines Kanalzugriffsmusters mit einer Aktivitätsrate A=1/4 und einem vorgegebenen Mindestabstand zwischen aufeinander folgenden Zeitschlitzen des Kanalzugriffsmusters, gemäß einem Ausführungsbeispiel der vorliegenden Erfindung,

Fig. 13   eine zeitliche Aufteilung eines Kanalzugriffsmusters 110 in Bereiche unterschiedlicher Aktivitätsrate A1, A2 und A3, gemäß einem Ausführungsbeispiel der vorliegenden Erfindung,

Fig. 14   in einem Diagramm eine durch ein Kanalzugriffsmuster definierte frequenz- und zeitsprungbasierte Belegung der Ressourcen des Frequenzbands, wobei das Kanalzugriffsmuster zusätzlich bei Bedarf aktivierbare Ressourcen aufweist, gemäß einem Ausführungsbeispiel der vorliegenden Erfindung,

Fig. 15   in einem Diagramm eine durch ein Kanalzugriffsmuster definierte frequenz- und zeitsprungbasierte Belegung der Ressourcen des Frequenzbands, wobei ein regelmäßig stärker gestörter Frequenzbereich des Frequenzbands nicht durch das Kanalzugriffsmuster belegt wird, gemäß einem Ausführungsbeispiel der vorliegenden Erfindung,

Fig. 16   in einem Diagramm eine durch ein Kanalzugriffsmuster definierte frequenz- und zeitsprungbasierte Belegung der Ressourcen des Frequenzbands, wobei Ressourcen im Frequenzbereich gebündelt werden, gemäß einem Ausführungsbeispiel der vorliegenden Erfindung,

Fig. 17   ein schematisches Blockschaltbild eines Kommunikationssystems mit einer Basisstation und zwei Endpunkten, gemäß einem Ausführungsbeispiel der vorliegenden Erfindung,

Fig. 18   in einem Diagramm eine durch ein netzwerkspezifisches Kanalzugriffsmuster angegebene frequenz- und zeitsprungbasierte verwendbare Belegung von Ressourcen des Frequenzbands, eine durch ein relatives Kanalzugriffsmuster angegebene für die Übertragung zu verwendende Belegung von Ressourcen aus der verwendbaren Belegung von Ressourcen des netzwerkspezifischen Kanalzugriffsmusters, sowie Projektionen der Kanalzugriffsmuster auf Zeitachsen vor und nach der Entfernung ungenutzter Ressourcen (z.B. Zeitschlitze), gemäß einem Ausführungsbeispiel,

Fig. 19   in einem Diagramm eine durch ein netzwerkspezifisches Kanalzugriffsmuster angegebene frequenz- und zeitsprungbasierte verwendbare Belegung von im Frequenzbereich gebündelten Ressourcen des Frequenzbands, eine durch ein relatives Kanalzugriffsmuster angegebene für die Übertragung zu verwendende Belegung von Ressourcen aus der verwendbaren Belegung von Ressourcen des netzwerkspezifischen Kanalzugriffsmusters, sowie Projektionen der Kanalzugriffsmuster auf Zeitachsen vor und nach Entfernung ungenutzter Ressourcen (z.B. Zeitschlitze), gemäß einem Ausführungsbeispiel,

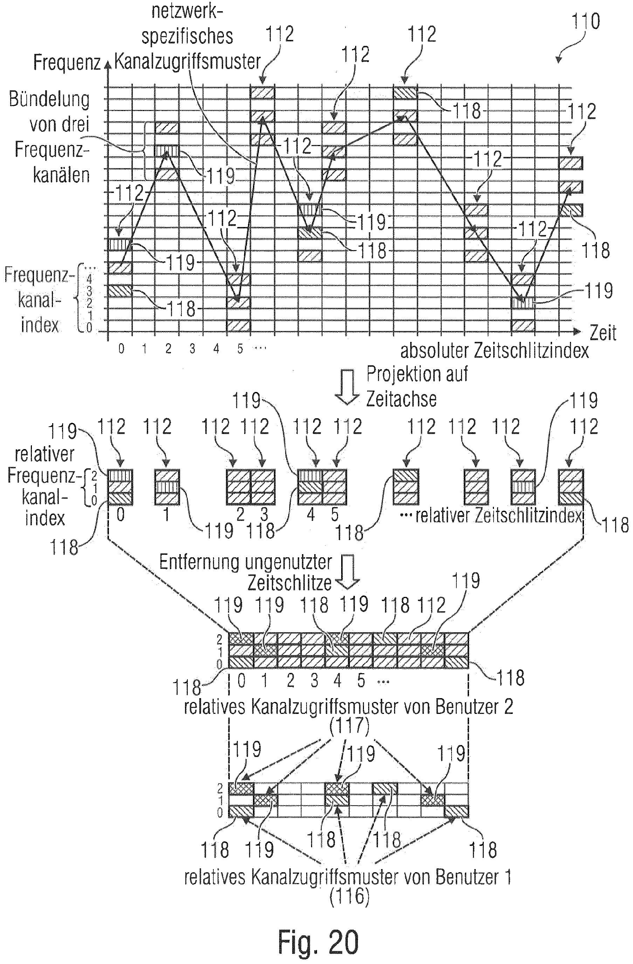

Fig. 20   in einem Diagramm eine durch ein netzwerkspezifisches Kanalzugriffsmuster angegebene frequenz- und zeitsprungbasierte verwendbare Belegung von im Frequenzbereich gebündelten Ressourcen des Frequenzbands, eine durch ein relatives Kanalzugriffsmuster angegebene für die Übertragung zu verwendende Belegung von Ressourcen aus der verwendbaren Belegung von Ressourcen des netzwerkspezifischen Kanalzugriffsmusters, eine durch ein anderes relatives Kanalzugriffsmuster angegebene für die Übertragung zu verwendende Belegung von Ressourcen aus der verwendbaren Belegung von Ressourcen des netzwerkspezifischen Kanalzugriffsmusters, sowie Projektionen der Kanalzugriffsmuster auf Zeitachsen vor und nach Entfernung ungenutzter Ressourcen (z.B. Zeitschlitze), gemäß einem Ausführungsbeispiel,

Fig. 21   in einem Diagramm eine Projektion eines netzwerkspezifischen Kanalzugriffsmusters und eines relativen Kanalzugriffsmusters auf die Zeitachse nach dem Entfernen ungenutzter Ressourcen (z.B. Frequenzkanäle und Zeitschlitze), wobei das relative Kanalzugriffsmuster in Frequenzrichtung für zumindest einen Teil der Zeitsprünge mehrere der in Frequenzrichtung verfügbare Ressourcen belegt, gemäß einem Ausführungsbeispiel,

Fig. 22   in einem Diagramm eine durch ein netzwerkspezifisches Kanalzugriffsmuster angegebene frequenz- und zeitsprungbasierte verwendbare Belegung von im Frequenzbereich zu Blöcken (oder Clustern) gebündelten Ressourcen des Frequenzbands, wobei unterschiedlichen Teilen des Blocks von zusammenhängenden Ressourcen unterschiedliche Symbolraten und/oder unterschiedliche Anzahlen von Symbolen zugeordnet sind, gemäß einem Ausführungsbeispiel,

Fig. 23   in einem Diagramm eine Projektion eines netzwerkspezifischen Kanalzugriffsmusters und eines relativen Kanalzugriffsmusters mit D Ressourcen auf die Zeitachse nach dem Entfernen ungenutzter Ressourcen (Frequenzkanäle und Zeitschlitze), gemäß einem Ausführungsbeispiel,

Fig. 24   in einer Tabelle eine Ressourcenberechnung für verschiedene exemplarische Anwendungsfälle,

Fig. 25   in einem Diagramm Simulationsergebnisse der Paketfehlerrate für verschiedene Kanalzugriffmusterlängen M in Abhängigkeit von der Anzahl gleichzeitig aktiver Endgeräte bei 360 zur Verfügung stehenden Ressourcenelementen,

Fig. 26   in einem Diagramm Simulationsergebnisse der Paketfehlerrate für verschiedene Kanalzugriffmusterlängen M in Abhängigkeit von der Anzahl gleichzeitig aktiver Endgeräte bei 60 zur Verfügung stehenden Ressourcenelementen,

Fig. 27   in einem Diagramm auf eine Zeitachse projizierte Ressourcen eines Kanalzugriffsmusters, wobei Ressourcen des Kanalzugriffsmusters zu Clustern gleicher Länge L (z.B. L=4) gruppiert werden, wobei das relative Kanalzugriffsmuster eine Belegung von einer Ressource pro Cluster angibt, gemäß einem Ausführungsbeispiel,

Fig. 28   ein Flussdiagramm eines Verfahrens zum Betreiben eines Endpunkts eines Kommunikationssystems, wobei das Kommunikationssystem in einem Frequenzband drahtlos kommuniziert, welches von einer Mehrzahl von Kommunikationssystemen zur Kommunikation genutzt wird, gemäß einem Ausführungsbeispiel,

Fig. 29   ein Flussdiagramm eines Verfahrens zum Betreiben einer Basisstation eines Kommunikationssystems, wobei das Kommunikationssystem in einem Frequenzband drahtlos kommuniziert, welches von einer Mehrzahl von Kommunikationssystemen zur Kommunikation genutzt wird, gemäß einem Ausführungsbeispiel, und

Fig. 30   ein Flussdiagramm eines Verfahrens zum Betreiben eines Teilnehmers eines Kommunikationssystems, wobei das Kommunikationssystem in einem Frequenzband drahtlos kommuniziert, welches von einer Mehrzahl von Kommunikationssystemen zur Kommunikation genutzt wird, gemäß einem Ausführungsbeispiel.

In der nachfolgenden Beschreibung der Ausführungsbeispiele der vorliegenden Erfindung werden in den Figuren gleiche oder gleichwirkende Elemente mit dem gleichen Bezugszeichen versehen, so dass deren Beschreibung untereinander austauschbar ist.

Zunächst wird erläutert wie Kommunikationssysteme, die in dem gleichen Frequenzband kommunizieren, welches ggf. von einer Mehrzahl von Kommunikationssystemen zur Kommunikation genutzt wird, durch unterschiedliche Kanalzugriffsmuster voneinander getrennt werden können, bevor im Anschluss daran erläutert wird, wie ein oder mehrere Teilnehmer eines Kommunikationssystems unter Verwendung eines relativen Kanalzugriffsmusters auf eine Auswahl der durch das netzwerkspezifische Kanalzugriffsmusters für das Kommunikationssystem freigegebene Ressourcen zugreifen können.

## A. Netzwerkspezifische Kanalzugriffsmuster

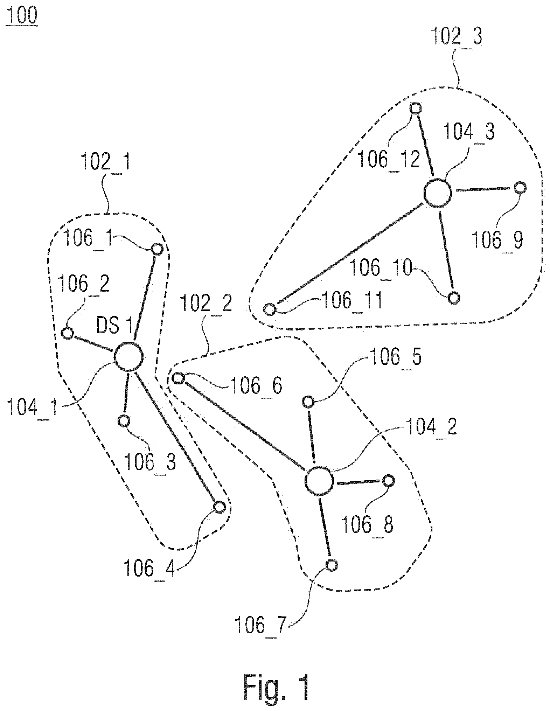

Fig. 1 zeigt ein schematisches Blockschaltbild einer Kommunikationsanordnung 100 mit einem ersten Kommunikationssystem 102_1, gemäß einem Ausführungsbeispiel der vorliegenden Erfindung.

Das erste Kommunikationssystem 102_1 kann eine Basisstation 104_1 und ein oder mehrere Endpunkte 106_1-106_n aufweisen, wobei n eine natürliche Zahl größer gleich eins ist. In dem in Fig. 1 gezeigten Ausführungsbeispiel weist das erste Kommunikationssystem 102_1 zur Veranschaulichung vier Endpunkte 106_1-106_4 auf, das erste Kommunikationssystem 104_1 kann jedoch genauso 1, 10, 100, 1.000, 10.000 oder sogar 100.000 Endpunkte aufweisen.

Das erste Kommunikationssystem 102_1 kann ausgebildet sein, um in einem Frequenzband (z.B. einem lizenzfreien und/oder genehmigungsfreien Frequenzband, z.B. ISM Band), welches von einer Mehrzahl von Kommunikationssystemen zur Kommunikation genutzt wird, drahtlos zu kommunizieren. Das Frequenzband kann dabei eine wesentlich größere (z.B. um zumindest den Faktor zwei größere) Bandbreite aufweisen als Empfangsfilter der Teilnehmer des ersten Kommunikationssystems 102_1.

In Reichweite des ersten Kommunikationssystems 102_1 können - wie dies in Fig. 1 angedeutet ist - beispielsweise ein zweites Kommunikationssystem 102_2 und ein drittes Kommunikationssystem 102_3 sein, wobei diese drei Kommunikationssysteme 102_1, 102_2 und 102_3 das gleiche Frequenzband zur drahtlosen Kommunikation nutzen können.

Bei Ausführungsbeispielen kann das erste Kommunikationssystem 102_1 ausgebildet sein, um basierend auf einem Kanalzugriffsmuster unterschiedliche Frequenzen oder Frequenzkanäle des Frequenzbands (z.B. in die das Frequenzband unterteilt ist) abschnittsweise (z.B. zeitschlitzweise) für die Kommunikation zu nutzen, unabhängig davon ob diese von einem anderen Kommunikationssystem (z.B. dem zweiten Kommunikationssystem 102_2 und/oder dem dritten Kommunikationssystem 102_3) verwendet werden, wobei sich das Kanalzugriffsmuster von einem anderen Kanalzugriffsmuster, basierend auf dem zumindest ein anderes Kommunikationssystem der Mehrzahl von anderen Kommunikationssystemen (z.B. dem zweiten Kommunikationssystem 102_2) auf das Frequenzband zugreift, unterscheidet.

In einer solchen Kommunikationsanordnung 100, wie sie in Fig. 1 gezeigt ist, können die Signale untereinander unkoordinierter Kommunikationssysteme (z.B. das erste Kommunikationssystem 102_1 und das zweite Kommunikationssystem 102_2) somit durch unterschiedliche Kanalzugriffsmuster voneinander getrennt werden, so dass eine wechselseitige Störung durch Interferenzen vermieden oder minimiert wird.

Beispielsweise können Teilnehmer des ersten Kommunikationssystems 102_1, wie z.B. eine Basisstation 104_1 und mehrere Endpunkte 106_1-106_4, basierend auf einem ersten Kanalzugriffsmuster (z.B. welches eine für die Kommunikation des ersten Kommunikationssystems 102_1 verwendbare frequenzsprungbasierte Belegung (z.B. von Ressourcen) des Frequenzbands angibt) drahtlos untereinander kommunizieren, während Teilnehmer des zweiten Kommunikationssystems 102_2, wie z.B. eine Basisstation 104_2 und mehrere Endpunkte 106_5-106_8, basierend auf einem zweiten Kanalzugriffsmuster (z.B. welches eine für die Kommunikation des zweiten Kommunikationssystems 102_2 verwendbare frequenzsprungbasierte Belegung (z.B. von Ressourcen) des Frequenzbands angibt) drahtlos untereinander kommunizieren, wobei das erste Kanalzugriffsmuster und das zweite Kanalzugriffsmuster unterschiedlich sind (z.B. eine Überlappung in den verwendeten Ressourcen von weniger als 20% aufweisen, im Idealfall keine Überlappung aufweisen).

Wie bereits erwähnt, sind die Kommunikationssysteme (z.B. das erste Kommunikationssystem 102_1 und das zweite Kommunikationssystem 102_2) untereinander unkoordiniert.

Dass die Kommunikationssysteme 102_1, 102_2, 102_3 untereinander unkoordiniert sind, bezieht sich hierin darauf, dass die Kommunikationssysteme untereinander (= zwischen den Kommunikationssystemen) keine Information über das jeweils verwendete Kanalzugriffsmuster austauschen, oder mit anderen Worten, dass ein Kommunikationssystem keine Kenntnis über das von einem anderen Kommunikationssystem verwendete Kanalzugriffsmuster hat. Dem ersten Kommunikationssystem 102_1 ist somit nicht bekannt, welches Kanalzugriffsmuster von einem anderen Kommunikationssystem (z.B. dem zweiten Kommunikationssystem 102_2) verwendet wird.

Ausführungsbeispiele beziehen sich somit auf eine Kommunikationsanordnung 100 von untereinander unkoordinierten und ggf. untereinander auch unsynchronisierten Funknetzwerken (oder Kommunikationssystemen) 102_1, 102_2 zur Datenübertragung, die auf ein gemeinsam genutztes Frequenzband zugreifen. Mit anderen Worten, es gibt zumindest zwei Funknetzwerke 102_1, 102_2, welche jeweils unabhängig voneinander arbeiten. Beide Netzwerke 102_1, 102_2 setzen dabei das gleiche Frequenzband ein.

Bei Ausführungsbeispielen wird davon ausgegangen, dass bei jeder einzelnen Datenübertragung jeweils nur ein (kleiner) Teil des Frequenzbandes genutzt wird, wie z.B. ein Frequenzkanal oder ein Teilfrequenzkanal. Beispielsweise kann das Frequenzband in (Teil-)Frequenzkanäle zerlegt werden, wobei ein Frequenzkanal eine echte Teilmenge des gesamten Frequenzbandes ist. Die Gesamtheit aller zur Verfügung stehenden Frequenzkanäle konstituiert dabei das genutzte Frequenzband. Die Übertragung einer Nachricht (Datenpaket) kann z.B. im Telegram-Splitting-Verfahren nacheinander über eine Folge unterschiedlicher Frequenzkanäle erfolgen. In diesem Falle sind Ausführungsbeispiele von besonderem Nutzen.

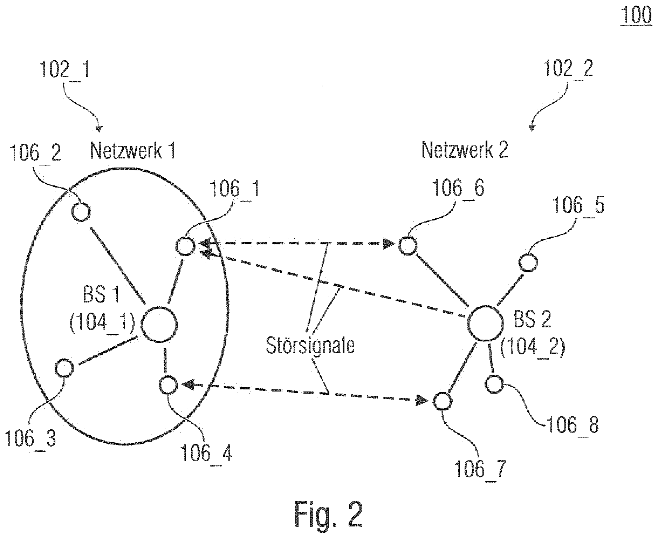

Oftmals sind Netzwerke (oder Kommunikationssysteme) 102_1, 102_2 örtlich so angeordnet, dass Sendesignale von Teilnehmern eines Netzwerks (z.B. des Kommunikationssystems 102_2) auch von Teilnehmern anderer, in der Nähe befindlicher Netzwerke (z.B. des Kommunikationssystems 102_1) empfangbar sind. Mithin treten sie dort als Störsignale (Interferenzen) auf, welche die Leistungsfähigkeit eines Funkübertragungssystems grundsätzlich erheblich beeinträchtigen können, wie dies in Fig. 2 gezeigt ist.

Im Detail zeigt Fig. 2 eine schematische Ansicht von zwei untereinander unkoordinierten Netzwerken 102_1, 102_2 mit je einer Basisstation (BS 1) 104_1, (BS 2) 104_2 und jeweils vier zugehörigen Endgeräten 106_1-106_4, 106_5-106_8. Mit anderen Worten, Fig. 2 zeigt eine beispielhafte Netzwerktopologie für zwei Netzwerke 102_1, 102_2 mit Basisstationen (BS 1) 104_1, (BS 2) 104_2 sowie jeweils vier Endgeräten 106_1-106_4, 106_5-106_8. Die rot gestrichelten Pfeile 108 symbolisieren exemplarisch potentielle Störsignale, d.h. die Funkteilnehmer können die Sendesignale der Teilnehmer aus dem jeweils anderen Netzwerk als Störsignale empfangen. Je nach Gegebenheit kann eine Vielzahl von Netzwerken untereinander in Empfangsreichweite sein, sodass die Teilenehmer (Basisstationen oder Endgeräte) ggf. einer erheblichen Zahl von Störern aus anderen Netzwerken ausgesetzt sein können.

Wird (wie oben erwähnt) das Frequenzband als gemeinsam genutzte Ressource in einzelne, nichtüberlappende Frequenzkanäle unterteilt, so kann die Auswirkung der Störsignale signifikant reduziert werden. In untereinander koordinierten Netzwerken kann jedem Netzwerk ein Teil des Frequenzbands (eine Menge an Frequenzkanälen) exklusiv zugeordnet werden, sodass die wechselseitige Störung (Interferenz) minimiert werden kann. In gänzlich unkoordinierten Netzwerken ist dies nicht möglich.

Bei Ausführungsbeispielen wird daher der Zugriff auf das physikalische Übertragungsmedium (d.h. den physikalischen Funkkanal) in jedem Netzwerk so ausgestaltet, dass zumindest eins aus

    a) der Kanalzugriff, d.h. die Frequenz- und Zeitbelegung des Funkkanals, in einem Netzwerk, möglichst wenig Überlappung in Zeit und Frequenz mit dem Kanalzugriff in anderen Netzwerken desselben Standards hat (hoher Grad an "Orthogonalität"),

    b) der Kanalzugriff innerhalb gewünschter Vorgaben (z.B. mittlere Zugriffshäufigkeit pro Zeit) einen (pseudo-)zufälligen Charakter hat ("Zufälligkeit"),

    c) soweit nach den Vorgaben vermeidbar zwischen Netzwerken keine längeren Sequenzen von (in Zeit und Frequenz) identischem Kanalzugriff auftreten ("Vermeidung systematischer Überlappungen"),

    d) alle Frequenzkanäle innerhalb des Frequenzbandes möglichst gleichmäßig genutzt werden, um eine möglichst hohe Frequenzdiversität sowie ggf. die Einhaltung behördlicher, regulatorischer Vorgaben zu erzielen ("Gleichverteilung der Frequenzkanalnutzung"),

    e) die Information über Frequenz- und Zeitbelegung des Funkkanals z.B. für zu einem Netzwerk neu hinzukommende Teilnehmer mit möglichst geringem Signalisierungsaufwand übermittelt werden kann ("Reduzierung von Signalisierungsinformation"),

erfüllt ist.

Vereinfacht ausgedrückt wird bei Ausführungsbeispielen eine wechselseitige Störung zwischen mehreren Netzwerken (Inter-Netzwerk-Interferenz) dadurch reduziert, dass der Kanalzugriff auf das gemeinsam genutzte Frequenzband in Frequenz und Zeit unterschiedlich, bevorzugt möglichst "orthogonal" und mit (pseudo-)zufälligem Charakter, erfolgt.

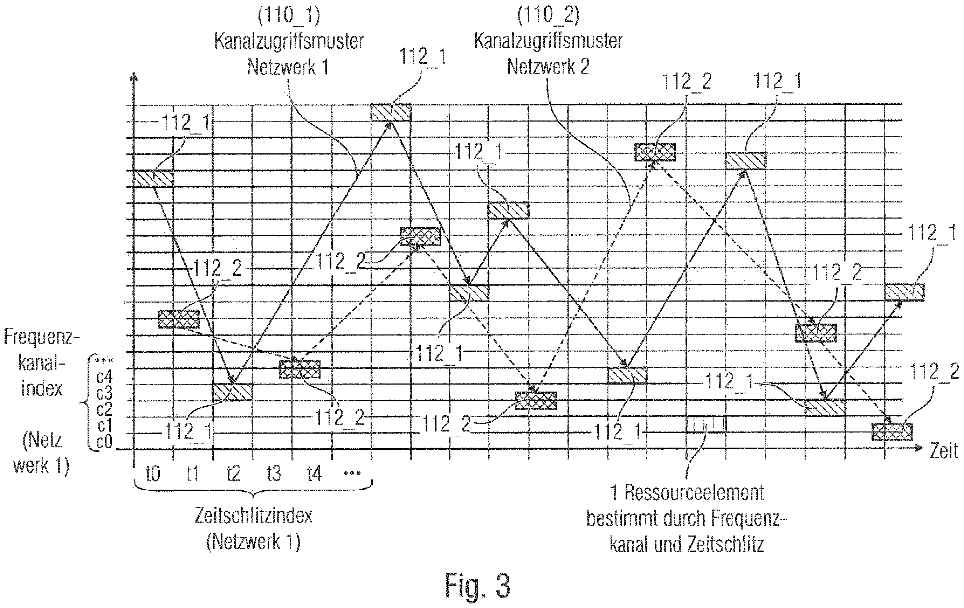

Im Folgenden wird zur Veranschaulichung davon ausgegangen, dass neben der Aufteilung des Frequenzbandes in diskrete Frequenzkanäle (Indizes c0, c1, c2,...) auch eine zeitliche Diskretisierung der Zugriffe innerhalb eines jeden Netzwerks erfolgt. Die zugehörigen zeitlichen Ressourcen werden als Zeitschlitze (engl. Timeslots) bezeichnet und sind in Fig. 3 mit den Indizes t0, t1, t2,... versehen. Beide Anforderungen (Diskretisierung in Frequenz und Zeit) sind jedoch nicht notwendige Voraussetzungen für die Anwendung von Ausführungsbeispielen.

Im Detail zeigt Fig. 3 in einem Diagramm eine Aufteilung des Frequenzbands in Ressourcen sowie eine durch zwei unterschiedliche Kanalzugriffsmuster definierte frequenz- und zeitsprungbasierte Belegung der Ressourcen des Frequenzbands. Dabei beschreibt die Ordinate die Frequenzkanalindizes und die Abszisse die Zeitschlitzindizes.

Beispielsweise können Teilnehmer des ersten Kommunikationssystems 102_1 basierend auf dem ersten Kanalzugriffsmuster 110_1, welches eine für die Kommunikation des ersten Kommunikationssystems 102_1 verwendbare frequenzsprungbasierte Belegung von Ressourcen des Frequenzbands angibt, drahtlos untereinander kommunizieren, während Teilnehmer des zweiten Kommunikationssystems 102_2 basierend auf dem zweiten Kanalzugriffsmuster 110_2, welches eine für die Kommunikation des zweiten Kommunikationssystems 102_2 verwendbare frequenzsprungbasierte Belegung von Ressourcen des Frequenzbands angibt, drahtlos untereinander kommunizieren, wobei das erste Kanalzugriffsmuster und das zweite Kanalzugriffsmuster unterschiedlich sind (z.B. eine Überlappung von weniger als 20% aufweisen, im Idealfall keine Überlappung aufweisen).

Mit anderen Worten, Fig. 3 zeigt in Form eines Gitterrasters eine Übersicht aller grundsätzlich verfügbaren Ressourcen in Frequenz und Zeit (schematische Darstellung der Frequenzkanäle und Zeitschlitze sowie beispielhafte Kanalzugriffsmuster), wobei ein einzelnes Ressourcenelement im ersten Kommunikationsnetzwerk 102_1 durch Zuordnung eines Frequenzkanalindex und eines Zeitschlitzindex bestimmt ist. Beispielhaft sind die durch das erste Kommunikationsnetzwerk 102_1 belegbaren Ressourcen die mit Bezugszeichen 112_1 gekennzeichneten Ressourcenelemente. Die Menge aller innerhalb eines Kommunikationsnetzwerks belegbaren Ressourcen stellt ein Kanalzugriffsmuster 110_1 dar. Für das erste Kommunikationsnetzwerk 102_1 sind dies alle durch Bezugszeichen 112_1 gekennzeichnete Ressourcenelemente, die durch Pfeile verbunden sind. In äquivalenter Weise ist das Kanalzugriffsmuster eines weiteren Kommunikationsnetzwerks (z.B. des zweiten Kommunikationsnetzwerks 102_2) in Fig. 3 beispielhaft eingetragen (alle durch Bezugszeichen 112_2 gekennzeichneten Ressourcenelemente, die durch Pfeile verbunden sind), welches nicht im selben Frequenz- und Zeitraster wie das erste Kommunikationsnetzwerk 102_1 verankert ist (Ressourcenelemente sind in Frequenz und Zeit aus dem Grundraster vom ersten Kommunikationsnetzwerk 102_1 verschoben).

Wichtig ist die Unterscheidung zwischen

- allen grundsätzlich (maximal) verfügbaren Ressourcenelementen, d.h. die Gesamtmenge aller Ressourcenelemente, aus denen das Kanalzugriffsmuster eine geeignete Untermenge auswählt (in Fig. 3 z.B. alle Elemente des Gitternetzes),
- allen in das Kanalzugriffsmuster tatsächlich aufgenommenen Ressourcenelementen (in Fig. 3 alle mit Bezugszeichen 112_1 versehenen Ressourcenelemente) und
- der Menge an Ressourcenelementen (des Kanalzugriffsmusters), die im Netzwerk tatsächlich für eine Datenübertragung belegt werden (es könnte bei geringem Datenaufkommen z.B. nur jedes dritte im Kanalzugriffsmuster vorhandene Ressourcenelement tatsächlich genutzt werden).

Die Gestaltung des Kanalzugriffsmusters bedeutet somit auch eine Festlegung des aktiv nutzbaren Ressourcenvorrats für dieses Kommunikationsnetzwerk (oder Kommunikationssystems).

Im Folgenden werden Ausführungsbeispiele von Basisstationen, Endpunkten und/oder Kommunikationssystemen beschrieben, die zur Kommunikation Kanalzugriffsmuster nutzten, die zumindest eines der oben genannten Kriterien a) bis e) erfüllen. Ferner werden im Folgenden Ausführungsbeispiele der Erzeugung solcher Kanalzugriffsmuster beschrieben.

**A.1. Basisstation, Endpunkt und Kommunikationssystem**

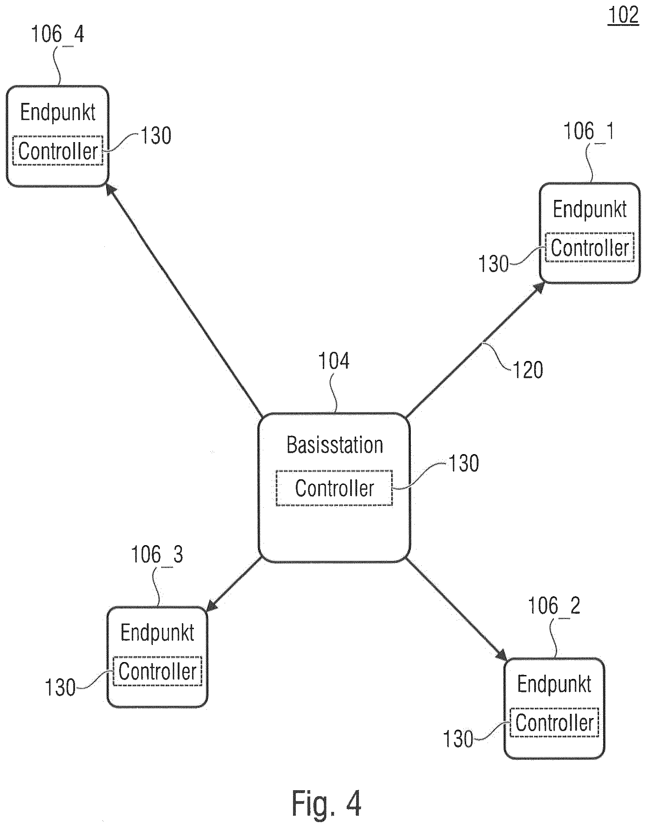

Fig. 4 zeigt ein schematisches Blockschaltbild eines Kommunikationssystems 102 mit einer Basisstation 104 und einer Mehrzahl von Endpunkten 106_1-106_4, gemäß einem Ausführungsbeispiel.

Wie in Fig. 4 gem. einem Ausführungsbeispiel gezeigt ist, kann das Kommunikationssystem 102 eine Basisstation und vier Endpunkte 106_1-106_4 aufweisen. Die vorliegende Erfindung ist jedoch nicht auf solche Ausführungsbeispiele beschränkt, vielmehr kann das Kommunikationssystem ein oder mehrere Endpunkte 106_1-106_n aufweisen, wobei n eine natürliche Zahl größer gleich eins ist. Beispielsweise kann das Kommunikationssystem 1, 10, 100, 1.000, 10.000 oder sogar 100.000 Endpunkte aufweisen.

Die Teilnehmer (= Basisstation 104 und Endpunkte 106_1-106_4) des in Fig. 4 gezeigten Kommunikationssystems nutzen zur gegenseitigen Kommunikation ein Frequenzband (z.B. ein lizenzfreies und/oder genehmigungsfreies Frequenzband, z.B. ISM Band), welches von einer Mehrzahl von Kommunikationssystemen zur Kommunikation genutzt wird, wie dies oben in Bezug auf die Fig. 1 bis 3 erläutert wird. Das Kommunikationssystem 102 arbeitet dabei unkoordiniert in Bezug auf die anderen Kommunikationssysteme, die das gleiche Frequenzband nutzen.

Bei Ausführungsbeispielen kann die Basisstation 104 ausgebildet sein, um ein Signal 120 zu senden, wobei das Signal 120 eine Information über ein Kanalzugriffsmuster 110 aufweist, wobei das Kanalzugriffsmuster eine für die Kommunikation des Kommunikationssystems 102 verwendbare frequenz- und/oder zeitsprungbasierte Belegung (z.B. von Ressourcen) des Frequenzbands angibt (z.B. eine zeitliche Abfolge von für die Kommunikation des Kommunikationssystems verwendbaren (z.B. über das Frequenzband verteilten) Frequenzressourcen), wobei die Information einen Zustand eines Zahlenfolgengenerators zur Erzeugung einer Zahlenfolge beschreibt, wobei die Zahlenfolge das Kanalzugriffsmuster bestimmt.

Beispielsweise kann der Zustand des Zahlenfolgengenerators ein innerer Zustand des Zahlenfolgengenerators sein, wobei von dem inneren Zustand des Zahlenfolgengenerators eine Zahl der Zahlenfolge abgeleitet werden kann. Basierend auf dem inneren Zustand des Zahlenfolgengenerators können auch auf den inneren Zustand des Zahlenfolgengenerators folgende innere Zustände des Zahlenfolgengenerators ermittelt werden, von denen auch folgende Zahlen der Zahlenfolge abgeleitet werden können. Beispielsweise kann die Zahl der Zahlenfolge direkt von dem inneren Zustand des Zahlenfolgengenerators abgeleitet werden (z.B. Zustand = Zahl), z.B. bei der Implementierung des Zahlenfolgengenerators als Zähler, oder aber über eine Abbildungsfunktion, z.B. bei der Implementierung des Zahlenfolgengenerators als Schieberegister, ggf. mit Rückkoppelung.

Bei Ausführungsbeispielen kann zumindest einer der Endpunkte 106_1-106_4 ausgebildet sein, um das Signal 120 mit der Information über das Kanalzugriffsmuster 110 zu empfangen, und um das Kanalzugriffsmuster 110 basierend auf der Information über das Kanalzugriffsmuster zu ermitteln, wobei die Information einen Zustand eines Zahlenfolgengenerators zur Erzeugung einer Zahlenfolge beschreibt, wobei die Zahlenfolge das Kanalzugriffsmuster bestimmt.

Beispielsweise kann die Basisstation 104 und/oder zumindest einer der Endpunkte 106_1-106_4 ausgebildet sein, um das Kanalzugriffsmuster in Abhängigkeit von dem Zustand des Zahlenfolgengenerators pseudozufällig zu ermitteln, wie z.B. unter Verwendung einer pseudozufälligen Abbildungsfunktion.

Ferner kann die Basisstation 104 und/oder zumindest einer der Endpunkte 106_1-106_4 ausgebildet sein, um das Kanalzugriffsmuster in Abhängigkeit von einer individuellen Information des Kommunikationssystems (z.B. einer immanenten Information des Kommunikationssystems, wie z.B. einem netzwerkspezifischen Identifikator) pseudozufällig zu ermitteln.

Im Folgenden werden Ausführungsbeispiele der Erzeugung von Kanalzugriffsmustern beschrieben. Die Kanalzugriffsmuster werden hierbei durch die Basisstation 104 erzeugt und können basierend auf dem Signal mit der Information 120 über das Kanalzugriffsmuster von zumindest einem (oder allen) der in Fig. 4 gezeigten Endpunkte 106_1-106_4 ermittelt werden, beispielsweise durch jeweils einen Controller (Steuergerät, Steuereinheit) 130, der in die Basisstation 104 und/oder in die Endpunkte 106_1-106_4 implementiert ist. Die Vorgabe der Kanalzugriffsmuster erfolgt hierbei (ausschließlich) durch die Basisstation 104, während die Endpunkte 106_1-106_4 das Kanalzugriffsmuster nur "kennen", also nach derselben Methode generieren wie die Basisstation 104.

Dabei wird in der folgenden Beschreibung von einem Funkübertragungssystem (oder einer Kommunikationsanordnung) mit mehreren unabhängigen, untereinander unkoordinierten Kommunikationsnetzwerken ausgegangen, deren Teilnehmer wechselseitig in Empfangsreichweite sind, sodass Sendesignale von Teilnehmern eines Netzwerks potentiell als Störsignale für Teilnehmer anderer Netzwerke in Betracht kommen. Für die Anwendung von Ausführungsbeispielen ist es nicht nötig, dass Information (Daten oder Signalisierungsinformation) zwischen unterschiedlichen Netzwerken ausgetauscht wird. Ebenso ist es unerheblich, ob die Netzwerke untereinander zeitlich und/oder in der Frequenz synchronisiert sind.

Ferner wird vorausgesetzt, dass es innerhalb jedes Netzwerks eine koordinierende Instanz gibt (im Folgenden "Basisstation" genannt), welche den nicht-koordinierenden Teilnehmern des Netzwerks (im Folgenden "Endgeräte" oder "Endpunkte" genannt) Information über das innerhalb des Netzwerks angewandte Kanalzugriffsmuster übermitteln kann. Diese Information kann z.B. über regelmäßig ausgesendete Baken-Signale (engl. Beacon) übertragen werden, jedoch auch in unregelmäßigen Abständen übertragen werden oder ggf. dediziert an einzelne Endgeräte oder Gruppen von Endgeräten.

Des Weiteren wird davon ausgegangen, dass das gesamte, zur Übertragung zur Verfügung stehende Frequenzband in eine Vielzahl von einzelnen Frequenzkanälen unterteilt ist, auf die jeweils einzeln oder in Teilmengen (Gruppen von Frequenzkanälen) zugegriffen werden kann.

Ohne Einschränkung der Allgemeinheit und zur besseren Veranschaulichung wird in den folgenden Ausführungen davon ausgegangen, dass innerhalb jedes Netzwerks ein festes, diskretes Zeitraster existiert, zu welchem Kanalzugriffe erfolgen können (siehe auch Fig. 3). Ein Kanalzugriff in Form von Aussendung eines Signals kann sowohl durch Endgeräte als auch durch die Basisstation erfolgen. Ein Kanalzugriff muss jedoch in einer im Kanalzugriffsmuster dafür vorgesehenen Ressource nicht notwendigerweise erfolgen, falls z.B. keine Daten oder sonstigen Informationen zur Übertragung anstehen.

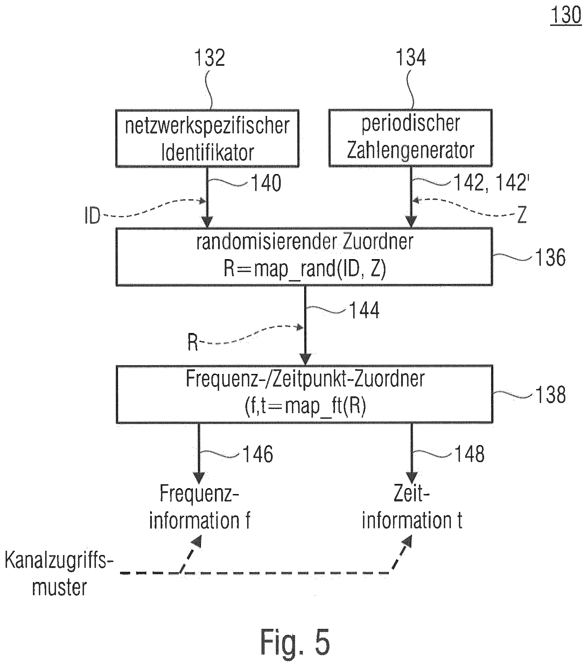

Fig. 5 zeigt ein schematisches Blockschaltbild eines Controllers 130 zur Erzeugung eines Kanalzugriffsmusters, gemäß einem Ausführungsbeispiel der vorliegenden Erfindung.

Wie in Fig. 5 zu erkennen ist, kann der Controller 130 einen Speicher 132, einen periodischen Zahlengenerator 134 zur Erzeugung einer periodischen Zahlenfolge Z, einen randomisierenden Zuordner 136 und einen Frequenz-/Zeitpunkt-Zuordner 138 aufweisen.

Der Speicher (z.B. ein Register) 132 kann ausgebildet sein, um einen netzwerkspezifischen Identifikator ID 140, z.B. eine (individuelle) Bitsequenz, die sich nicht ändert, vorzuhalten. Der periodische Zahlengenerator 134 kann ausgebildet sein, um seinen Zustand 142 oder eine von seinem Zustand abgeleitete Zahl 142' der periodischen Zahlenfolge bereitzustellen. Der randomisierende Zuordner 136 kann ausgebildet sein, um in Abhängigkeit von dem Zustand 142 des Zahlenfolgengenerators 134 oder der davon abgleiten Zahl 142' der periodischen Zahlenfolge und des netzwerkspezifischen Identifikators ID 140 eine Pseudozufallszahl R 144 zu ermitteln. Der Frequenz-/Zeitpunkt-Zuordner 138 kann ausgebildet sein, um basierend auf der Pseudozufallszahl R 144 eine Frequenzinformation f 146 und eine Zeitinformation t 148 zu ermitteln. Beispielsweise können die Frequenzinformation f 146 und die Zeitinformation t 148 einen Frequenzkanal und einen Zeitschlitz (oder einen Frequenzkanalindex und einen Zeitschlitzindex) und somit eine Ressource des Kanalzugriffsmusters beschreiben bzw. definieren.

Der Controller 130 kann beispielsweise - wie dies in Fig. 4 angedeutet ist - in der Basisstation 104 und/oder in dem einen oder den mehreren Endpunkt(en) 106_1-106-4 implementiert sein, um das von dem Kommunikationssystem 102 verwendete individuelle (oder Netzwerkindividuelle) Kanalzugriffsmuster zu berechnen.

Mit anderen Worten, Fig. 5 zeigt die Grundstruktur zur Erzeugung von Kanalzugriffsmustern, gemäß einem Ausführungsbeispiel der vorliegenden Erfindung.

Die Erzeugung der Kanalzugriffsmuster erfolgt iterativ, d.h. die in Fig. 5 dargestellten Blöcke werden einmal pro Erzeugung einer einzelnen Kanalzugriffsinformation aufgerufen. Durch N-maligen Aufruf wird somit ein Kanalzugriffsmuster mit N Kanalzugriffen generiert.

Die Funktion der Teilblöcke wird im Folgenden im Detail erläutert. Es wird der Begriff "Zahl" verwendet. Dabei handelt es sich allgemein um diskrete Information, welche in unterschiedlicher Darstellung (z.B. in dezimaler Form, als binäre Sequenz o.Ä.) vorliegen kann.

Netzwerkspezifischer Identifikator "ID"

Beim netzwerkspezifischen Identifikator handelt es sich um eine feste Zahl, die von einer äußeren Instanz (z.B. bei Konfiguration des Netzwerks bzw. der koordinierenden Basisstation) festgelegt wird. Idealerweise ist sie von Netzwerk zu Netzwerk unterschiedlich. Beispielsweise könnte es sich um eine eindeutige, hinreichend lange Basisstations-ID, eindeutige Netzwerk-ID oder jeweils einen hinreichend langen Hash darüber handeln. Diese Größe ist fest und variiert als einzige in der gezeigten Anordnung nicht von Aufruf zu Aufruf.

Periodischer Zahlengenerator "Z"

Der periodische Zahlengenerator 134 generiert eine sich periodisch mit der Periodizität P wiederholende Folge von Zahlen Z. Er besitzt einen inneren Zustand $S_n$, aus dem sich die nächste erzeugte Zahl und der nächste innere Zustand $S_{n+1}$ eindeutig bestimmen lassen. Das entscheidende Merkmal ist, dass sich bereits aus einem einzigen inneren Zustand (welcher zu einem beliebigen Zeitschritt vorliegt) die gesamte periodische Folge für jeden beliebigen Zeitschritt ableiten lässt. Ein einfaches Ausführungsbeispiel ist z.B. ein Modulo-P-Zähler, der periodisch die Zahlenfolge 0,1,2...(P-1) liefert. Ein weiteres Ausführungsbeispiel ist ein deterministischer Zufallszahlengenerator (engl. pseudo random number generator), z.B. implementiert in Form eine rückgekoppelten Schieberegisters (LFSR). Ein drittes Ausführungsbeispiel ist ein endlicher Körper (engl. Galois field) mit P Elementen.

Randomisierender Zuordner

Der randomisierende Zuordner 136 generiert aus den beiden Eingangszahlen ID und Z eine Ausgangszahl R, d.h. R=map_rand(ID, Z), wobei *map_rand* die Zuordnungsfunktion darstellt. Die Zuordnung hat dabei möglichst zufälligen Charakter, d.h. eine mathematisch korrelierte Eingangssequenz (bestehend aus ID, Z) erzeugt eine möglichst in sich unkorrelierte Ausgangssequenz R.

Ausführungsbeispiele für eine randomisierende Zuordnung sind

- Verkettung der beiden Eingangszahlen
- die Anwendung einer zyklischen Redundanzprüfung (engl. cyclic redundancy check, kurz CRC) auf die Eingangsgrößen ID, Z, welche zur Zahl R führt und randomisierenden Charakter hat,
- die Anwendung einer Hash-Funktion
- die Anwendung einer Verschlüsselung, z.B. AES-Verschlüsselung, wobei der zugehörige Schlüssel dabei allen autorisierten Teilnehmern bekannt ist und was somit auch ein Verfahren zur Einbringung von "transport layer security" (kurz TLS) darstellt.

Die Folge der Elemente der Zahl R ist nach obigen Maßgaben pseudozufälliger Natur. Sie sollte von Netzwerk zu Netzwerk unterschiedlich sein, um Überlappungen der Kanalzugriffsmuster möglichst zu vermeiden.

Frequenz-/Zeitpunkt-Zuordner

Der Frequenz-/Zeitpunkt-Zuordner 138 ordnet jeder Eingangszahl R mittels einer Abbildung ein 2-Tupel von Frequenzinformation (Funkfrequenz f) und Zeitinformation (Zugriffszeitpunkt t) zu, d.h. (f,t)=map_ft(R), wobei "*map_ft*" die Zuordnungsfunktion darstellt. Während die Abfolge der Frequenzen grundsätzlich beliebig innerhalb des vorgegebenen Frequenzbands sein kann, müssen die Zeitpunkte dabei von Aufruf zu Aufruf in monoton ansteigender Form vorliegen, da "Rücksprünge" in der Zeit nicht zulässig sind.

Von besonderer Bedeutung ist als Ausführungsbeispiel der Fall, dass der Kanalzugriff in Frequenz- und Zeitrichtung (wie weiter oben beschrieben) diskretisiert ist, d.h. in Form von diskreten Frequenzkanälen und diskreten Zeitschlitzen erfolgt. In diesem Fall ordnet der Frequenz-/Zeitpunkt-Zuordner jeder Eingangszahl R ein 2-Tupel von Frequenzkanalindex fi und Zeitschlitzindex ti zu, d.h. (fi,ti)=map_ft(R). Die Zeitschlitze werden dabei in zeitlich aufsteigender Reihenfolge indiziert, da "Rücksprünge" in der Zeit nicht zulässig sind. Weitere Ausführungen zur Belegung der Zeitschlitze finden sich in Abschnitt 3.

Die Abfolge der 2-Tupel (f,t) bzw. (fi, ti) basiert auf der Folge der Elemente von R und definiert das Kanalzugriffsmuster.

Die genaue Gestaltung des Frequenz-/Zeitpunkt-Zuordners bestimmt gemeinsam mit der Wahrscheinlichkeitsfunktion der Zahl R die Zugriffsstatistik auf den Kanal.

Zustandssignalisierung und Prädizierbarkeit

Die in Fig. 5 gezeigte Anordnung generiert ein Kanalzugriffsmuster, welches sowohl von einem zeitlich unveränderlichen, netzwerkspezifischen Identifikator als auch von einem zustandsabhängigen (und damit zeitlich veränderlichen) periodischen Zahlengenerator (Periodizität P) abhängt. Über den netzwerkspezifischen Identifikator kann sichergestellt werden, dass Netzwerke mit unterschiedlichen netzwerkspezifischen Identifikatoren stets unterschiedliche Sequenzen von R generieren, selbst wenn ihr Zahlengenerator sich im gleichen Zustand befinden sollte. Damit kann sichergestellt werden, dass unterschiedliche Netzwerke keine identischen Kanalzugriffsmuster erzeugen und somit im ungünstigsten Fall in eine "Dauerkollision" der Kanalzugriffe geraten.

Ein Endgerät benötigt zur Ermittlung des im Netzwerk angewandten Kanalzugriffsmusters sowohl den netzwerkspezifischen Identifikator als auch den jeweiligen Zustand des periodischen Zahlengenerators.

Den *netzwerkspezifischen Identifikator* erhält das Endgerät bereits bei der Erstanmeldung beim Netzwerk. Dieser wird vorteilhafterweise mittels regelmäßig von der Basisstation ausgesandter Baken-Signale (beacon) übermittelt und allen autorisierten Endgeräten zugänglich gemacht. Alternativ kann der netzwerkspezifische Identifikator dem Endgerät auch im Zuge der Erstkonfiguration (mit Auslieferung) bekannt gemacht werden, somit also vor der ersten Inbetriebnahme im Netzwerk.

Der Zustand des *periodischen Zahlengenerators* kann entweder in einem regelmäßigen Baken-Signal und/oder in eigenen, dedizierten Zustands-Signalisierungs-Ressourcen übermittelt werden. Ein Zahlengenerator mit Periodizität P hat P interne Zustände, sodass zur Übermittlung des jeweiligen Zustands $\lceil \log_2(P) \rceil$ Bits übertragen werden müssen. Die pro Zustandssignalisierung übertragene Informationsmenge (Anzahl der Bits) kann somit durch die gewählte Periodizität des Zahlengenerators nach Anforderung gesteuert werden.

Die für die Zustandssignalisierung übertragene Information kann in Form mehrerer Teilinformationen übertragen werden, wobei die Übertragung in unterschiedlicher Häufigkeit erfolgen kann. So könnten als Ausführungsbeispiel für den Fall, dass es sich bei dem periodischen Zahlengenerator (Z) um einen Zähler handelt, die höherwertigen Bits (engl. most significant bits (MSBs)) des Zählers getrennt von den niederwertigen Bits (engl. least significant bits (LSBs)) übertragen werden und auch mit einer anderen Häufigkeit (z.B. seltener). Auch wenn es sich nicht um einen Zähler handelt, könnte die gesamte Zustandsinformation in Form mehrerer Teil-Zustandsinformationen mit unterschiedlicher Übertragungshäufigkeit übertragen werden.

Durch die Periodizität des Zahlengenerators kann ein Endgerät, welchem der Zustand des Zahlengenerators zu mindestens einem Zeitpunkt bekannt ist, das gesamte Kanalzugriffsmuster für beliebige Zeitpunkte/Zeitschlitze in der Zukunft bestimmen. Damit ist es dem Endgerät möglich, in einem energiesparenden Ruhezustand z.B. die Sende-/Empfangseinheit zu deaktivieren und bei der nachfolgenden Aktivierung der Sende-/Empfangseinheit den dann gültigen Abschnitt des Kanalzugriffsmusters aus dem letzten zuvor bekannten Zustand zu prädizieren. Eine Aussendung der Zustandsinformation durch die Basisstation kann somit in vergleichsweise großen zeitlichen Abständen erfolgen.

Zusammenfassend hat das hierin beschriebene Verfahren den Vorteil, dass durch die Kombination eines netzwerkspezifischen Identifikators und eines periodischen Zahlengenerators ein vergleichsweise großer Zustandsraum für die (Pseudozufalls-)Zahl R aufgespannt wird. Damit wird verhindert, dass die Kanalzugriffsmuster von Netzwerken mit unterschiedlichen netzwerkspezifischen Identifikatoren identisch sind, womit eine systematische Kollision der Kanalzugriffe verschiedener, untereinander unkoordinierter Netzwerk minimiert werden kann. Dies erweist sich beim Telegram-Splitting-Multiple-Access (TSMA) Verfahren als besonders vorteilhaft.

Vorteilhafte Merkmale des Frequenz-Zeit-Zuordners werden in den folgenden Abschnitten detaillierter ausgeführt.

Weiteres Ausführungsbeispiel des Controllers

Gemäß Fig. 5 und obiger Beschreibung wird ein periodischer Zahlengenerator 134 benötigt. Dieser wird im folgenden Ausführungsbeispiel wie folgt ersetzt.

Reale Funknetzwerke werden oftmals mit einem Baken-Signal betrieben, welches regelmäßig ausgesendet wird. Jede Baken-Aussendung kann dabei mit einem Zähler versehen werden, welcher einem Baken-Sequenzindex entspricht. Dieser Baken-Sequenzindex wird hier als "Bakenindex" bezeichnet.

Ebenso ist es gebräuchlich, dass in einem zeitschlitzbasierten System die Zeitschlitze mit einem (in Zeitrichtung aufsteigenden) Zeitschlitzindex-Zähler versehen werden (siehe auch Fig. 3). Dieser wird hier als "Zeitschlitzindex" bezeichnet. Der Bakenindex wird in gewissen, im System vorgegebenen Abständen wieder auf null zurückgesetzt, sodass er eine Periodizität aufweist. Entsprechendes gilt für den Zeitschlitzindex (der z.B. nach einer Baken-Aussendung wieder bei null beginnt).

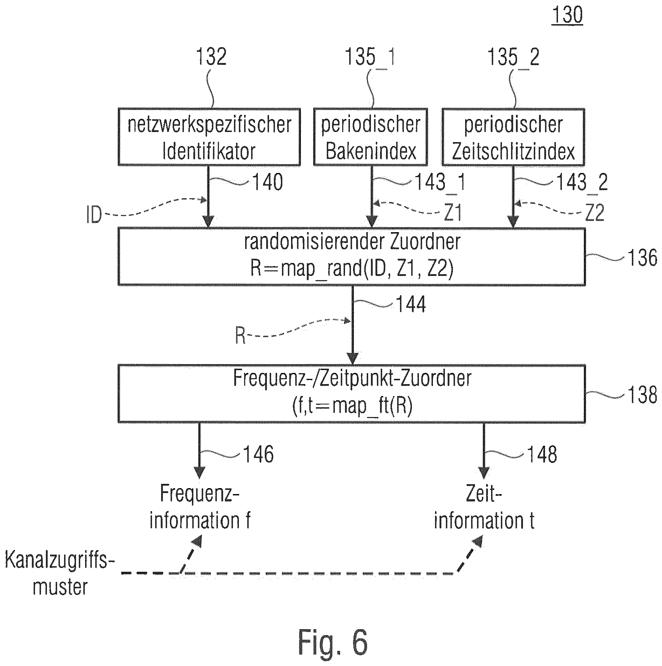

Fig. 6 zeigt ein schematisches Blockschaltbild eines Controllers 130 zur Erzeugung eines Kanalzugriffsmusters, gemäß einem Ausführungsbeispiel der vorliegenden Erfindung.

Der Controller 130 kann einen Speicher 132, einen ersten Zwischenspeicher 135_1, einen zweiten Zwischenspeicher 135_2, einen randomisierenden Zuordner 136 und einen Frequenz-/Zeitpunkt-Zuordner 138 aufweisen.

Der Speicher (z.B. ein Register) 132 kann ausgebildet sein, um einen netzwerkspezifischen Identifikator ID 140, z.B. eine (individuelle) Bitsequenz, die sich nicht ändert, vorzuhalten. Der erste Zwischenspeicher (z.B. ein Register) 135_1 kann ausgebildet sein, um einen periodischen Bakenindex Z1 143_1 vorzuhalten. Der zweite Zwischenspeicher (z.B. ein Register) 135_2 kann ausgebildet sein, um einen periodischen Zeitschlitzindex Z2 143_2 vorzuhalten. Der randomisierende Zuordner 136 kann ausgebildet sein, um in Abhängigkeit von dem periodischen Bakenindex Z1 143_1, dem periodischen Zeitschlitzindex Z2 143_2 und dem netzwerkspezifischen Identifikator ID 140 eine Pseudozufallszahl R 144 zu ermitteln. Der Frequenz-/Zeitpunkt-Zuordner 138 kann ausgebildet sein, um basierend auf der Pseudozufallszahl R 144 eine Frequenzinformation f 146 und eine Zeitinformation t 148 zu ermitteln. Beispielsweise können die Frequenzinformation f 146 und die Zeitinformation t 148 einen Frequenzkanal und einen Zeitschlitz (oder einen Frequenzkanalindex und einen Zeitschlitzindex) und somit eine Ressource des Kanalzugriffsmusters beschreiben bzw. definieren.

Mit anderen Worten, Fig. 6 zeigt eine modifizierte Grundstruktur zur Erzeugung von Kanalzugriffsmustern mit Bakenindex und Zeitschlitzindex. In Fig. 6 ist ein Ausführungsbeispiel dargestellt, in welchem gegenüber dem in Fig. 5 gezeigtem Ausführungsbeispiel der periodische Zahlengenerator (Ausgang Z) 134 durch die beiden Blöcke "periodischer Bakenindex" (Ausgang Z1) 135_1 und "periodischer Zeitschlitzindex" (Ausgang Z2) 135_2 ersetzt wurde. Alle weiteren Blöcke sind funktional unverändert (der Randomisierende Zuordner hat nun drei Eingänge).

Die in Fig. 5 und 6 gezeigten Controller 130 ermöglichen die Erzeugung von Netzwerk-individuellen Kanalzugriffsmustern, wobei diese zumindest eine aus folgenden Eigenschaften aufweisen:

- Die Kanalzugriffsmuster enthalten untereinander möglichst wenige überlappende Teilsequenzen,
- es gibt (z.B. in Bereichen mit hoher Netzwerkdichte) einen großen Vorrat von Kanalzugriffsmustern,
- die Kanalzugriffsmuster sind so gestaltet, dass sie eine sehr hohe Periodizität aufweisen,
- die Kanalzugriffsmuster führen (bei Vorliegen entsprechender Anforderungen) zu einer im Mittel gleichmäßigen Nutzung der zur Verfügung stehenden Frequenzkanäle,
- die Signalisierung des angewandten Musters erfolgt durch die koordinierende Instanz mit möglichst wenig Signalisierungsinformation, und
- Endgeräte können, bereits bei einmaligem, vollständigem Erhalt der Signalisierung des Kanalzugriffsmusters den Inhalt des Kanalzugriffsmusters zu beliebigen, zukünftigen Zeitpunkten bestimmen (dies ermöglicht Endgeräten, z.B. aus Energiespargründen längere Empfangspausen einzulegen und bei Wiedereinschalten dennoch das dann jeweils gültige Kanalzugriffsmuster auf der Basis von vor der Empfangspause erhaltener Information zu ermitteln).

**A.2. Steuerung der Kanalzugriffe im Frequenzbereich**

Zur Vereinfachung der folgenden Darstellung wird angenommen, dass der Frequenzbereich (oder das Frequenzband) in diskrete Frequenzkanäle unterteilt ist und dass eine Übertragung nach dem TSMA-Verfahren erfolgt.

Mobilfunkkanäle weisen i.d.R. eine über der Frequenz variierende Signaldämpfung auf. Wird gemäß dem TSMA-Verfahren ein Datenpaket in Form mehrerer Teil-Datenpakete übertragen und ist der zugrundeliegende Mobilfunkkanal im Sender nicht bekannt, so kann die Fehlerrate der Übertragung im Mittel reduziert oder sogar minimiert werden, indem die einzelnen Teil-Datenpakete möglichst über den gesamten Frequenzbereich verteilt übertragen werden (Ausnutzung der Frequenzdiversität).

Aus diesem Grund kann es (insbesondere wenn ein Datenpaket aus nur wenigen Teil-Datenpaketen besteht) vorteilhaft sein, wenn gewährleistet ist, dass die Frequenzkanäle auf denen die Teil-Datenpakete übertragen werden, relativ zueinander einen gewissen (Mindest-)Abstand im Frequenzbereich haben.

Da das Kanalzugriffsmuster innerhalb eines Netzwerks in maßgeblicher Weise das Frequenzsprungverhalten bei TSMA bestimmt, kann mit einem geeigneten Verfahren sichergestellt werden, dass zwischen zwei aufeinanderfolgenden Frequenzkanälen des Kanalzugriffsmusters ein Mindestabstand besteht.

Bei Ausführungsbeispielen kann der Frequenz-/Zeitpunkt-Zuordner 138 (siehe Fig. 5 oder 6) daher ausgebildet sein, um basierend auf der Pseudozufallszahl R eine Frequenzinformation f und eine Zeitinformation t zu ermitteln, wobei die Frequenzinformation f einen Abstand zwischen zwei aufeinanderfolgenden Frequenzkanälen angibt.

Der Frequenz-/Zeitpunkt-Zuordner 138 in Fig. 5 oder 6, der auf Basis der pseudozufälligen Zahl R absolute Frequenzkanäle von Zugriff zu Zugriff unabhängig festlegt, kann also alternativ auch Abstände zwischen zwei aufeinanderfolgenden Frequenzkanälen bestimmen.

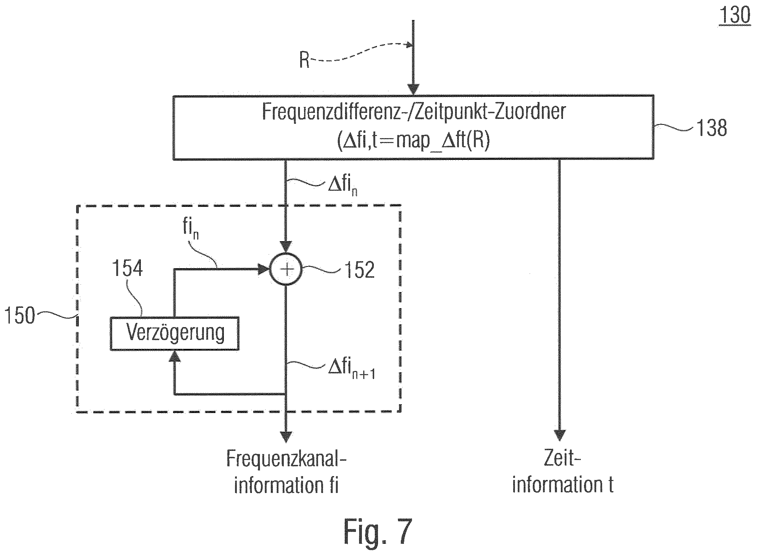

Fig. 7 zeigt ein schematisches Blockschaltbild eines Ausschnitts des Controllers 130, gemäß einem Ausführungsbeispiel. Wie in Fig. 7 zu erkennen ist, kann der Frequenz-/Zeitpunkt-Zuordner 138 (siehe Fig. 5 oder 6) ausgebildet sein, um basierend auf der Pseudozufallszahl R eine Frequenzinformation und eine Zeitinformation zu ermitteln, wobei die Frequenzinformation einen Abstand $\Delta fi_n$ zwischen zwei aufeinanderfolgenden Frequenzkanälen angibt.

Wie in Fig. 7 ferner zu erkennen ist, kann der Controller 130 einen Abbilder 150 aufweisen, der ausgebildet sein kann, um den Abstand $\Delta fi_n$ zwischen zwei aufeinanderfolgenden Frequenzkanälen auf einen Frequenzkanalindex fi abzubilden, beispielsweise durch einen Kombinierer (z.B. Addierer) 152 und ein Verzögerungsglied 154.

Mit anderen Worten, Fig. 7 zeigt die Erzeugung von Frequenzsprüngen mit Mindest- und oder Höchstsprungweite. In Fig. 7 ist dabei veranschaulicht, dass der Frequenz-/Zeitpunkt-Zuordner 138 von Fig. 5 oder 6 nunmehr durch einen Frequenzdifferenz-/Zeitpunkt-Zuordner 138 ersetzt ist, welcher an seinem unmittelbaren Ausgang keine absoluten Frequenzkanalindizes mehr liefert, sondern Frequenzkanalindex-Differenzen.

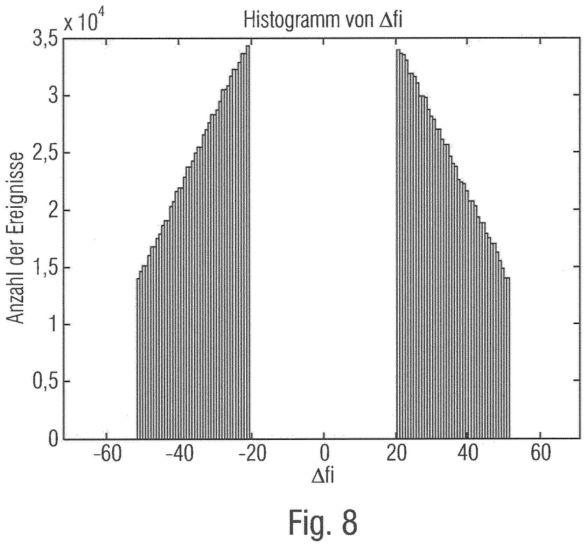

Durch eine geeignete Zuordnungsfunktion $(\Delta fi,t)=map\_\Delta ft(R)$ im Frequenzdifferenz-/Zeitpunkt-Zuordner kann sichergestellt werden, dass nur Frequenzkanalindexsprünge $\Delta fi_n=fi_{n+1}-fi_n$ (von Kanalzugriff n zu Kanalzugriff n+1) erfolgen, welche z.B. innerhalb eines gewünschten Bereichs liegen, z.B. $\Delta fi_{max} \geq \Delta fi \geq \Delta fi_{min}$ für $\Delta fi>0$ und $\Delta fi_{max} \geq (-\Delta fi) \geq \Delta fi_{min}$ für $\Delta fi<0$. Für die Implementierung einer solchen Beschränkung gibt es zahlreiche Verfahren, welche selbst nicht Gegenstand der Erfindung sind. Eine beispielhafte Implementierung in Form eines entsprechenden Programmcodes für MATLAB (mit welchem Fig. 8 erzeugt wurde) findet sich im Anhang.

Fig. 8 zeigt in einem Diagramm ein auf einer Monte-Carlo-Simulation beruhendes Histogramm über die Variable $\Delta fi$ (Differenz des Frequenzkanalindex $\Delta fi$ zwischen zeitl. benachbarten Kanalzugriffen).

Im dargestellten Beispiel stehen 72 Frequenzkanäle zur Verfügung. Die den Simulationsergebnissen zugehörigen Parameter sind $\Delta fi_{min}=21$, $\Delta fi_{max}=51$, d.h. der Betrag des Abstands zwischen zwei im Kanalzugriffsmuster aufeinanderfolgenden Zugriffen beträgt zwischen 21 und 51 Frequenzkanälen.

Durch geeignete, sich dem Fachmann leicht erschließende Modifikationen des beispielhaften Programmcodes lassen sich andere Verteilungsformen für $\Delta fi$ erzeugen (z.B. Gleichverteilung im Bereich von $-\Delta fi_{min}$ bis $-\Delta fi_{max}$ bzw. $+\Delta fi_{min}$ bis $+\Delta fi_{max}$) als in Fig. 8 gezeigt.

**A.3. Vorgabe der zeitlichen Kanalzugriffsaktivität**

In einem hoch ausgelasteten System können alle verfügbaren Zeitschlitze in das Kanalzugriffsmuster mit aufgenommen werden. In weniger stark ausgelasteten Systemen muss nicht jeder Zeitschlitz für den Kanalzugriff zur Verfügung stehen. Dies ist in der folgenden Abbildung dargestellt.

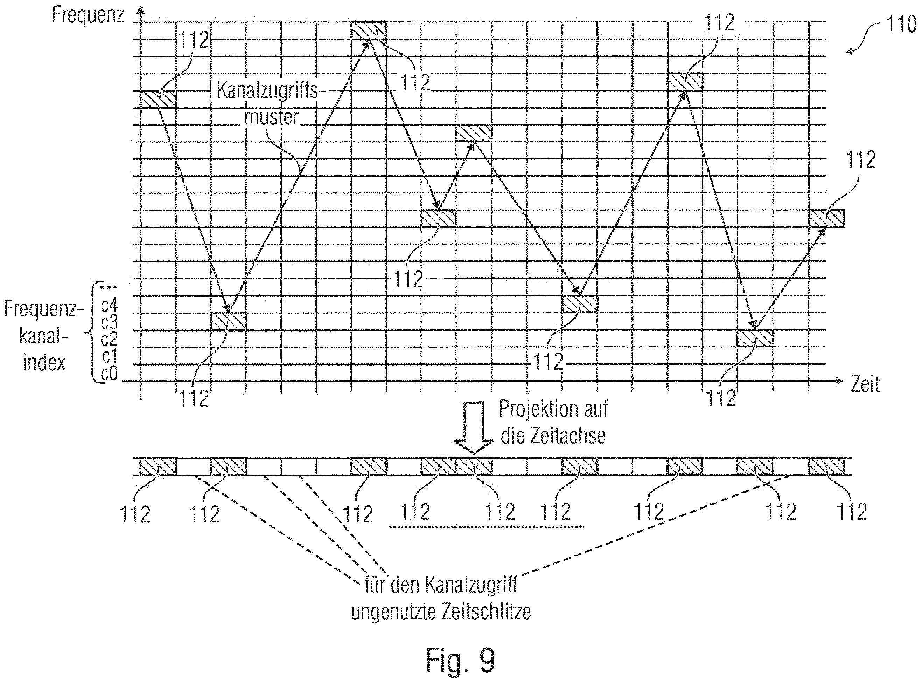

Fig. 9 zeigt in einem Diagramm eine durch ein Kanalzugriffsmuster 110 definierte frequenz- und zeitsprungbasierte Belegung der Ressourcen 112 des Frequenzbands sowie eine Projektion des Kanalzugriffsmusters 110 auf eine Zeitachse, gemäß einem Ausführungsbeispiel der vorliegenden Erfindung. Dabei beschreibt die Ordinate die Frequenzkanalindizes und die Abszisse die Zeitschlitzindizes.

Mit anderen Worten, Fig. 9 zeigt im oberen Teil beispielhaft ein Kanalzugriffsmuster 110 in den Dimensionen Frequenz und Zeit (Ressourcenelemente 112) sowie im unteren Teil dessen Projektion auf die Zeitdimension. Es ist zu erkennen, dass nicht jeder Zeitschlitz Teil des Kanalzugriffsmusters 110 ist.

Damit steht für die Erzeugung eines pseudozufälligen Kanalzugriffsmusters 110 neben der Dimension Frequenz (in Form des Frequenzkanalindex) zusätzlich die Dimension Zeit (in Form des Zeitschlitzindex) zur Verfügung. Bei der Erzeugung eines Kanalzugriffsmusters kann somit eine mittlere Aktivitätsrate A vorgegeben werden. Diese sei hier definiert als mittleres Verhältnis von für den Kanalzugriff genutzten Zeitschlitzen zu insgesamt maximal verfügbaren Zeitschlitzen. Bei Nutzung jedes Zeitschlitzes beträgt die Aktivitätsrate A somit 1 (100%). Wird hingegen im Mittel nur jeder dritte Zeitschlitz ins Kanalzugriffsmuster aufgenommen, so beträgt die mittlere Aktivitätsrate A=1/3.

Die Aktivitätsrate bestimmt also die (zeitliche) Dichte der im Kanalzugriffsmuster 110 angebotenen Ressourcen 112.

Bei Ausführungsbeispielen können die zu einer vorgegebenen Aktivitätsrate für den Kanalzugriff ausgewählten Zeitschlitze pseudozufällig aus einem geeigneten Teil der Pseudozufallszahl R (siehe Fig. 5 oder 6) bestimmt werden.

Ausführungsbeispiel 1

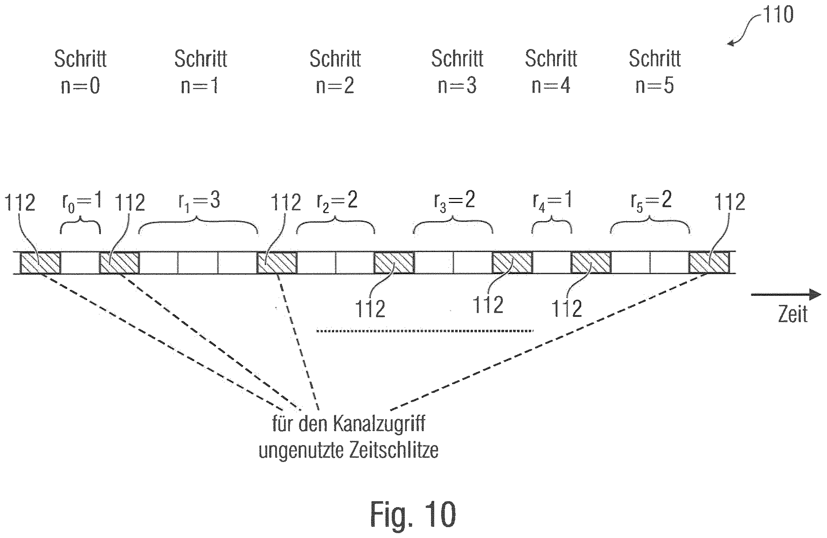

In jedem Schritt n kann aus der zugehörigen Pseudozufallszahl $R_n$ eine ganze Zahl $r_n$ abgeleitet werden, die Werte zwischen $r_{min}$ und $r_{max}$ annehmen kann, d.h. $r_{min} \leq r_n \leq r_{max}$. Nach jedem im Kanalzugriffsmuster 110 aktiven Zeitschlitz kann eine Anzahl von $r_n$ Zeitschlitzen übersprungen werden, diese werden somit nicht für den Kanalzugriff verwendet. Dieser Vorgang ist exemplarisch in Fig. 10 dargestellt.

Im Detail zeigt Fig. 10 in einem Diagramm auf eine Zeitachse projizierte Ressourcenelemente 112 eines Kanalzugriffsmusters 110, die in ungenutzten Zeitschlitzen resultiert, gemäß einem Ausführungsbeispiel.

Mit anderen Worten, Fig. 10 zeigt eine beispielhafte Abfolge von genutzten und ungenutzten Zeitschlitzen, gemäß einem Ausführungsbeispiel.

Wird die Zahl r aus der Zahl R dergestalt abgeleitet, dass die Elemente von r zwischen $r_{min}$ und $r_{max}$ mit gleicher Häufigkeit auftreten (Gleichverteilung), so ergibt sich folgende Aktivitätsrate:

$$A=2/(2+r_{min}+r_{max}).$$

Das im obigen Ausführungsbeispiel vorgestellte Verfahren hat den Vorteil, dass Mindest- und Höchstabstände zwischen den im Kanalzugriffsmuster 110 aktiven Zeitschlitzen vorgegeben werden können. Die Vorgabe von Mindestabständen kann insbesondere bei batteriebetriebenen Geräten vorteilhaft sein, bei denen Sendepausen einer gewissen Mindestlänge zwischen zwei aufeinanderfolgenden Aussendungen (Erholungsphase) die Batterielebensdauer erhöhen.

In vergleichbarer Vorgehensweise lässt sich vorgeben, dass eine Mindestzahl von aktiven Zeitschlitzen direkt aufeinander folgt.

Ausführungsbeispiel 2

Bei einer Implementierung gemäß Ausführungsbeispiel 1 können theoretisch längere Bereiche mit lokal deutlich höherer oder niedrigerer Aktivitätsrate als gewünscht vorkommen. Dieser Effekt wird in dem folgenden Ausführungsbeispiel vermieden.

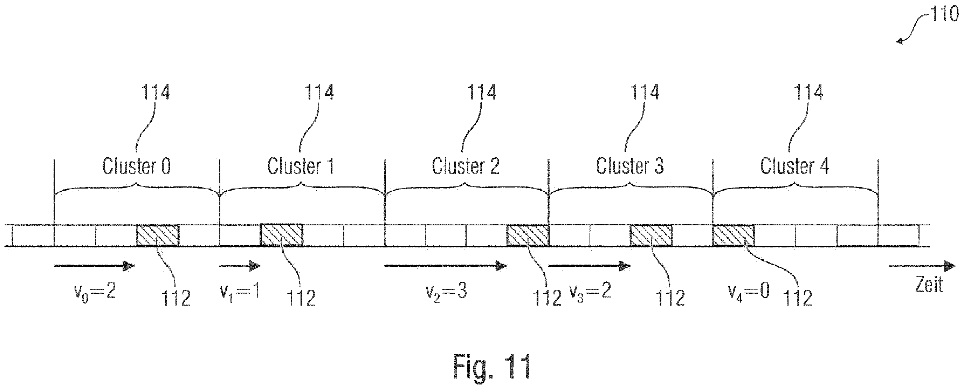

Hierbei werden periodisch Gruppen von aufeinanderfolgenden Zeitschlitzen vorgegeben, innerhalb welcher jeweils ein aktiver Zeitschlitz des Kanalzugriffsmusters platziert wird. Dies ist für eine Aktivitätsrate von 1/4 (25%) in Fig. 11 exemplarisch dargestellt.

Im Detail zeigt Fig. 11 in einem Diagramm auf eine Zeitachse projizierte Ressourcenelemente 112 eines Kanalzugriffsmusters 110 mit einer Aktivitätsrate A=1/4, gemäß einem Ausführungsbeispiel.

Mit anderen Worten, Fig. 11 zeigt eine beispielhafte Abfolge von genutzten und ungenutzten Zeitschlitzen, gemäß einem Ausführungsbeispiel.

Wie in Fig. 11 zu erkennen ist, können die Zeitschlitze zu Clustern 114 (im Beispiel von Fig. 11 der Länge 4) gruppiert werden. In jedem Cluster 114 wird genau ein Zeitschlitz des Kanalzugriffsmusters 110 platziert. Die Position der ins Kanalzugriffsmuster 110 aufgenommenen Zeitschlitze innerhalb des Clusters 114 kann durch eine Verschiebung $v_n$ bestimmt werden, welche von der Pseudozufallszahl $R_n$ abgeleitet und die ganzzahlige Werte zwischen 0 und (Clusterlänge-1) annehmen kann.

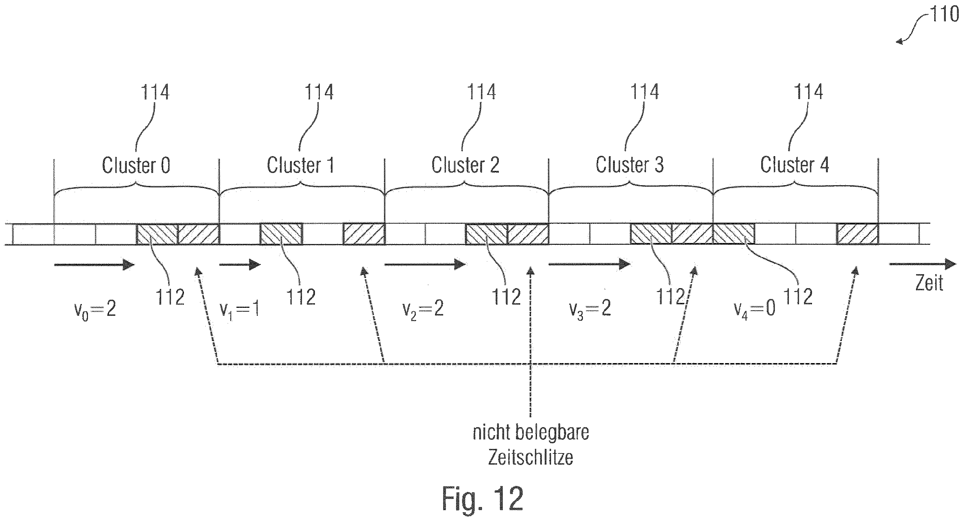

Für den Fall, dass ein Mindestabstand zwischen zwei aufeinanderfolgenden Zeitschlitzen des Kanalzugriffsmusters 110 gewährleistet werden soll, können zwischen den Clustern 114 nicht belegbare Bereiche eingebracht werden. Diese können aus einem oder mehreren Zeitschlitzen bestehen, wie dies in Fig. 12 veranschaulicht ist.

Im Detail zeigt Fig. 12 in einem Diagramm auf eine Zeitachse projizierte Ressourcenelemente 112 eines Kanalzugriffsmusters 110 mit einer Aktivitätsrate A=1/4 und einem vorgegebenen Mindestabstand zwischen aufeinander folgenden Zeitschlitzen des Kanalzugriffsmusters 110, gemäß einem Ausführungsbeispiel.

Mit anderen Worten, Fig. 12 zeigt eine beispielhafte Abfolge von genutzten und ungenutzten Zeitschlitzen mit nicht belegbaren Zeitschlitzen, gemäß einem Ausführungsbeispiel.

Wie in Fig. 12 zu erkennen ist, verringert sich aufgrund der nicht belegbaren Zeitschlitze der zulässige Bereich der Verschiebungsvariablen $v_n$ auf den Wertebereich von 0 bis (Clusterlänge-1-Länge des nicht belegbaren Bereichs).

Je nach gewählter Aktivitätsrate kann es sein, dass die Cluster 114 unterschiedliche Längen aufweisen müssen, um die gewünschte Aktivitätsrate zu erzielen. In diesem Fall variiert der Wertebereich von $v_n$ entsprechend der jeweiligen Clusterlänge. Um z.B. eine Aktivitätsrate von 40% einzustellen, können sich Cluster der Länge zwei und der Länge drei abwechseln.

**A.4. Kanalzugriffsmuster mit Bereichen unterschiedlicher Aktivitätsrate**

Datenpakete, die den Empfänger möglichst schnell erreichen sollen (kurze Latenzzeit), benötigen bei der Übertragung möglichst dicht aufeinanderfolgende Kanalzugriffe, d.h. eine vergleichsweise hohe Aktivitätsrate im Kanalzugriffsmuster.

Bei Datenpaketen, bei denen hingegen die Übertragungssicherheit (z.B. hohe Robustheit gegen externe Störer) im Vordergrund steht, kann eine Verteilung der Aussendung über einen längeren Zeitraum vorteilhaft sein, mithin also eine vergleichsweise niedrige Aktivitätsrate im Kanalzugriffsmuster günstig sein. Dasselbe gilt für Geräte, bei denen eine zeitlich entzerrte Energieentnahme aus der Batterie (zeitlich gestreckte Sendeaktivität) gewünscht wird.

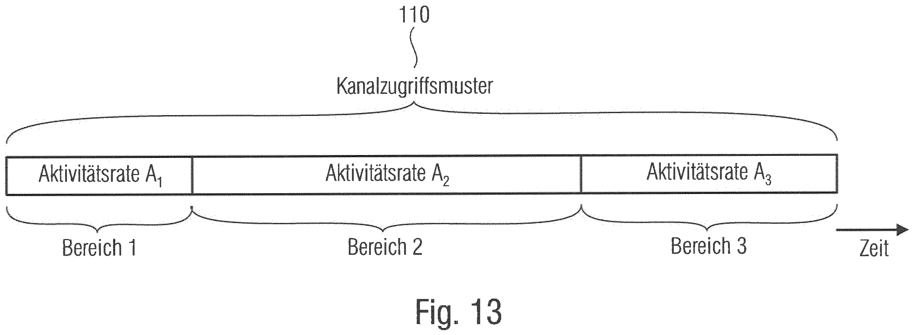

Wie oben dargestellt, kann durch geeignete Maßnahmen die Aktivitätsrate, d.h. die Frequenz des Kanalzugriffs, vorgegeben werden. Um in einem Netzwerk den ggf. unterschiedlichen Anforderungen gerecht zu werden, wird kann ein Kanalzugriffsmuster so gestaltet werden, dass es Bereiche mit unterschiedlichen Aktivitätsraten aufweist. Dies ist in Fig. 13 exemplarisch dargestellt. Je nach individueller Anforderung können Endgeräte dann z.B. in dem für sie geeigneten Bereich senden.

Im Detail zeigt Fig. 13 eine zeitliche Aufteilung eines Kanalzugriffsmusters 110 in Bereiche unterschiedlicher Aktivitätsrate $A_1$, $A_2$ und $A_3$, gemäß einem Ausführungsbeispiel.

Mit anderen Worten, Fig. 13 zeigt ein Beispiel für ein Kanalzugriffsmuster mit drei Bereichen unterschiedlicher Aktivitätsrate innerhalb des Kanalzugriffsmusters 110.

### A.5. Bedarfsabhängige (dynamische) Anpassung der Aktivitätsrate des Kanalzugriffsmusters

In Netzwerken (oder Kommunikationssystemen) 102 können zu unterschiedlichen Zeitpunkten unterschiedliche Lastsituationen vorliegen. Wie weiter oben ausgeführt, kann über die Gestaltung das Kanalzugriffsmusters 110 (d.h. dessen Aktivitätsrate bzw. mittlerer zeitlicher Dichte) eine Festlegung des aktiv nutzbaren Ressourcenvorrats für dieses Netzwerk erfolgen.

Das Bereitstellen eines hohen Ressourcenvorrats (hohe Aktivitätsrate) bei niedriger tatsächlicher Last kann insbesondere bei batteriebetriebenen Geräten nachteilig sein. Als Beispiel sei hier eine batteriebetriebene Basisstation (z.B. eines PAN-Netzwerks, ggf. im sog. Repeaterbetrieb), genannt, welche während aller aktiven Ressourcen des Kanalzugriffsmusters den Empfänger betreibt und damit Energie einsetzt.

Daher kann es sinnvoll sein, die mittlere Aktivitätsrate, also die zeitliche Dichte der durch das Kanalzugriffsmuster 110 angebotenen Ressourcen, den vorliegenden Lastverhältnissen dynamisch anzupassen. Wenn die Aktivitätsrate des Kanalzugriffsmusters 110 geändert ist, wird dies den Teilnehmern im Netzwerk entsprechend signalisiert, wofür z.B. das Baken-Signal (oder auch dedizierte Signalisierungsressourcen) in Frage kommt.

Befindet sich ein Endgerät 106 in einem längeren Ruhezustand (Energiesparmodus), so kann es vorkommen, dass es die während des Ruhezustands ausgesendete Signalisierungsinformation der Basisstation 104 über ein ggf. geändertes Kanalzugriffsmuster nicht erhält. In einem solchen Szenario kann es sinnvoll sein, dass ein Kanalzugriffsmuster 110 einen Mindestvorrat an (Grund-)Ressourcen bereitstellt, der jederzeit und ohne besondere Signalisierung zur Verfügung steht, sowie einen zusätzlichen Vorrat an Ressourcen, der lastabhängig hinzugefügt werden kann und einer entsprechenden Signalisierung unterliegt.

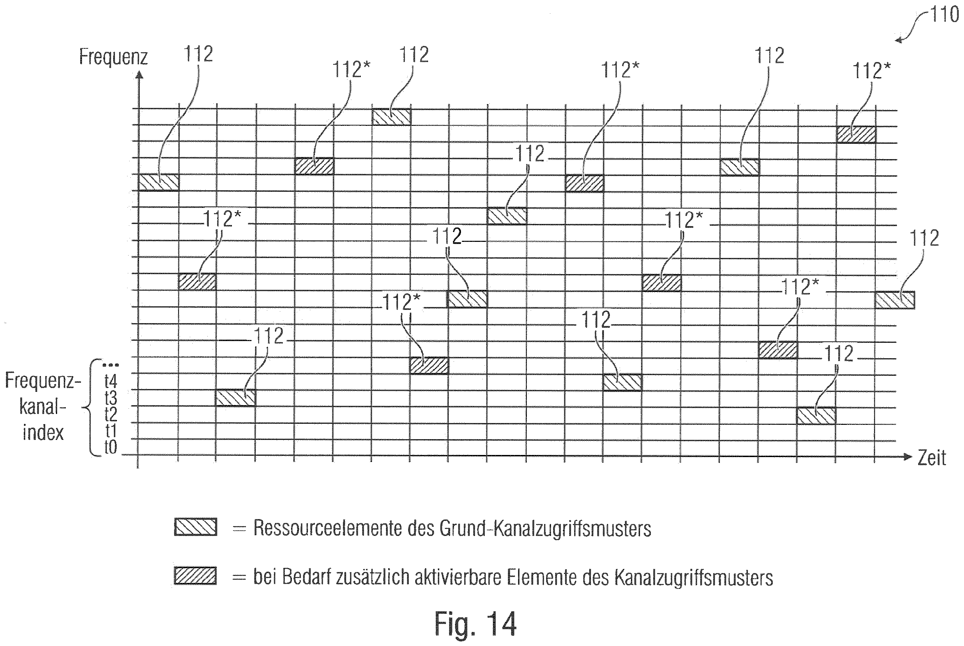

Im obigen Sinne dem Kanalzugriffsmuster zusätzlich hinzugefügte Ressourcen können z.B. zeitlich nach den Grundressourcen angeordnet sein oder auch mit diesen verschränkt im Zeit-/Frequenzraster angeordnet sein, wie dies in Fig. 14 gezeigt ist.

Im Detail zeigt Fig. 14 in einem Diagramm eine durch ein Kanalzugriffsmuster 110 definierte frequenz- und zeitsprungbasierte Belegungen der Ressourcen 112 des Frequenzbands, wobei das Kanalzugriffsmuster 110 zusätzlich bei Bedarf aktivierbare Ressourcen 112* aufweist, gemäß einem Ausführungsbeispiel der vorliegenden Erfindung. Dabei beschreibt die Ordinate die Frequenzkanalindizes und die Abszisse die Zeitschlitzindizes.

Mit anderen Worten, Fig. 14 zeigt ein Beispiel für verschränkte Grund- und Zusatzressourcen.

### A.6. Adaptive Frequenzbereichsbelegung

In bestimmten unlizenzierten Frequenzbändern können Nutzer ohne regulatorische Einschränkungen ggf. selbst entscheiden, welche Frequenzbereiche sie innerhalb des Frequenzbands nutzen. Dies kann dazu führen, dass bestimmte Bereiche des zur Verfügung stehenden Frequenzbands stärker durch externe Nutzer belegt werden als andere und somit stärkeren Störungen ausgesetzt sind.

Wenn eine Basisstation 104 eine solche mittel- oder langfristige asymmetrische Auslastung des Frequenzbands feststellt (z.B. durch frequenzkanalweise Signal-zu-Störleistungs-Schätzungen auf Basis empfangener Signale), kann der überdurchschnittlich stark belegte Bereich des Frequenzbands für die Nutzung durch das eigene Netzwerk gemieden werden, indem die zugehörigen Frequenzkanäle nicht in das Kanalzugriffsmuster mit aufgenommen werden. Dies ist im Frequenz-/Zeitpunkt-Zuordner (siehe Fig. 5 oder 6) zu berücksichtigen und wird allen Netzwerkteilnehmern in geeigneter Weise signalisiert.

Die Gruppe der ausgeklammerten Frequenzkanäle kann z.B. durch einen entsprechenden Start- und Endfrequenzkanalindex oder durch einen Startfrequenzkanalindex und eine folgende Kanalanzahl beschrieben werden.

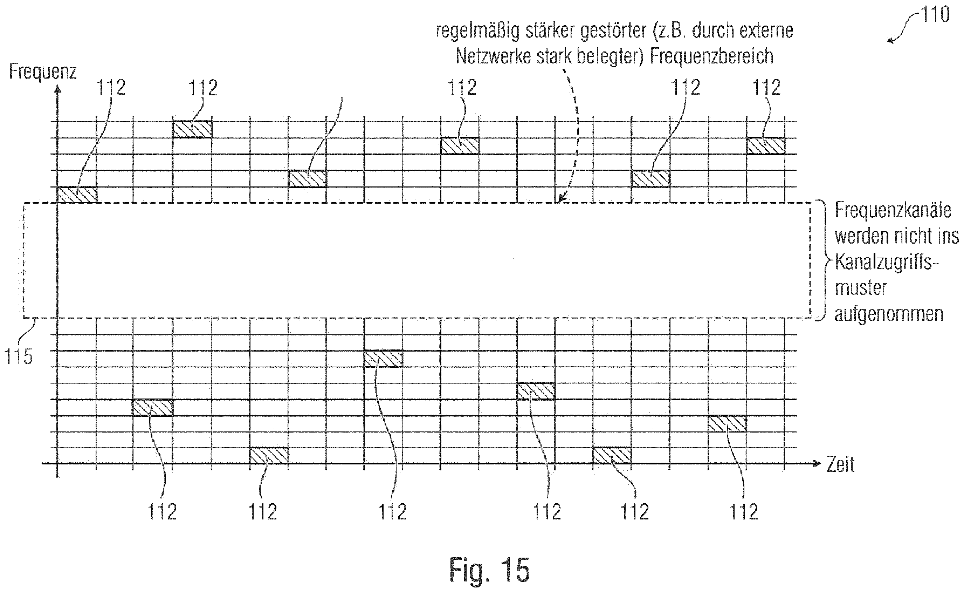

Fig. 15 zeigt in einem Diagramm eine durch ein Kanalzugriffsmuster 110 definierte frequenz-und zeitsprungbasierte Belegungen der Ressourcen 112 des Frequenzbands, wobei ein regelmäßig stärker gestörter Frequenzbereich 115 des Frequenzbands nicht durch das Kanalzugriffsmuster 110 belegt wird, gemäß einem Ausführungsbeispiel der vorliegenden Erfindung. Dabei beschreibt die Ordinate die Frequenzkanalindizes und die Abszisse die Zeitschlitzindizes.

Wie in Fig. 15 zu erkennen ist, wird bei der Erzeugung des Kanalzugriffsmusters 110 ein regelmäßig stärker gestörter (z.B. durch externe Netzwerke stark belegter) Frequenzbereich 115 berücksichtigt. Frequenzkanäle dieses Frequenzbereichs 115 werden somit nicht ins Kanalzugriffsmuster 110 aufgenommen.

Mit anderen Worten, Fig. 15 zeigt ein Beispiel für Ausklammerung stark gestörter Frequenzkanäle aus dem Kanalzugriffsmuster.

Mit der Meidung von störanfälligen Frequenzbereichen für die Datenübertragung im eigenen Netzwerk erfolgt gleichzeitig ein gewisser Lastausgleich über das Frequenzband, indem andere Netzwerke in den bereits stark ausgelasteten Frequenzbereichen keine zusätzlichen Störungen erfahren.

**A.7. Bündelung** von **Ressourcenelementen im Frequenzbereich (Frequenzkanalbündelung)**

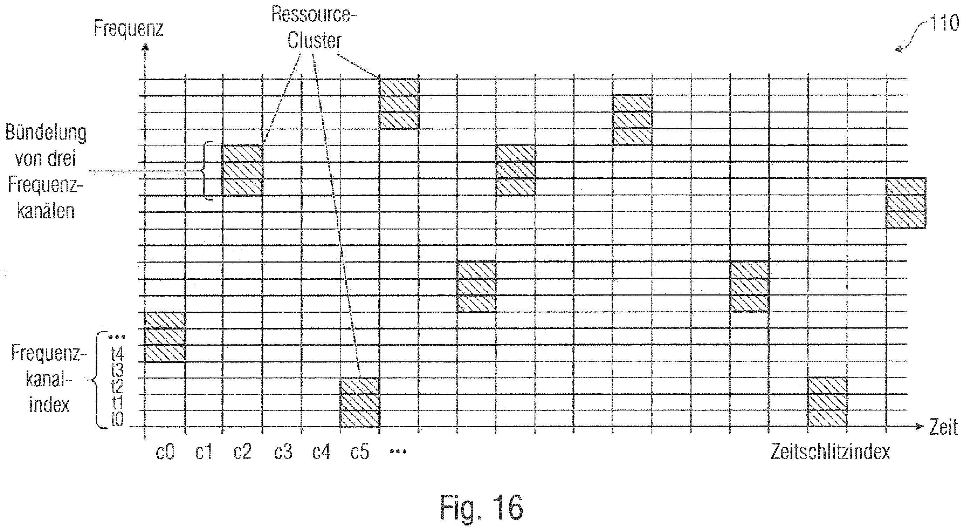

Je nach eingesetzter Hard- und Software ist es möglich, dass eine Basisstation 104 auf mehreren Frequenzkanälen gleichzeitig empfangen kann (Frequenzkanalbündelung). In diesem Fall ist es gerade bei höher ausgelasteten Systemen vorteilhaft, die Anzahl der innerhalb des Netzwerks angebotenen Ressourceelemente in der Frequenzdimension entsprechend zu erhöhen und mehrere Frequenzkanäle innerhalb eines Zeitschlitzes in das Kanalzugriffsmuster aufzunehmen, wie dies in Fig. 16 gezeigt ist.

Im Detail zeigt Fig. 16 in einem Diagramm eine durch ein Kanalzugriffsmuster 110 definierte frequenz- und zeitsprungbasierte Belegungen der Ressourcen 112 des Frequenzbands, wobei Ressourcen 112 im Frequenzbereich gebündelt werden, gemäß einem Ausführungsbeispiel. Dabei beschreibt die Ordinate die Frequenzkanalindizes und die Abszisse die Zeitschlitzindizes.

Mit anderen Worten, Fig. 16 zeigt eine beispielhafte Darstellung des Kanalzugriffsmusters 110 bei Bündelung von je drei benachbarten Frequenzkanälen zu Ressourcen-Clustern. Dabei wird in Fig. 16 beispielhaft die Bündelung von jeweils drei Frequenzkanälen dargestellt. Jede Gruppe von Ressource-Elementen eines Zeitschlitzes kann dabei als "Ressource-Cluster" bezeichnet werden. Das Kanalzugriffsmuster 110 kann hierbei ergänzt werden um die Information über die Anzahl der Frequenzkanäle, die ein Ressource-Cluster konstituieren.

Als weiteres Ausführungsbeispiel sei erwähnt, dass die zu Ressource-Clustern gruppierten Frequenzkanäle nicht notwendigerweise unmittelbar benachbart sein müssen.

Im Folgenden wird aufgezeigt, wie ein oder mehrere Teilnehmer eines Kommunikationssystems 102 unter Verwendung eines relativen Kanalzugriffsmusters auf eine Auswahl der durch das netzwerkspezifische Kanalzugriffsmuster 110 für das Kommunikationssystem 102 freigegebene Ressourcen zugreifen können.

B. Kanalzugriff über relative Kanalzugriffsmuster

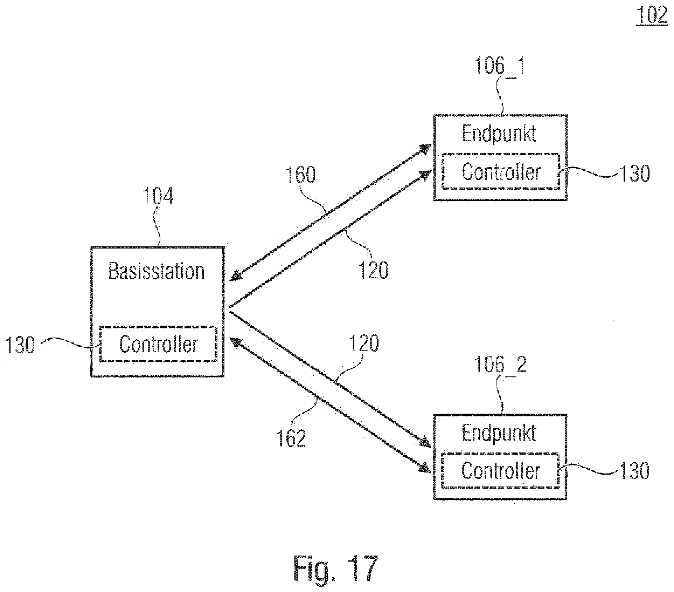

Fig. 17 zeigt ein schematisches Blockschaltbild eines Kommunikationssystems 102 mit einer Basisstation 104 und zwei Endpunkten 106_1-106_2, gemäß einem Ausführungsbeispiel der vorliegenden Erfindung.

Das in Fig. 17 gezeigte Kommunikationssystem 102 weist beispielhaft eine Basisstation 104 und zwei Endpunkte 106_1-106_2 auf. Die vorliegende Erfindung ist jedoch nicht auf solche Ausführungsbeispiele beschränkt, vielmehr kann das Kommunikationssystem 102 ein oder mehrere Endpunkte 106_1-106_n aufweisen, wobei n eine natürliche Zahl größer gleich eins ist. Beispielsweise kann das Kommunikationssystem 1, 10, 100, 1.000, 10.000 oder sogar 100.000 Endpunkte aufweisen.

Wie dies oben bereits ausführlich erläutert wurde (vgl. z.B. Fig. 4) nutzen die Teilnehmer (= Basisstation 104 und Endpunkte 106_1-106_2) des Kommunikationssystems zur gegenseitigen Kommunikation ein Frequenzband (z.B. ein lizenzfreies und/oder genehmigungsfreies Frequenzband, z.B. ISM Band), welches von einer Mehrzahl von Kommunikationssystemen zur Kommunikation genutzt wird. Das Kommunikationssystem 102 arbeitet dabei unkoordiniert in Bezug auf die anderen Kommunikationssysteme, die das gleiche Frequenzband nutzen.

Wie dies ebenfalls oben detailliert dargelegt wurde, ist die Basistation 104 ausgebildet, um ein Signal 120 zu senden, wobei das Signal 120 eine Information über ein netzwerkspezifisches Kanalzugriffsmuster 110 aufweist, wobei das netzwerkspezifische Kanalzugriffsmuster 110 eine für die Kommunikation des Kommunikationssystems 102 verwendbare frequenz- und/oder zeitsprungbasierte Belegung von Ressourcen des Frequenzbands angibt, während die Endpunkte 106_1-106_2 ausgebildet sind, um das Signal 120 zu empfangen und um basierend auf der Information über das netzwerkspezifische Kanalzugriffsmuster das netzwerkspezifische Kanalzugriffsmuster 110 zu ermitteln (siehe z.B. Fig. 5 und 6).

Zur gegenseitigen Kommunikation, d.h. zur gegenseitigen Übertragung von Daten, können die Teilnehmer (z.B. Basisstation 104 und Endpunkt 106_1) des Kommunikationssystems 102 ein relatives Kanalzugriffsmuster verwenden, welches angibt, welche der durch das netzwerkspezifische Kanalzugriffsmuster 110 für die Kommunikation des Kommunikationssystems 102 freigegebenen oder verwendbaren Ressourcen tatsächlich für die Übertragung der Daten zu verwenden sind.

Im Detail kann die Basisstation 104 bei Ausführungsbeispielen ausgebildet sein, um Daten 160 (z.B. ein Signal mit den Daten 160) unter Verwendung von einem relativen Kanalzugriffsmuster zu übertragen (z.B. zu dem Endpunkt 106_1 zu senden und/oder von dem Endpunkt 106_1 zu empfangen), wobei das relative Kanalzugriffsmuster eine für die Übertragung zu verwendende Belegung von Ressourcen aus der verwendbaren frequenz- und/oder zeitsprungbasierten Belegung von Ressourcen des netzwerkspezifischen Kanalzugriffsmusters 110 angibt.

Bei Ausführungsbeispielen kann der Endpunkt 106_1 ausgebildet sein, um Daten 160 (z.B. ein Signal mit den Daten 160) unter Verwendung von dem relativen Kanalzugriffsmuster zu übertragen (z.B. von der Basisstation zu empfangen und/oder zu der Basisstation 104 zu senden), wobei das relative Kanalzugriffsmuster eine für die Übertragung zu verwendende Belegung von Ressourcen aus der verwendbaren frequenz- und/oder zeitsprungbasierten Belegung von Ressourcen des netzwerkspezifischen Kanalzugriffsmusters angibt.

Bei Ausführungsbeispielen kann zur gegenseitigen Kommunikation zwischen anderen Teilnehmern (z.B. Basisstation 104 und Endpunkt 106_2) des Kommunikationssystems 102 ein anderes relatives Kanalzugriffsmuster verwendet werden, welches angibt, welche der durch das netzwerkspezifische Kanalzugriffsmuster 110 für die Kommunikation des Kommunikationssystems 102 freigegebenen oder verwendbaren Ressourcen tatsächlich für die Übertragung der Daten zu verwenden sind, wobei das relative Kanalzugriffsmuster (z.B. von Endpunkt 106_1) und das andere relative Kanalzugriffsmuster (z.B. von Endpunkt 106_2) unterschiedlich sind.

Beispielsweise kann die die Basisstation 104 bei Ausführungsbeispielen ferner ausgebildet sein, um Daten 162 (z.B. ein Signal mit den Daten 162) unter Verwendung von einem anderen relativen Kanalzugriffsmuster zu übertragen (z.B. zu dem anderen Endpunkt 106_2 zu senden und/oder von dem anderen Endpunkt 106_2 zu empfangen), wobei das andere relative Kanalzugriffsmuster eine für die Übertragung zu verwendende Belegung von Ressourcen aus der verwendbaren frequenz- und/oder zeitsprungbasierten Belegung von Ressourcen des netzwerkspezifischen Kanalzugriffsmusters angibt, wobei das relative Kanalzugriffsmuster und das andere relative Kanalzugriffsmuster unterschiedlich sind.

Der andere Endpunkt 106_2 kann ausgebildet sein, um Daten 162 (z.B. ein Signal mit den Daten 162) unter Verwendung von dem anderen relativen Kanalzugriffsmuster zu übertragen (z.B. von der Basisstation 104 zu empfangen und/oder zu der Basisstation 104 zu senden), wobei das andere relative Kanalzugriffsmuster eine für die Übertragung zu verwendende Belegung von Ressourcen aus der verwendbaren frequenz- und/oder zeitsprungbasierten Belegung von Ressourcen des netzwerkspezifischen Kanalzugriffsmusters angibt, wobei das relative Kanalzugriffsmuster und das andere relative Kanalzugriffsmuster unterschiedlich sind.

Im Folgenden werden Ausführungsbeispiele der Anwendung und Erzeugung von relativen Kanalzugriffsmustern beschrieben. Die relativen Kanalzugriffsmuster können hierbei von den Teilnehmern (z.B. der Basisstation 104 und zumindest einem der Endpunkte 106_1-106_2) ermittelt werden, beispielsweise durch den Controller 130, der in den Teilnehmern implementiert ist.

Die folgenden Ausführungsbeispiele nehmen dabei Bezug auf die in Abschnitt A beschriebenen Ausführungsbeispiele, welche bei Koexistenz mehrerer untereinander unkoordinierter Funknetzwerke (z.B. LPWAN, PAN) in wechselseitiger Empfangsreichweite der Zugriff auf ein gemeinsam genutztes Frequenzband so gestalten, dass die netzwerkübergreifenden, wechselseitigen Störungen der Teilnehmer bzw. deren nachteilige Auswirkungen auf die Übertragungssicherheit reduziert oder sogar minimiert werden.

Dabei wird in der folgenden Beschreibung von einer Kommunikationsanordnung von untereinander unkoordinierten Funknetzwerken zur Datenübertragung ausgegangen, die auf ein gemeinsam genutztes Frequenzband zugreifen. Bei manchen Ausführungsbeispielen wird vorausgesetzt, dass bei der Datenübertragung das sog. Telegram Splitting Multiple Access (TSMA) Verfahren zum Einsatz kommt, wie es z.B. in [1] beschrieben ist. Hierbei wird ein mittels Kanalkodierung geschütztes Datenpaket in mehrere Teil-Datenpakete aufgeteilt, welche in mehreren unterschiedlichen Zeit-und/oder Frequenzressourcen übertragen werden.

Ferner wird bei manchen Ausführungsbeispielen vorausgesetzt, dass es innerhalb jedes Netzwerks eine koordinierende Instanz gibt (im Folgenden "Basisstation" genannt, im Rahmen des IEEE Standards [2] "PAN coordinator" genannt), welche den nicht-koordinierenden Teilnehmern des Netzwerks (im Folgenden "Endgeräte" oder "Endpunkte" genannt) Information über das innerhalb des Netzwerks angewandte Kanalzugriffsmuster übermitteln kann. Die oben beschriebenen Kanalzugriffsmuster (siehe Abschnitt A) definieren einen Satz von Funkressourcen (Ressourceelementen), die für eine Übertragung innerhalb eines Netzwerks für einen bestimmten Zeitraum grundsätzlich zur Verfügung stehen. Sie definieren somit das (für den betrachteten Zeitraum gültige) von der Basisstation festgelegte Angebot an Ressourcen, auf welches die Endgeräte zugreifen können.

Bei Kanalzugriffsverfahren wird grundsätzlich zwischen einem "konkurrenzfreien Zugriff" (engl. contention free access) und einem "konkurrenzbasierten Zugriff" (engl. contention based access) unterschieden. Im konkurrenzfreien Zugriff werden einem Endgerät von der koordinierenden Instanz (Basisstation) eindeutig spezifizierte Funkressourcen zur exklusiven Verwendung zugewiesen. Beim konkurrenzbasierten Zugriff - auf welchen sich Ausführungsbeispiele beziehen - steht dem Endgerät ein Angebot an Funkressourcen zur Verfügung, aus welchem sich das Endgerät bei Bedarf eigeninitiativ, d.h. ohne individuelle Ressourcenzuteilung, bedient. Kennzeichnend ist hierbei, dass auch andere Endgeräte auf dasselbe Angebot zurückgreifen können, sodass es zu Konflikten im Zugriff auf die gemeinsam genutzten Funkressourcen kommen kann. Ziel ist es, diese Konflikte möglichst zu reduzieren oder sogar vermeiden.

Ausführungsbeispiele befassen sich somit mit Techniken, die die Verteilung der vorhandenen Ressourcen (welche von der Basisstation festgelegt worden) möglichst effektiv gestaltet, so dass die Störungen zwischen den Teilnehmern innerhalb des Netzwerks reduziert oder sogar minimiert werden.

Ausführungsbeispiele der vorliegenden Erfindung beziehen sich auf eine hierarchische Aufteilung des Kanalzugriffs bei Anwendung des TSMA-Verfahrens:

- Die Vorgabe eines Angebots an verfügbaren Funkressourcen durch die Basisstation in Form des netzwerkspezifischen Kanalzugriffsmusters (siehe Abschnitt A). Den Kanalzugriffsmustern kommt dabei die Aufgabe zu, den Zugriff mehrerer untereinander unkoordinierter Netzwerke auf ein gemeinsam genutztes Frequenzband so zu gestalten, dass die Teilnehmer unterschiedlicher Netzwerke sich möglichst wenig beeinträchtigen (Ziel: Trennung der Netzwerke untereinander).
- Die Auswahl und Nutzung von Funkressourcen aus dem o. g. netzwerkspezifischen Kanalzugriffsmuster ("Angebot") durch Endgeräte in Form eines relativen Kanalzugriffsmusters. Das relative Kanalzugriffsmuster steht hierarchisch unterhalb des netzwerkspezifischen Kanalzugriffsmusters und kann sich keiner Ressourcen bedienen, die außerhalb des netzwerkspezifischen Kanalzugriffsmusters liegen. Die Indizierung der Ressourcen kann daher vorteilhafterweise relativ zum netzwerkspezifischen Kanalzugriffsmuster erfolgen. Die verschiedenen relativen Kanalzugriffsmuster haben die Aufgabe, im Rahmen eines konkurrenzbasierten Zugriffs mehreren Teilnehmern innerhalb eines Netzwerks (ggf. im gleichen Zeitraum) Zugriff auf das gemeinsame Ressourcenangebot zu verschaffen, wobei sich die Teilnehmer innerhalb des Netzwerks dabei gegenseitig möglichst wenig beeinträchtigen sollen (Ziel: Trennung der Teilnehmer innerhalb eines Netzwerks).

Ausführungsbeispielen sehen vor, dass es einen sowohl der Basisstation als auch den Endgeräten des Netzwerks bekannten Vorrat an relativen Kanalzugriffsmustern gibt, aus welchem das Endgerät z.B. für jede Übertragung eines nutzt. Die Auswahl eines relativen Kanalzugriffsmusters aus dem verfügbaren Vorrat kann nach unterschiedlichen Kriterien erfolgen und wird weiter unten detaillierter beschrieben.

**B.1. Kanalzugriff über hierarchisch organisierte Kanalzugriffsmuster**

Wie oben ausgeführt wurde, beziehen sich Ausführungsbeispiele der vorliegenden Erfindung auf die hierarchische Struktur des Kanalzugriffsmusters von Netzwerk-Teilnehmern aus zwei Komponenten:

- einem netzwerkspezifischen Kanalzugriffsmuster, welches das Angebot an Funkressourcen im jeweiligen Netzwerk zum betreffenden Zeitpunkt festlegt (siehe Abschnitt A), sowie
- einem dazu relativen Kanalzugriffsmuster. Dieses legt fest, welche von den verfügbaren Ressourcen tatsächlich bei einer Datenübertragung belegt/genutzt werden.

Das aktiv genutzte relative Kanalzugriffmuster eines Netzwerkteilnehmers besteht somit aus einer Untermenge des netzwerkspezifischen Kanalzugriffsmusters.

Die Anwendung der hierin beschriebenen Ausführungsbeispiele ist besonders vorteilhaft bei Datenübertragung nach dem TSMA-Verfahren, bei welchem ein Datenpaket auf eine Anzahl von Teil-Datenpaketen aufgeteilt übertragen wird. Die folgende Darstellung geht aus Gründen der Veranschaulichung und ohne Beschränkung der Allgemeingültigkeit davon aus, dass das Frequenzband in eine Anzahl von diskreten Frequenzkanälen aufgeteilt ist sowie auch eine zeitliche Diskretisierung der Zugriffe innerhalb eines Netzwerks in Form von Zeitschlitzen (engl. (time)slots) erfolgt.

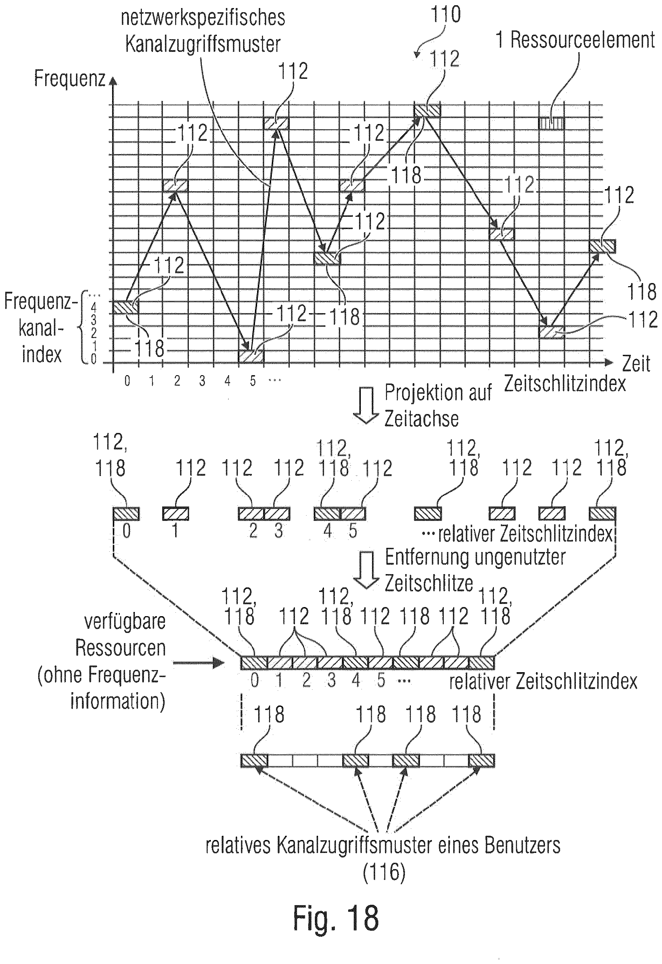

Fig. 18 zeigt in einem Diagramm eine durch ein netzwerkspezifisches Kanalzugriffsmuster 110 angegebene frequenz- und zeitsprungbasierte verwendbare Belegung von Ressourcen 112 des Frequenzbands, eine durch ein relatives Kanalzugriffsmuster 116 angegebene für die Übertragung zu verwendende Belegung von Ressourcen 118 aus der verwendbaren Belegung von Ressourcen 112 des netzwerkspezifischen Kanalzugriffsmusters 110, sowie Projektionen der Kanalzugriffsmuster 110, 116 auf Zeitachsen vor und nach Entfernung ungenutzter Ressourcen (z.B. Zeitschlitze), gemäß einem Ausführungsbeispiel. Dabei beschreibt die Ordinate die Frequenzkanalindizes und die Abszisse die Zeitschlitzindizes.

Wie in Fig. 18 zu erkennen ist, definiert das netzwerkspezifische Kanalzugriffsmuster 110 die Verteilung der Ressourcen 112 des Frequenzbands (z.B. jeweils definiert durch Zeitschlitz und Frequenzkanal, oder Zeitschlitzindex und Frequenzkanalindex), die von dem Kommunikationssystem 102 und damit von den Teilnehmern (Basistation 104 und Endpunkte 106_1-106_2) des Kommunikationssystems 102 für die gegenseitige Kommunikation verwendet werden können, während das relative Kanalzugriffsmuster 116 diejenigen Ressourcen 118 aus den verwendbaren Ressourcen 112 angibt, die von einer Teilmenge der Teilnehmer (z.B. einer begrenzten Gruppen von Teilnehmern, z.B. von zwei Teilnehmern, wie z.B. Basisstation 104 und Endpunkt 106_1) des Kommunikationssystems 102 für die gegenseitige Kommunikation tatsächlich verwendet werden.

Mit anderen Worten, Fig. 18 zeigt eine schematische beispielhafte Darstellung des netzwerkspezifischen und relativen Kanalzugriffsmusters (hierarchische Struktur des Kanalzugriffs). Dabei zeigt Fig. 18 im oberen Teil beispielhaft die Aufteilung der Funkressourcen in einem diskreten Zeit-/Frequenzraster in eine Vielzahl von Ressourcenelementen. Ein Ressourcenelement ist dabei durch einen Frequenzkanalindex sowie einen Zeitschlitzindex beschrieben. Im oberen Teil der Fig. 18 ist ein netzwerkspezifisches Kanalzugriffsmuster 110 dargestellt, welches durch Ressourcenelemente 112 hervorgehoben ist, die durch Pfeile symbolisch miteinander verbunden sind. Dieses netzwerkspezifische Kanalzugriffsmuster 110 stellt das Angebot an Ressourcenelementen 122 dar, welches von einem Netzwerk (oder Kommunikationssystem) 102 zur Verfügung gestellt wird. Eine Signalaussendung ist in diesem Beispiel in einem Zeitschlitz jeweils nur auf einem Frequenzkanal möglich.

Wird die zweidimensionale Darstellung auf die Zeitachse projiziert und werden alle im netzwerkspezifischen Kanalzugriffsmuster 110 nicht belegte Zeitschlitze entfernt, so resultieren gemäß der obigen Darstellung die "verfügbaren Ressourcen" 112. Die Zeitindizierung kann hier vorteilhafterweise durch einen relativen Zeitschlitzindex erfolgen, welcher relativ zum netzwerkspezifischen Kanalzugriffsmuster ist.

Im untersten Teil der Fig. 18 ist beispielhaft ein relatives Kanalzugriffsmuster 116 dargestellt, welches eine Teilmenge aus den verfügbaren Ressourcen (ggf. auch alle) festlegt. Das im gewählten Beispiel effektiv resultierende Kanalzugriffsmuster (d.h. die hierarchische Kombination aus netzwerkspezifischem und relativem Kanalzugriffsmuster) ist in allen Bereichen der Fig. 18 durch Ressourcenelemente 118 gekennzeichnet. Dabei lässt sich das relative Kanalzugriffsmuster mit seinem relativen Zeitschlitzindex mittels der in Abschnitt A definierten mittleren Aktivitätsrate A auf das ursprüngliche diskrete Zeitraster zurückrechnen. Diese mittlere Aktivitätsrate sei definiert als mittleres Verhältnis von für den Kanalzugriff genutzten Zeitschlitzen zu insgesamt maximal verfügbaren Zeitschlitzen. Bei Nutzung jedes Zeitschlitzes beträgt die Aktivitätsrate A somit 1 (100%). Wird hingegen, wie in Fig. 18 im oberen Teil gezeigt, im Mittel nur jeder zweite Zeitschlitz ins Kanalzugriffsmuster aufgenommen (also 10 von 20), so beträgt die mittlere Aktivitätsrate A=1/2.

**B.2. Bündelung von Ressourcenelementen im Frequenzbereich (Frequenzkanalbündelung)**

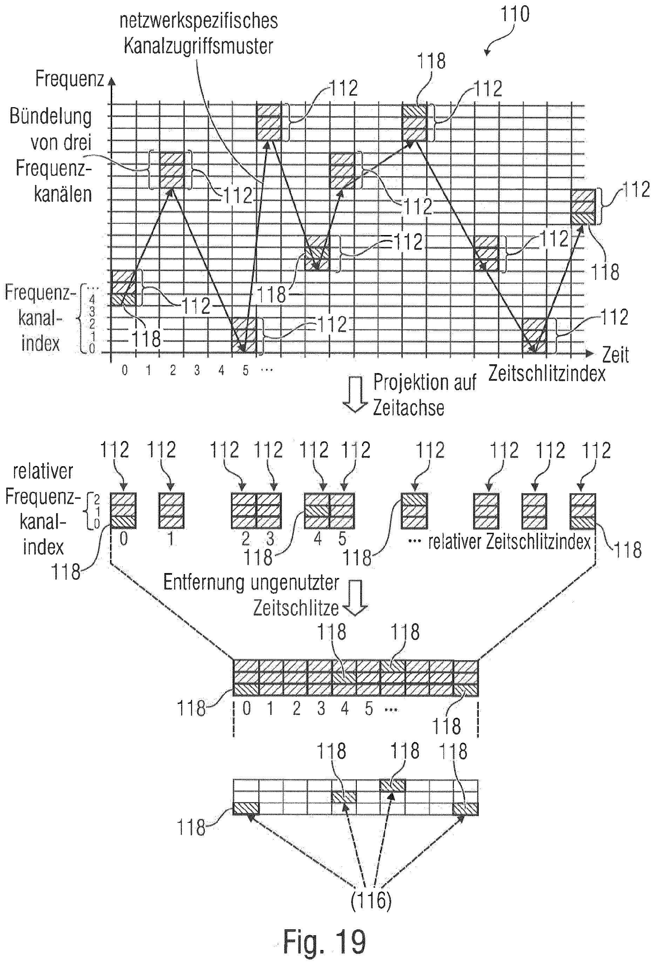

Je nach eingesetzter Hard- und Software ist es möglich, dass eine Basisstation 102 auf mehreren Frequenzkanälen gleichzeitig empfangen kann (Frequenzkanalbündelung). In diesem Fall ist es gerade bei höher ausgelasteten Systemen vorteilhaft, die Anzahl der innerhalb des Netzwerks angebotenen Ressourcenelemente in der Frequenzdimension entsprechend zu erhöhen und mehrere Frequenzkanäle innerhalb eines Zeitschlitzes in das netzwerkspezifische Kanalzugriffsmuster 110 aufzunehmen. Dies ist in Fig. 19 dargestellt.

Im Detail zeigt Fig. 19 in einem Diagramm eine durch ein netzwerkspezifisches Kanalzugriffsmuster 110 angegebene frequenz- und zeitsprungbasierte verwendbare Belegung von im Frequenzbereich gebündelten Ressourcen 112 des Frequenzbands, eine durch ein relatives Kanalzugriffsmuster 116 angegebene für die Übertragung zu verwendende Belegung von Ressourcen 118 aus der verwendbaren Belegung von Ressourcen 112 des netzwerkspezifischen Kanalzugriffsmusters 110, sowie Projektionen der Kanalzugriffsmuster 110, 116 auf Zeitachsen vor und nach Entfernung ungenutzter Ressourcen (z.B. Zeitschlitze). Dabei beschreibt die Ordinate die Frequenzkanalindizes und die Abszisse die Zeitschlitzindizes.

Wie in Fig. 19 zu erkennen ist, gibt das netzwerkspezifische Kanalzugriffsmuster 110 in Frequenzrichtung (z.B. pro Zeitschlitz oder Zeitschlitzindex) eine Bündelung von Ressourcen 112, d.h. eine Mehrzahl von benachbarten Ressourcen 112 (z.B. Frequenzkanälen oder Frequenzkanalindizes) des Frequenzbands an, wobei das relative Kanalzugriffmuster 116 in Frequenzrichtung höchstens eine Teilmenge (z.B. höchstens eine Ressource, d.h. eine oder keine Ressource) der Mehrzahl von benachbarten Ressourcen 112 des netzwerkspezifischen Kanalzugriffsmusters 110 angibt.

Mit anderen Worten, Fig. 19 zeigt eine schematische beispielhafte Darstellung des netzwerkspezifischen Kanalzugriffmusters 110 und des relativen Kanalzugriffsmusters 116 bei lückenloser Frequenzkanalbündelung.

Dabei zeigt Fig. 19 exemplarisch eine Bündelung von drei jeweils zusammenhängenden Frequenzkanälen pro belegtem Zeitschlitz. Entsprechend steht beim relativen Kanalzugriffsmuster 116 neben der zeitlichen Dimension auch die Belegung der (im Beispiel: drei) Frequenzkanäle als Freiheitsgrad zur Verfügung.

In entsprechender, wie oben beschriebener Weise kann auch verfahren werden, wenn die innerhalb eines Zeitschlitzes verfügbaren, mehreren Frequenzkanälen nicht als (lückenlos) zusammenhängender Bereich vorliegen, sondern in anderer Weise über die verfügbaren Frequenzkanäle verteilt sind, wie dies in Fig. 20 gezeigt ist.

Fig. 20 zeigt in einem Diagramm eine durch ein netzwerkspezifisches Kanalzugriffsmuster 110 angegebene frequenz- und zeitsprungbasierte verwendbare Belegung von im Frequenzbereich voneinander beabstandeten Ressourcen 112 des Frequenzbands, eine durch ein relatives Kanalzugriffsmuster 116 angegebene für die Übertragung zu verwendende Belegung von Ressourcen 118 aus der verwendbaren Belegung von Ressourcen 112 des netzwerkspezifischen Kanalzugriffsmusters 110, eine durch ein anderes relatives Kanalzugriffsmuster 117 angegebene für die Übertragung zu verwendende Belegung von Ressourcen 119 aus der verwendbaren Belegung von Ressourcen 112 des netzwerkspezifischen Kanalzugriffsmusters 110, sowie Projektionen der Kanalzugriffsmuster 110, 116, 117 auf Zeitachsen vor und nach Entfernung ungenutzter Zeitschlitze bzw. Frequenzkanäle, gemäß einem Ausführungsbeispiel. Dabei beschreibt die Ordinate die Frequenzkanalindizes und die Abszisse die Zeitschlitzindizes.

Wie in Fig. 20 zu erkennen ist, gibt das netzwerkspezifische Kanalzugriffsmuster 110 in Frequenzrichtung (z.B. pro Zeitschlitz oder Zeitschlitzindex) eine Bündelung von Ressourcen 112, d.h. eine Mehrzahl von voneinander beabstandeten Ressourcen 112 (z.B. Frequenzkanälen oder Frequenzkanalindizes) des Frequenzbands an, wobei das relative Kanalzugriffmuster 116 in Frequenzrichtung höchstens eine Teilmenge (z.B. höchstens eine Ressource, d.h. eine oder keine Ressource) der Mehrzahl von voneinander beabstandeten Ressourcen 112 des netzwerkspezifischen Kanalzugriffsmusters 110 angibt, und wobei das andere relative Kanalzugriffmuster 117 in Frequenzrichtung höchstens eine Teilmenge (z.B. höchstens eine Ressource, d.h. eine oder keine Ressource) der Mehrzahl von voneinander beabstandeten Ressourcen 112 des netzwerkspezifischen Kanalzugriffsmusters 110 angibt, wobei das relative Kanalzugriffsmuster 116 und das andere relative Kanalzugriffsmuster 117 unterschiedlich sind.

Mit anderen Worten, Fig. 20 zeigt eine schematische beispielhafte Darstellung des netzwerkspezifischen Kanalzugriffsmusters 110 und des relativen Kanalzugriffsmusters 116 bei lückenbehafteter Frequenzkanalbündelung.

Vorteilhaft bei dieser Frequenzkanalbündelung ist, dass wie anhand des in Fig. 20 zusätzlich gezeigten relativen Kanalzugriffsmusters 117 eines zweiten Teilnehmers (z.B. Benutzers) deutlich weniger Nachbarkanalstörung (die Kanaltrennung zweier direkt benachbarter Kanäle ist aufgrund der begrenzten Filterwirkung immer problematisch, insbesondere dann wenn der eine Kanal mit einer deutlich stärkeren Empfangsleistung wie der benachbarte Kanal empfangen wird) wie in Fig. 19 auftritt.

Der Vorteil der in den Fig. 19 und 20 beschriebenen Bündelung besteht darin, mehr Endgeräten innerhalb des Netzwerks und innerhalb eines gegebenen Zeitraums Zugriff auf die Funkressourcen zu gewähren (höhere Last). Alternativ kann bei gegebener Last durch Kanalbündelung die Wahrscheinlichkeit für Kanalzugriffskollisionen verringert werden, da ein gegebenes Zugriffsaufkommen auf mehr potentielle Ressourcenelemente verteilt wird (reduzierte wechselseitige Störungen der Teilnehmer innerhalb des Netzwerks). Vorteil der Frequenzkanalbündelung gegenüber einer Benutzung von mehr Zeitschlitzen besteht auch in mehr Energieeffizienz, da der Empfänger bei gleichem Angebot an Ressourcenelementen den Empfänger für weniger Zeitschlitze einschaltet.

Wenn ein Endgerät die Fähigkeit hat, auf mehreren Frequenzkanälen gleichzeitig zu senden, so kann dies im relativen Kanalzugriffsmuster vorgesehen werden. Dies ist in der folgenden Abbildung veranschaulicht, die sich nur auf das relative Kanalzugriffsmuster beschränkt (entsprechend dem unteren Teilen von Fig. 19 und 20).

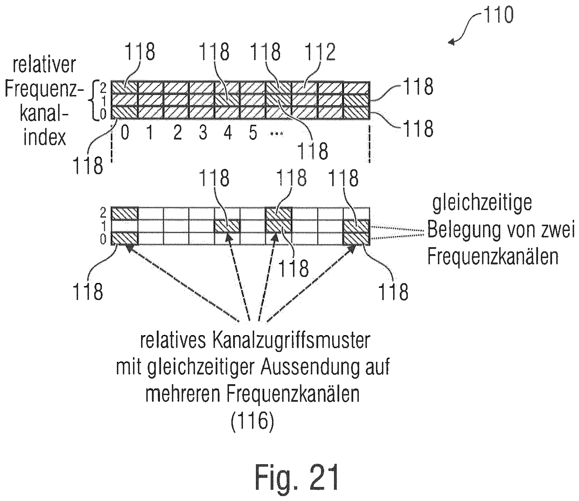

Fig. 21 zeigt in einem Diagramm eine Projektion eines netzwerkspezifischen Kanalzugriffsmusters 110 und eines relativen Kanalzugriffsmusters 116 auf die Zeitachse nach dem Entfernen ungenutzter Frequenzkanäle und Zeitschlitze, wobei das relative Kanalzugriffsmuster 116 in Frequenzrichtung für zumindest einen Teil der Zeitsprünge mehrere der in Frequenzrichtung verfügbare Ressourcen 112 belegt. Dabei beschreibt die Ordinate die relativen Frequenzkanalindizes, und die Abszisse die relativen Zeitschlitzindizes.

Mit anderen Worten, Fig. 21 zeigt in einem Diagramm ein relatives Kanalzugriffsmuster 116 bei Frequenzkanalbündelung mit gleichzeitiger Übertragung (z.B. Aussendung) auf mehreren Frequenzkanälen.

B.3. Belegung der Ressourcen mit Kanalzugriffen in unterschiedlichen Symbolraten

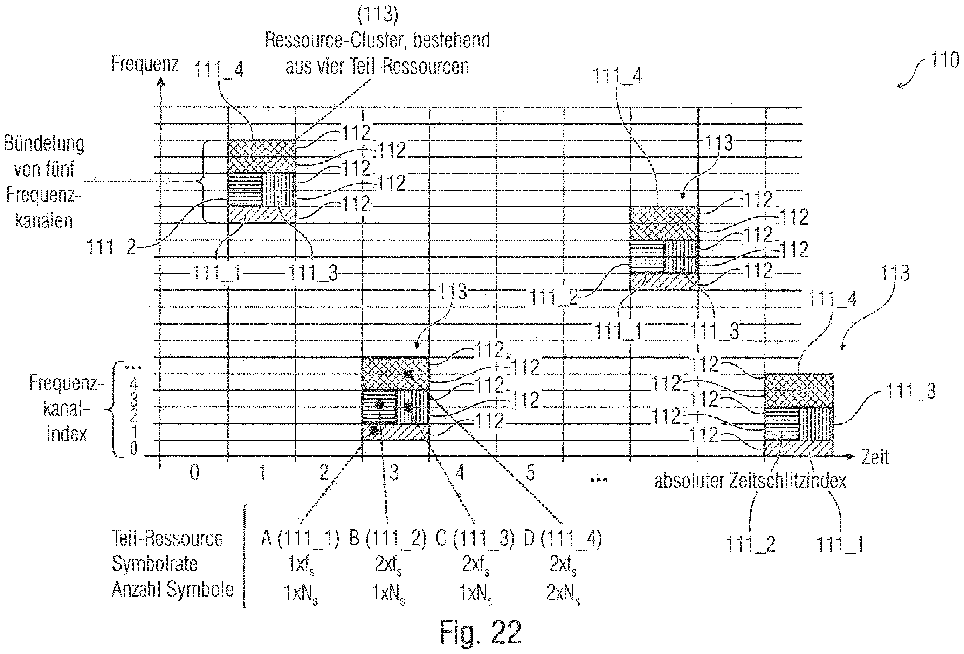

In den obigen Ausführungen wurde beispielhaft davon ausgegangen, dass das Signal auf jedem Frequenzkanal mit einer identischen Symbolrate erzeugt wird. Sollte jedoch, wie oben beschrieben, ein Bereich aus mehreren, unmittelbar benachbarten Frequenzkanälen verfügbar sein, so kann dieser im Folgenden als "Ressource-Cluster" bezeichnete Bereich in mehrere Teil-Ressourcen aufgeteilt werden. Diesen Teil-Ressourcen können unterschiedliche Symbolraten und/oder eine unterschiedliche Anzahl von Symbolen zugeordnet werden, wie dies in Fig. 22 veranschaulicht ist.

Fig. 22 zeigt in einem Diagramm eine durch ein netzwerkspezifisches Kanalzugriffsmuster 110 angegebene frequenz- und zeitsprungbasierte verwendbare Belegung von im Frequenzbereich zu Blöcken (oder Clustern) 113 gebündelten Ressourcen 112 des Frequenzbands, wobei unterschiedlichen Teilen 111_1-111_4 des Blocks 113 von zusammenhängenden Ressourcen 112 unterschiedliche Symbolraten und/oder unterschiedliche Anzahlen von Symbolen zugeordnet sind, gemäß einem Ausführungsbeispiel. Dabei beschreibt die Ordinate die Frequenzkanalindizes und die Abszisse die Zeitschlitzindizes.

Mit anderen Worten, Fig. 22 zeigt eine Bildung von Ressource-Cluster 113 mit Teil-Ressourcen 111_1-111_4 von unterschiedlicher Symbolrate und Symbolanzahl pro Zeitschlitz (Beispiel).

Dabei zeigt Fig. 22 exemplarisch einen Ausschnitt aus einem Kanalzugriffsmuster mit einer Abfolge von Ressource-Clustern 113, die durch Bündelung von je fünf Frequenzkanälen konstituiert werden. Jedes Ressource-Cluster 113 ist dabei im Beispiel in vier unabhängige Teil-Ressourcen "A" (111_1), "B" (111_2), "C" (111_3), "D" (111_4) aufgeteilt, in welchen unterschiedliche Vielfache der Symbolrate $f_s$ und der Anzahl der Symbole $N_s$ zur Anwendung kommen. Bei einer doppelten Symbolrate und gegebener Anzahl von Symbolen können z.B. aufgrund der verkürzten Symboldauer in einem Zeitschlitz zwei aufeinanderfolgende Zugriffe durch zwei unterschiedliche Teilnehmer erfolgen. Dies ist in Fig.

22 für die zeitlich aufeinanderfolgenden Teil-Ressourcen "B" (111_2) und "C" (111_3) der Fall.

Der Vorteil dieser Vorgehensweise besteht darin, dass innerhalb des netzwerkspezifischen Kanalzugriffsmusters 110 Ressourcen je nach Bedarf mit unterschiedlichen Symbolraten und damit Übertragungsbandbreiten belegt werden können.

Es ist für den Fachmann leicht ersichtlich, dass die Aufteilung von durch Frequenzkanalbündelung gebildeten Ressource-Clustern 113 in einzelne Teil-Ressourcen in vielfältiger Weise vorgenommen werden kann. Die dabei eingesetzten Symbolraten müssen dabei nicht notwendigerweise (wie im gewählten Beispiel) ganzzahlige Vielfache einer Grundsymbolrate sein. Entsprechendes gilt für die Anzahl der Symbole in den Teil-Ressourcen.

## B.4 Kriterien zur Erzeugung relativer Kanalzugriffsmuster

Aus unterschiedlichen Übertragungsszenarien können unterschiedliche Anforderungen an das relative Kanalzugriffsmuster 116 resultieren.

Datenpakete, die den Empfänger möglichst schnell erreichen sollen (kurze Latenzzeit), benötigen bei der Übertragung möglichst dicht aufeinanderfolgende Kanalzugriffe, d.h. eine vergleichsweise hohe Aktivitätsrate A im netzwerkspezifischen Kanalzugriffsmuster, wie in Abschnitt A beschrieben. Bei Datenpaketen, bei denen hingegen die Übertragungssicherheit (z.B. hohe Robustheit gegen externe Störer) im Vordergrund steht, kann eine Verteilung der Aussendung über einen längeren Zeitraum vorteilhaft sein, mithin also eine vergleichsweise niedrige Aktivitätsrate A im netzwerkspezifischen Kanalzugriffsmuster günstig sein. Dasselbe gilt für Geräte, bei denen eine zeitlich entzerrte Energieentnahme aus der Batterie (zeitlich gestreckte Sendeaktivität) gewünscht wird.

Es ist daher vorteilhaft, den Satz von verfügbaren relativen Kanalzugriffsmustern so zu gestalten, dass für unterschiedliche Szenarien bedarfsgerechte Kanalzugriffsmuster mit gewünschten Eigenschaften zur Verfügung stehen.

Die entscheidenden Designparameter für einen Satz von K relativen Kanalzugriffsmustern sind

- in Frequenzrichtung die Anzahl der F vorgegebenen Frequenzkanäle innerhalb eines Zeitschlitzes,
- in Zeitrichtung die Anzahl der Z verfügbaren Zeitschlitze mit vorgegebener Zeitdauer $T_{RE}$, wobei pro Zeitindexelement nur ein Ressourcenelement in Z eingeht,
- die aus Abschnitt A vorgegebene mittlere Aktivitätsrate A, mit deren Hilfe sich aus der relativen Zeitschlitzlänge eine absolute Zeitschlitzlänge Z/A ergibt. Daraus kann dann bei vorgegebener Zeitdauer $T_{RE}$ eines Ressourcenelements die Gesamtframedauer $T_{Frame} = T_{RE} \cdot (Z/A)$ in Sekunden angeben werden,
- die Anzahl der D Teil-Datenpakete, in die ein Datenpaket zerlegt wird, sowie der beim Datenpaket verwendete Fehlerkorrekturcode, was beispielsweise ein Block- oder Faltungscode mit vorgegebener Coderate R sein kann. Üblicherweise ist die Anzahl der Teil-Datenpakete deutlich kleiner als die Anzahl der in Zeitrichtung zur Verfügung stehenden Ressourcenelemente, also D « Z.

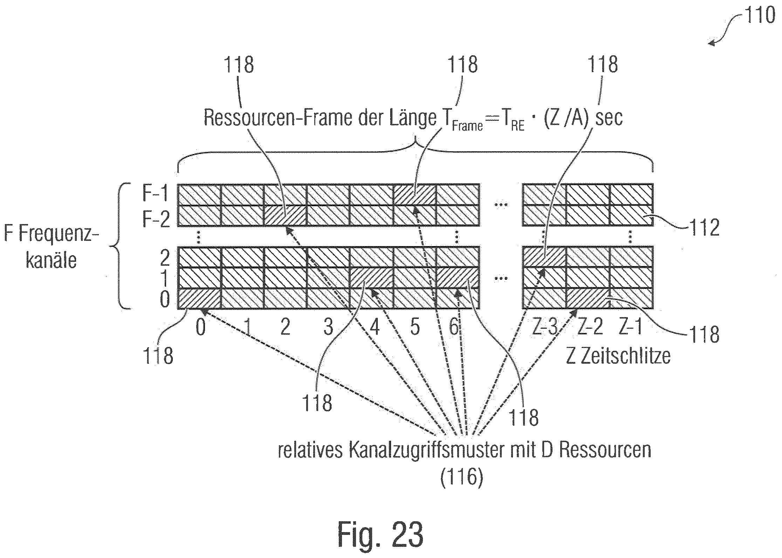

Fig. 23 zeigt in einem Diagramm eine Projektion eines netzwerkspezifischen Kanalzugriffsmusters 110 und eines relativen Kanalzugriffsmusters 116 mit D Ressourcen 112 auf die Zeitachse nach dem Entfernen ungenutzter Ressourcen (Frequenzkanäle und Zeitschlitze), gemäß einem Ausführungsbeispiel. Dabei beschreibt die Ordinate die relativen Frequenzkanalindizes, und die Abszisse die relativen Zeitschlitzindizes.

Fig. 23 zeigt dabei eine Darstellung eines Ressourcen-Frames mit $F \times Z$ Ressourcen und einer absoluten Gesamtlänge von $T_{RE} \cdot (Z/A)$ Sekunden.

In einem ersten Designschritt gilt es ausgehend von der Gesamtframedauer $T_{Frame}$ und der netzwerkspezifischen Aktivitätsrate A aus Abschnitt A sowie der Zeitdauer $T_{RE}$ für ein Ressourcenelement die Anzahl der verfügbaren Ressourcenelemente zu bestimmen.

Bei der Festlegung der Gesamtframedauer $T_{Frame} = T_{RE} \cdot (Z / A)$ kommt es auf den Anwendungsfall an. Bei einer Anwendung mit der Anforderung einer kurzen Latenzzeit wie beispielsweise einem drahtlosen Lichtschalter, einer Türklingel oder einem Türöffner, sollte $T_{Frame}$ nicht größer als 500 ms sein. Bei latenzunkritischen Anwendungen, bei denen mehr die Robustheit gegen externe Störer im Vordergrund steht, kann die Zeitdauer eines Ressourcen-Frames durchaus Werte von 5 bis 10 sec annehmen.

Auch die netzwerkspezifische Aktivitätsrate A aus Abschnitt A wird vom Anwendungsfall beeinflusst. Bei latenzkritischen Anwendungen sollte die Aktivitätsrate relativ hoch sein, also zwischen *A=0.33* und 1 liegen. Bei einem Wert von 0.33 wird im Mittel nur jeder dritte Zeitschlitz ins netzwerk-spezifische Kanalzugriffsmuster 110 aufgenommen, während die 2 anderen Zeitschlitze in diesem Netzwerk nicht genutzt werden. Bei latenzunkritischen Anwendungsfällen, insbesondere bei batteriebetriebenen Endgeräten, können die Werte für die Aktivitätsrate durchaus bis auf *A=0.1* absinken.

Schlussendlich gilt es noch die Zeitdauer $T_{RE}$ eines Teil-Datenpakets bzw. Ressourcenelements festzulegen. Bei einer Symbolrate $f_S$ von beispielsweise rund 2500 Sym/s und einer Anzahl von 30 bis 80 Symbolen pro Teil-Datenpaket ergeben sich Werte von 12 bis 32 ms für $T_{RE}$.

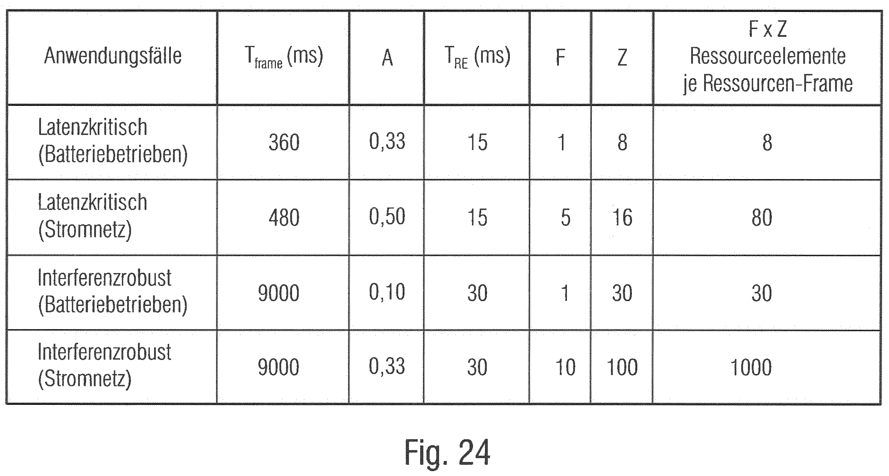

Aus den anwendungsspezifischen Vorgaben für $T_{Frame}$, $T_{RE}$ und A lässt sich die Anzahl Z der in Zeitrichtung zur Verfügung stehenden Ressourcen bestimmen. Zusammen mit den F vorgegebenen Frequenzkanälen ergeben sich dann die insgesamt zur Verfügung stehenden Ressourcen je Ressourcen-Frame. Wie in der in Fig. 24 gezeigten Tabelle dargestellt, können sich diese Werte je nach Anwendungsfall deutlich unterscheiden.

Im Detail zeigt Fig. 24 in einer Tabelle eine Ressourcenberechnung für verschiedene exemplarische Anwendungsfälle.

Wurden anhand des ersten Design-Schrittes die Anzahl der im Ressourcen-Frame zur Verfügung stehenden $F \times Z$ Ressourcenelemente ermittelt, so gilt es im zweiten Design-Schritt ausgehend von der Länge D eines jeden Kanalzugriffsmusters sowie den zur Verfügung stehenden $F \times Z$ Ressourcenelementen, die Anzahl M der verschiedenen Kanalzugriffsmuster zu bestimmen.

In Abhängigkeit von den $F \times Z$ zur Verfügung stehenden Ressourcenelementen gibt es

$$M_{max} = (Z! \cdot F^D) / ( (Z - D)! \cdot D! ) \qquad (1)$$

verschiedene Kanalzugriffsmuster der Länge $D$, die sich in mindestens einem Ressourcenelement unterscheiden. In Gl. (1) wurde unterstellt, dass ein Muster je Zeitschlitzindex nur ein Ressourcenelement aus allen F Frequenzkanälen nutzen darf, siehe Fig. 20. Für das erste Beispiel aus der in Fig. 24 gezeigten Tabelle und einem $D=4$ ergibt sich nach Gleichung (1) ein $M_{max} = 70$ und für den letzten Fall ein $M_{max} = 8 \times 10^{46}$ bei einem unterstellten $D = 24$. Wäre eine gleichzeitige Aussendung mehrerer Teil-Datenpakete auf mehreren Frequenzkanälen erlaubt, so wie Fig. 21 gezeigt, dann würde $M_{max}$ nochmals massiv zunehmen.

Vorteilhafterweise sollte die Anzahl D der Teilpakete möglichst groß gewählt werden, da dann die Robustheit gegenüber Störungen durch andere Teilnehmer, unabhängig davon, ob sie aus dem eigenen oder aus fremden Netzwerken stammen, am größten ist. Üblicherweise erfolgt bei IOT-basierter TSMA-Übertragung die Zerlegung eines Datenpakets in 10 bis 30 Teil-Datenpakete. Steht eine dieser Zahl von Teil-Datenpaketen entsprechende Übertragungszeit, wie beispielsweise bei manchen latenzkritischen Anwendungen, nicht zur Verfügung, kann der Wert von D auch kleiner ausfallen.

Generell gilt, dass je größer die Anzahl M der zur Verfügung stehenden Kanalzugriffmuster gewählt wird, umso geringer die Wahrscheinlichkeit einer Vollkollision ausfällt. Von einer Vollkollision wird gesprochen, wenn zwei Endgeräte zufällig beide das gleiche Kanalzugriffsmuster für ihre Übertragung wählen. Stehen beispielsweise M = 128 verschiedene Muster zur Verfügung, so liegt die Wahrscheinlichkeit einer Vollkollision bei *0.78125% (1/128)*, wenn davon ausgegangen wird, dass jedes Endgerät sein Kanalzugriffmuster zufällig aus den M zur Verfügung stehenden Mustern auswählt. Bei einem M = *1024* sinkt diese Kollisionswahrscheinlichkeit auf 0.0977%. Im Falle einer Vollkollision kann davon ausgegangen werden, dass je nach Empfangspegelverhältnis mindestens der Datenpaketinhalt des schwächer empfangenen Endgeräts nicht mehr fehlerfrei dekodiert werden kann, bei ähnlichen bzw. gleichen Empfangspegeln können sogar die Datenpakete beider Nutzer verlustig gehen. Der Vorteil des in [1] beschriebenen Telegrammaufteilungsverfahrens besteht darin, dass durch die verschiedenen Kanalzugriffmuster immer nur einige wenige Teil-Datenpakete kollidieren, welche sich durch den verwendeten Fehlerkorrekturcode jedoch wieder rekonstruieren lassen.

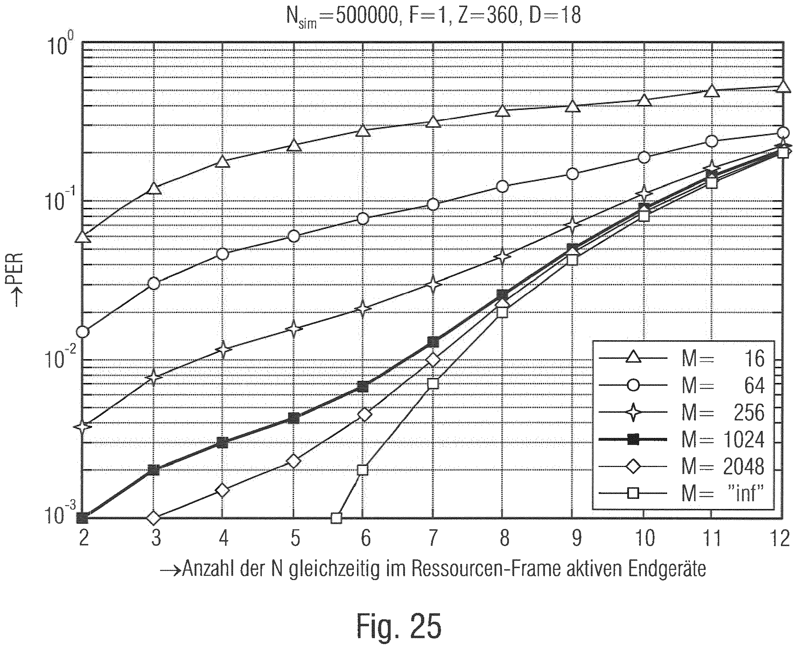

Fig. 25 zeigt in einem Diagramm Simulationsergebnisse der Paketfehlerrate für verschiedene Kanalzugriffmusterlängen M in Abhängigkeit von der Anzahl gleichzeitig aktiver Endgeräte bei 360 Ressourcenelementen. Dabei beschreibt die Ordinate die Paketfehlerrate PER und die Abszisse die Anzahl der N gleichzeitig im Ressourcen-Frame aktiven Endgeräte (z.B. Endpunkte).

Im Detail zeigen die Simulationsergebnisse aus Fig. 25 den Verlauf der Paketfehlerrate PER für verschiedene Längen M von Kanalzugriffmustern über die Anzahl N der gleichzeitig im Ressourcen-Frame aktiven Endgeräte, wobei als Fehlerschutz ein Faltungscode mit Rate $R=1/3$ verwendet wurde. Weiterhin wurden ein F = 1 und Z = 360 vorausgesetzt und die Kanalzugriffmusterlänge belief sich auf $D = 18$.

Bei N = 2 Endgeräten können die verschiedenen Vollkollisions-Wahrscheinlichkeiten in Abhängigkeit von M erkannt werden. Je größer das vorgegebene M, desto niedriger liegen die Ausfallwahrscheinlichkeiten der PER-Kurven der verschiedenen Kanalzugriffmusterlängen. Bei einem M = *1024* werden *1024* verschiedene Kanalzugriffmuster zufällig aus den $M_{max}$ möglichen ausgewählt und die N Endgeräte (z.B. Endpunkte) wählen ihr verwendetes (relatives) Kanalzugriffmuster für die 500.000 Übertragungsversuche ebenfalls immer nach dem Zufallsprinzip aus. Bei M = 'inf' werden für jeden Übertragungsversuch immer neue Kanalzugriffmuster für jedes einzelne Endgerät (z.B. Endpunkt) heraus gewürfelt. Die Vollkollisions-Wahrscheinlichkeiten bei N = 2 ist in diesem Fall dann 0%, da nach Gl. (1) nahezu unendlich viele Kanalzugriffmuster möglich sind. Wächst die Anzahl N der gleichzeitig aktiven Endgeräte, so steigt die Kollisionswahrscheinlichkeit der einzelnen Teil-Datenpakete und die Paketfehlerrate wächst dadurch an. Bei N = 10 Endgeräten beträgt die Paketfehlerrate für alle Kurven von M = 256 bis M = 'inf' ungefähr 10%.

Wie aus Fig. 25 ersichtlich, liefert die Wahl von M = 'inf' die beste Performance. Allerdings ist auf Seiten der Basisstation das Erkennen der verschiedenen Kanalzugriffmuster bei M = 'inf' nahezu unmöglich. Insofern muss M auf ein realistisches Maß reduziert werden. Für ein $M_{max} > 10^{14}$ dürfte eine Vorgabe von M = *1024* sinnvoll sein. Beeinflusst wird diese Wahl auch von der auf Empfängerseite zur Verfügung stehenden Rechenleistung. Es ist erkennbar, dass der Performanceverlust gegenüber der Version mit M = '*inf*' bei der Wahl von M = *1024* nicht besonders groß ist.

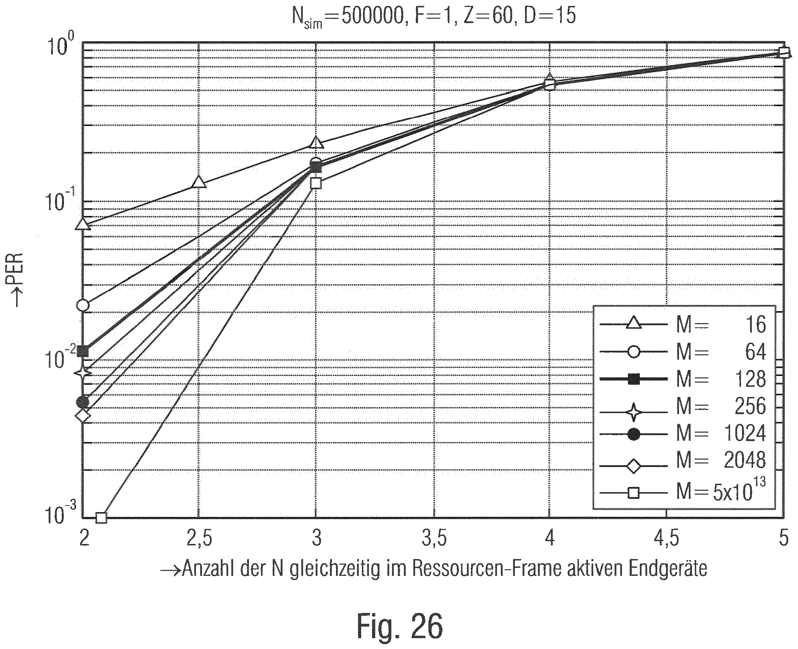

Bei kleineren Werten von $M_{max}$ können auch die Längen der Kanalzugriffmuster abnehmen, ohne dass deutliche Performanceverluste bei der PER in Kauf genommen werden müssen. Dies ist in Fig. 26 für ein Z = 60 und *D* = 15 veranschaulicht. Die Performancekurven für die Längen M = 128 bis M = *2048* unterscheiden sich lediglich bei N = 2 geringfügig.

Fig. 26 zeigt in einem Diagramm Simulationsergebnisse der Paketfehlerrate für verschiedene Kanalzugriffmusterlängen M in Abhängigkeit von der Anzahl gleichzeitig aktiver Endgeräte bei 60 Ressourcenelementen. Dabei beschreibt die Ordinate die Paketfehlerrate PER und die Abszisse die Anzahl der N gleichzeitig im Ressourcen-Frame aktiven Endgeräte (z.B. Endpunkte).

Zusammenfassend gilt festzuhalten, dass die Bestimmung der Anzahl M verschiedener Kanalzugriffsmuster abhängig von $M_{max}$ und damit eine Funktion von F, Z und D ist. Für $M_{max} > 10^{14}$ erweist sich beispielsweise ein M = 1024 als sinnvoll. Sinkt der Wert von $M_{max}$ unter die Schwelle von $10^{14}$, so kann M entsprechend verkleinert werden, wobei mit Simulationen zu überprüfen ist, inwieweit die PER-Performance noch den Anforderungen genügt. Für sehr große Werte von $M_{max}$ kann M durchaus Werte annehmen die noch größer wie 1024 sind. Dies kann durch entsprechende Simulationen bestimmt werden.

Im zweiten Design-Schritt wurde die Anzahl M der verschiedenen Kanalzugriffsmuster und deren Länge D festgelegt. Idealerweise werden die einzelnen Kanalzugriffsmuster mittels Zufallsgenerator bestimmt, wodurch zwischen den M einzelnen Mustern möglichst wenig Zusammenhang oder Ähnlichkeit besteht. Auf Empfängerseite bedeutet dies in der Regel einen sehr großen Detektionsaufwand. Um diesen Detektionsaufwand zu reduzieren, wird im dritten Design-Schritt versucht, den Kanalzugriffsmustern strukturelle Eigenschaften, wie Clusterung oder wiederholende Muster zu geben, um die Rechenkomplexität auf Empfängerseite deutlich zu reduzieren. Die PER-Performance, wie beispielsweise in den Fig. 25 und 26 gezeigt, soll sich dadurch möglichst nicht verschlechtern.

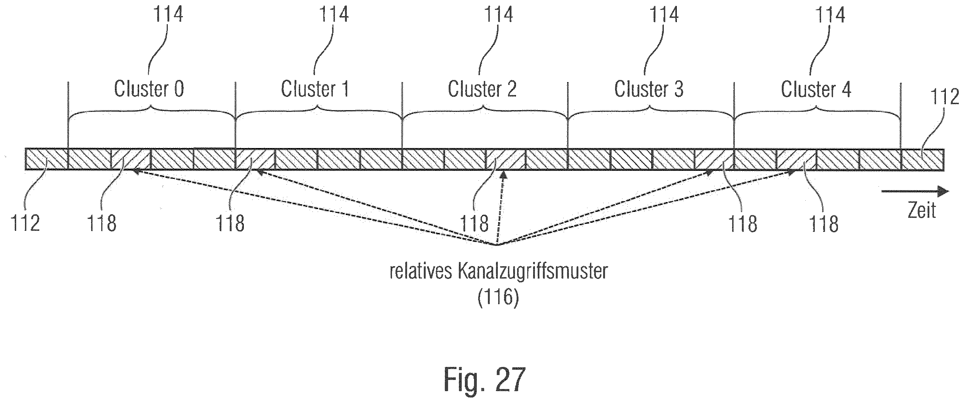

Eine Möglichkeit ist die Unterteilung des Ressourcen-Frames in Cluster 114 gleicher Länge L, wie dies in Fig. 27 gezeigt ist.

Im Detail zeigt Fig. 27 in einem Diagramm auf eine Zeitachse projizierte Ressourcen 112 eines Kanalzugriffsmusters 110, wobei Ressourcen 112 des Kanalzugriffsmusters 110 zu Clustern 114 gleicher Länge L (z.B. L=4) gruppiert werden, wobei das relative Kanalzugriffsmuster eine Belegung von einer Ressource 118 pro Cluster 114 angibt, gemäß einem Ausführungsbeispiel. Mit anderen Worten, Fig. 27 zeigt ein Kanalzugriffsmuster mit jeweils einem Element je Cluster der Länge L = 4

Eine Clustervariante wäre, die Länge Z des Ressourcen-Frames durch die Anzahl der D Teil-Datenpakete zu teilen. Dadurch ergibt sich eine maximale Clusterlänge von L = *floor(R/D)*. In dem Beispiel von Fig. 25 ergäbe sich dann eine Clusterlänge von L = 20 *(360/18)* Ressourcenelementen.

Die Clusterlänge kann auch kleiner als L = *floor(R/D)* gewählt werden und die dann noch verbleibenden Ressourcenelemente dazu genutzt werden, das aus den kleineren Cluster generierte Grundmuster anschließend um jeweils einen Zeitindexschritt, also um ein Ressourcenelement weiterzuschieben, um dadurch weitere Muster zu generieren, die alle die gleiche Grundform haben.

Im Beispiel Fig. 26 kann beispielsweise L = 10 vorgegeben werden. Aus den *L × D (= 180)* Ressourcenelementen wird dann ein einziges Kanalzugriffsmuster ausgewürfelt, welches anschließend R - *L × D* mal, also 180-mal, jeweils um einen Zeitindexschritt verschoben, weiterverwendet werden kann. Dadurch werden 181 verschiedene Kanalzugriffsmuster erhalten, die aber alle das gleiche Grundmuster aufweisen. Beispielsweise lässt sich die Kanalzugriffsmusterlänge M = *1024* aus Fig. 25 mit lediglich 7 verschiedenen Grundmustern erzeugen, wobei jede dieser Grundmuster im Mittel 145 in der Zeitachse verschoben wird. Die Performance wird dabei nur unwesentlich schlechter.

Insgesamt wird durch die obige Vorgehensweise der empfängerseitige Detektionsaufwand deutlich reduziert. Es gilt aber immer wieder zu überprüfen, dass die Performance gegenüber der mit reinen Zufallsfolgen gewonnen Performance nicht leidet.

## C. Weitere Ausführungsbeispiele

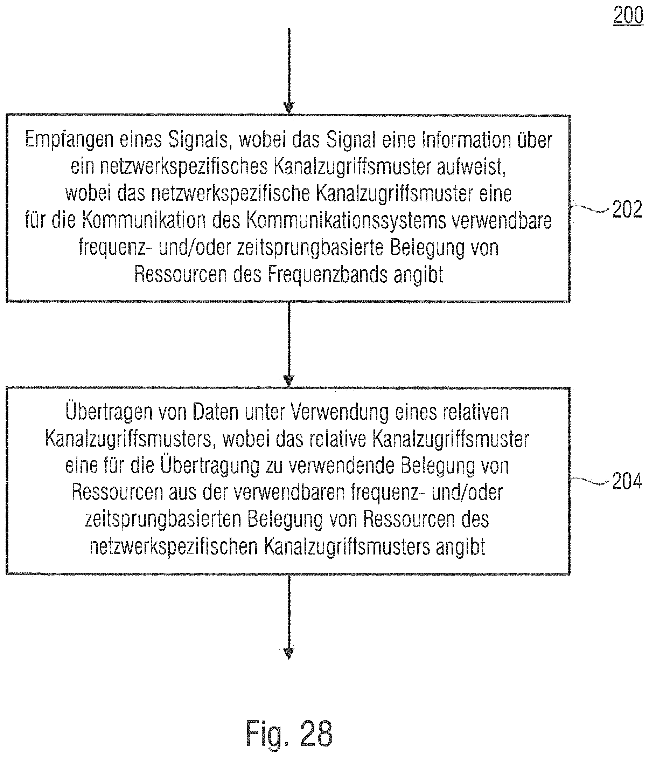

Fig. 28 zeigt ein Flussdiagramm eines Verfahrens 200 zum Betreiben eines Endpunkts eines Kommunikationssystems, wobei das Kommunikationssystem in einem Frequenzband drahtlos kommuniziert, welches von einer Mehrzahl von Kommunikationssystemen zur Kommunikation genutzt wird. Das Verfahren 200 umfasst einen Schritt des Empfangens eines Signals, wobei das Signal eine Information über ein netzwerkspezifisches Kanalzugriffsmuster aufweist, wobei das netzwerkspezifische Kanalzugriffsmuster eine für die Kommunikation des Kommunikationssystems verwendbare frequenz- und/oder zeitsprungbasierte Belegung von Ressourcen des Frequenzbands angibt. Ferner umfasst das Verfahren 200 einen Schritt 204 des Übertragens von Daten unter Verwendung eines relativen Kanalzugriffsmusters, wobei das relative Kanalzugriffsmuster eine für die Übertragung zu verwendende Belegung von Ressourcen aus der verwendbaren frequenz- und/oder zeitsprungbasierten Belegung von Ressourcen des netzwerkspezifischen Kanalzugriffsmusters angibt.

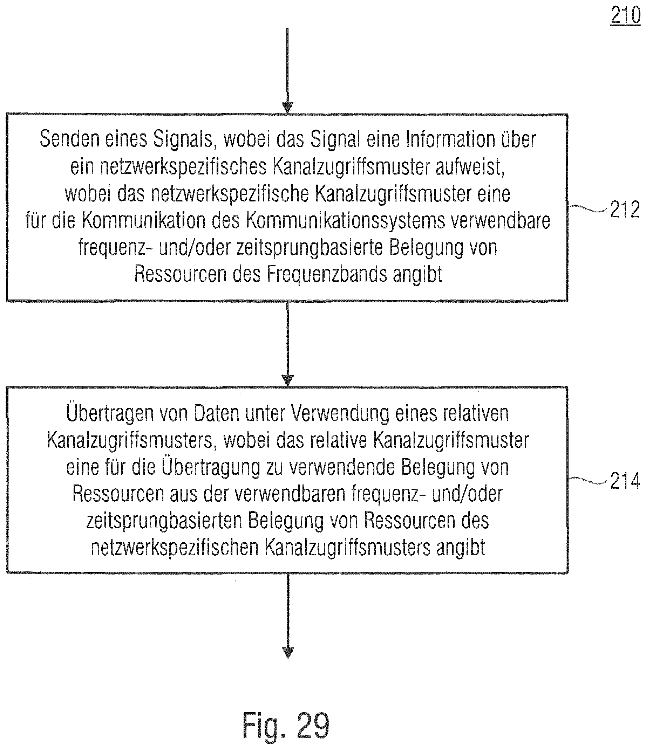

Fig. 29 zeigt ein Flussdiagramm eines Verfahrens 210 zum Betreiben einer Basisstation eines Kommunikationssystems, wobei das Kommunikationssystem in einem Frequenzband drahtlos kommuniziert, welches von einer Mehrzahl von Kommunikationssystemen zur Kommunikation genutzt wird. Das Verfahren 210 umfasst einen Schritt 212 des Sendens eines Signals, wobei das Signal eine Information über ein netzwerkspezifisches Kanalzugriffsmuster aufweist, wobei das netzwerkspezifische Kanalzugriffsmuster eine für die Kommunikation des Kommunikationssystems verwendbare frequenz- und/oder zeitsprungbasierte Belegung von Ressourcen des Frequenzbands angibt. Ferner umfasst das Verfahren 210 einen Schritt 214 des Übertragens von Daten unter Verwendung eines relativen Kanalzugriffsmusters, wobei das relative Kanalzugriffsmuster eine für die Übertragung zu verwendende Belegung von Ressourcen aus der verwendbaren frequenz- und/oder zeitsprungbasierten Belegung von Ressourcen des netzwerkspezifischen Kanalzugriffsmusters angibt.

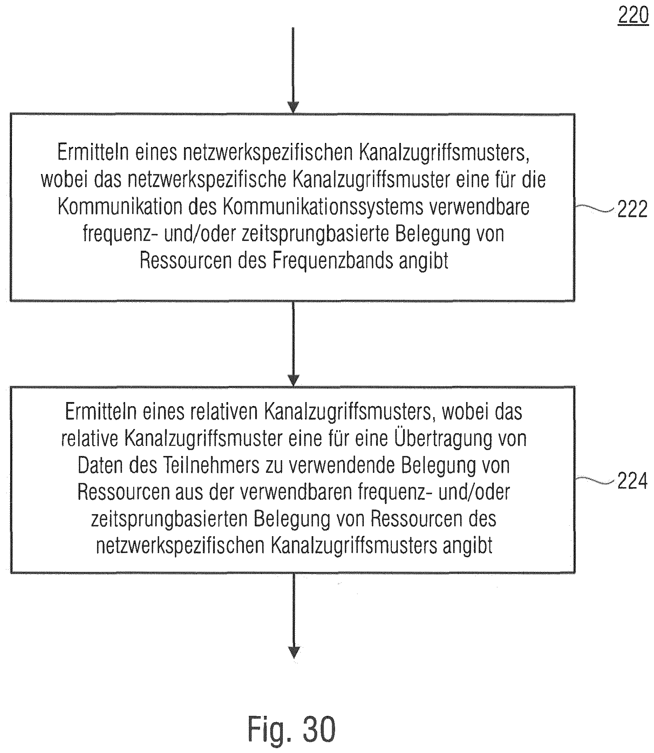

Fig. 30 zeigt ein Flussdiagramm eines Verfahrens 220 zum Betreiben eines Teilnehmers eines Kommunikationssystems, wobei das Kommunikationssystem in einem Frequenzband drahtlos kommuniziert, welches von einer Mehrzahl von Kommunikationssystemen zur Kommunikation genutzt wird. Das Verfahren 220 umfasst einen Schritt 222 des Ermittelns eines netzwerkspezifischen Kanalzugriffsmusters, wobei das netzwerkspezifische Kanalzugriffsmuster eine für die Kommunikation des Kommunikationssystems verwendbare frequenz- und/oder zeitsprungbasierte Belegung von Ressourcen des Frequenzbands angibt. Ferner umfasst das Verfahren 220 einen Schritt 224 des Ermittelns eines relativen Kanalzugriffsmusters, wobei das relative Kanalzugriffsmuster eine für eine Übertragung von Daten des Teilnehmers zu verwendende Belegung von Ressourcen aus der verwendbaren frequenz- und/oder zeitsprungbasierten Belegung von Ressourcen des netzwerkspezifischen Kanalzugriffsmusters angibt.

Ausführungsbeispiele finden Anwendung in Systemen zur Funkübertragung von Daten von Endgeräten zu einer Basisstation oder von einer/mehrerer Basisstationen zu Endgeräten. Beispielsweise kann es sich bei einem System dabei um ein persönliches Netzwerk (engl. Personal Area Network, PAN) oder ein Niedrigenergie-Weitverkehrsnetzwerk (engl. Low Power Wide Area Network, LPWAN) handeln, wobei die Endgeräte z.B. batteriebetriebene Sensoren (Sensorknoten) sein können.

Ausführungsbeispiele zielen auf Anwendungsfälle, in welchen eine Nachricht (Datenpaket) in einem Funknetzwerk in mehreren Teil-Datenpaketen übertragen wird (sogenanntes Telegrammaufteilungsverfahren, engl. Telegram Splitting [1]) und in welchem mehrere untereinander unkoordinierte Funknetzwerke auf gemeinsame Funkressourcen (z.B. gemeinsames Frequenzband) zugreifen.

Wie bereits erwähnt können die hierin beschriebenen Ausführungsbeispiele eingesetzt werden, um Daten basierend auf dem Telegram-Splitting-Verfahren zwischen den Teilnehmern des Kommunikationssystems zu übertragen. Beim Telegram-Splitting-Verfahren werden Daten, wie z.B. ein Telegramm oder Datenpaket, in eine Mehrzahl von Sub-Datenpakete (oder Teildatenpakte, oder Teilpakete) aufgeteilt und die Sub-Datenpakete unter Verwendung eines Zeit- und/oder Frequenzsprungmusters in der Zeit und/oder in der Frequenz verteilt von einem Teilnehmer zu einem anderen Teilnehmer (z.B. von der Basisstation zum Endpunkt, oder vom Endpunkt zur Basisstation) des Kommunikationssystems übertragen, wobei der Teilnehmer, der die Sub-Datenpakete empfängt, diese wieder zusammenfügt (oder kombiniert), um das Datenpaket zu erhalten. Jedes der Sub-Datenpakete enthält dabei nur einen Teil des Datenpakets. Das Datenpaket kann ferner kanalcodiert sein, so dass zum fehlerfreien Decodieren des Datenpakets nicht alle Sub-Datenpakete, sondern nur ein Teil der Sub-Datenpakete erforderlich ist.

Bei der Übertragung von Daten basierend auf dem Telegram-Splitting-Verfahren, können die Sub-Datenpakete in einer Teilmenge (z.B. einer Auswahl) der verfügbaren Ressourcen des netzwerkspezifischen Kanalzugriffsmusters verteilt übertragen werden. Im Detail können die Sub-Datenpaketen basierend auf dem relativen Kanalzugriffsmuster, d.h. in den Ressourcen des relativen Kanalzugriffsmusters, übertragen werden. Beispielsweise kann pro Ressource ein Sub-Datenpaket übertragen werden.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar. Einige oder alle der Verfahrensschritte können durch einen Hardware-Apparat (oder unter Verwendung eines Hardware-Apparats), wie zum Beispiel einen Mikroprozessor, einen programmierbaren Computer oder eine elektronische Schaltung ausgeführt werden. Bei einigen Ausführungsbeispielen können einige oder mehrere der wichtigsten Verfahrensschritte durch einen solchen Apparat ausgeführt werden.

Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einem programmierbaren Computersystem derart zusammenwirken können oder zusammenwirken, dass das jeweilige Verfahren durchgeführt wird. Deshalb kann das digitale Speichermedium computerlesbar sein.

Manche Ausführungsbeispiele gemäß der Erfindung umfassen also einen Datenträger, der elektronisch lesbare Steuersignale aufweist, die in der Lage sind, mit einem programmierbaren Computersystem derart zusammenzuwirken, dass eines der hierin beschriebenen Verfahren durchgeführt wird.

Allgemein können Ausführungsbeispiele der vorliegenden Erfindung als Computerprogrammprodukt mit einem Programmcode implementiert sein, wobei der Programmcode dahin gehend wirksam ist, eines der Verfahren durchzuführen, wenn das Computerprogrammprodukt auf einem Computer abläuft.

Der Programmcode kann beispielsweise auch auf einem maschinenlesbaren Träger gespeichert sein.

Andere Ausführungsbeispiele umfassen das Computerprogramm zum Durchführen eines der hierin beschriebenen Verfahren, wobei das Computerprogramm auf einem maschinenlesbaren Träger gespeichert ist.

Mit anderen Worten ist ein Ausführungsbeispiel des erfindungsgemäßen Verfahrens somit ein Computerprogramm, das einen Programmcode zum Durchführen eines der hierin beschriebenen Verfahren aufweist, wenn das Computerprogramm auf einem Computer abläuft.

Ein weiteres Ausführungsbeispiel der erfindungsgemäßen Verfahren ist somit ein Datenträger (oder ein digitales Speichermedium oder ein computerlesbares Medium), auf dem das Computerprogramm zum Durchführen eines der hierin beschriebenen Verfahren aufgezeichnet ist. Der Datenträger, das digitale Speichermedium oder das computerlesbare Medium sind typischerweise gegenständlich und/oder nichtvergänglich bzw. nichtvorübergehend.

Ein weiteres Ausführungsbeispiel des erfindungsgemäßen Verfahrens ist somit ein Datenstrom oder eine Sequenz von Signalen, der bzw. die das Computerprogramm zum Durchführen eines der hierin beschriebenen Verfahren darstellt bzw. darstellen. Der Datenstrom oder die Sequenz von Signalen kann bzw. können beispielsweise dahin gehend konfiguriert sein, über eine Datenkommunikationsverbindung, beispielsweise über das Internet, transferiert zu werden.

Ein weiteres Ausführungsbeispiel umfasst eine Verarbeitungseinrichtung, beispielsweise einen Computer oder ein programmierbares Logikbauelement, die dahin gehend konfiguriert oder angepasst ist, eines der hierin beschriebenen Verfahren durchzuführen.

Ein weiteres Ausführungsbeispiel umfasst einen Computer, auf dem das Computerprogramm zum Durchführen eines der hierin beschriebenen Verfahren installiert ist.

Ein weiteres Ausführungsbeispiel gemäß der Erfindung umfasst eine Vorrichtung oder ein System, die bzw. das ausgelegt ist, um ein Computerprogramm zur Durchführung zumindest eines der hierin beschriebenen Verfahren zu einem Empfänger zu übertragen. Die Übertragung kann beispielsweise elektronisch oder optisch erfolgen. Der Empfänger kann beispielsweise ein Computer, ein Mobilgerät, ein Speichergerät oder eine ähnliche Vorrichtung sein. Die Vorrichtung oder das System kann beispielsweise einen Datei-Server zur Übertragung des Computerprogramms zu dem Empfänger umfassen.

Bei manchen Ausführungsbeispielen kann ein programmierbares Logikbauelement (beispielsweise ein feldprogrammierbares Gatterarray, ein FPGA) dazu verwendet werden, manche oder alle Funktionalitäten der hierin beschriebenen Verfahren durchzuführen. Bei manchen Ausführungsbeispielen kann ein feldprogrammierbares Gatterarray mit einem Mikroprozessor zusammenwirken, um eines der hierin beschriebenen Verfahren durchzuführen. Allgemein werden die Verfahren bei einigen Ausführungsbeispielen seitens einer beliebigen Hardwarevorrichtung durchgeführt. Diese kann eine universell einsetzbare Hardware wie ein Computerprozessor (CPU) sein oder für das Verfahren spezifische Hardware, wie beispielsweise ein ASIC.

Die hierin beschriebenen Vorrichtungen können beispielsweise unter Verwendung eines Hardware-Apparats, oder unter Verwendung eines Computers, oder unter Verwendung einer Kombination eines Hardware-Apparats und eines Computers implementiert werden.

Die hierin beschriebenen Vorrichtungen, oder jedwede Komponenten der hierin beschriebenen Vorrichtungen können zumindest teilweise in Hardware und/oder in Software (Computerprogramm) implementiert sein.

Die hierin beschriebenen Verfahren können beispielsweise unter Verwendung eines Hardware-Apparats, oder unter Verwendung eines Computers, oder unter Verwendung einer Kombination eines Hardware-Apparats und eines Computers implementiert werden.

Die hierin beschriebenen Verfahren, oder jedwede Komponenten der hierin beschriebenen Verfahren können zumindest teilweise durch Hardware und/oder durch Software ausgeführt werden.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

Literaturverzeichnis

[1] DE 10 2011 082 098 B4

[2] IEEE Std. 802.15.4 - 2015 - IEEE Standard for Low-Rate Wireless Networks, 2015

Abkürzungsverzeichnis

CRC:      Cyclic Redundancy Check
LPWAN:   Low Power Wide Area Network
LSB:      Least Significant Bit(s)
MSB:     Most Significant Bit(s)
PAN:      Personal Area Network
TLS:      Transport Layer Security
TSMA:    Telegram-Splitting-Multiple-Access

**Patentansprüche**

1. Endpunkt (106_1) eines Kommunikationssystems (102),

    wobei das Kommunikationssystem (102) in einem Frequenzband drahtlos kommuniziert, welches von einer Mehrzahl von Kommunikationssystemen zur Kommunikation genutzt wird,
    wobei der Endpunkt (106_1) ausgebildet ist, um ein Signal (120) zu empfangen, wobei das Signal (120) eine Information über ein netzwerkspezifisches Kanalzugriffsmuster (110) aufweist, wobei das netzwerkspezifische Kanalzugriffsmuster (110) eine für die Kommunikation des Kommunikationssystems (102) verwendbare frequenz- und zeitsprungbasierte Belegung von Ressourcen (112) des Frequenzbands angibt,
    wobei der Endpunkt (106_1) ausgebildet ist, um Daten (160) unter Verwendung von einem relativen Kanalzugriffsmuster (116) zu übertragen, wobei das relative Kanalzugriffsmuster (116) eine für die Übertragung zu verwendende Belegung von Ressourcen (118) aus der verwendbaren frequenz- und zeitsprungbasierten Belegung von Ressourcen (112) des netzwerkspezifischen Kanalzugriffsmusters (110) angibt,
    wobei die Information einen Zustand (142) eines Zahlenfolgengenerators (134) zur Erzeugung einer Zahlenfolge beschreibt oder wobei die Information eine Zahl (143_1,143_2) einer Zahlenfolge beschreibt, wobei die Zahlenfolge das Kanalzugriffsmuster (110) bestimmt,
    wobei die für die Übertragung zu verwendende Belegung von Ressourcen (118) des relativen Kanalzugriffsmusters (116) eine Teilmenge der verwendbaren frequenz- und zeitsprungbasierten Belegung von Ressourcen (112) des netzwerkspezifischen Kanalzugriffsmusters (110) ist.

2. Endpunkt (106_1) nach einem der vorangehenden Ansprüche,

    wobei sich das relative Kanalzugriffsmuster (116) von einem anderen relativen Kanalzugriffsmuster (117), basierend auf dem ein anderer Teilnehmer des Kommunikationssystems (102) Daten überträgt, unterscheidet, wobei das andere relative Kanalzugriffsmuster (117) eine für die Übertragung durch den anderen Teilnehmer zu verwendende Belegung von Ressourcen (119) aus der verwendbaren frequenz- und zeitsprungbasierten Belegung von Ressourcen (112) des netzwerkspezifischen Kanalzugriffsmusters (110) angibt.

3. Endpunkt (106_1) nach einem der vorangehenden Ansprüche,
    wobei das netzwerkspezifische Kanalzugriffsmuster (110) die für die Kommunikation des Kommunikationssystems (102) verwendbare frequenz- und zeitsprungbasierte Belegung von Ressourcen (112) des Frequenzbands in Frequenzkanälen und zugeordneten Zeitschlitzen oder in Frequenzkanalindizes und zugordneten Zeitschlitzindizes angibt.

4. Endpunkt (106_1) nach einem der vorangehenden Ansprüche,

wobei der Endpunkt (106_1) ausgebildet ist, um das relative Kanalzugriffsmuster (116) aus einem Satz von M relativen Kanalzugriffsmustern auszuwählen,

wobei die M relativen Kanalzugriffsmuster eine für die Übertragung zu verwendende Belegung von Ressourcen aus der verwendbaren frequenz- und zeitsprungbasierten Belegung von Ressourcen (112) des netzwerkspezifischen Kanalzugriffsmusters (110) angeben,

wobei die M relativen Kanalzugriffsmuster unterschiedlich sind.

5. Endpunkt (106_1) nach einem der vorangehenden Ansprüche,
wobei der Endpunkt (106_1) ausgebildet ist, um als Daten (160) ein Datenpaket, welches in eine Mehrzahl von Sub-Datenpaketen aufgeteilt ist, entsprechend des relativen Kanalzugriffsmuster zu übertragen, wobei die Mehrzahl von Sub-Datenpaketen jeweils nur einen Teil des Datenpakets aufweisen.

6. Basisstation (104) eines Kommunikationssystems (102),

wobei das Kommunikationssystem (102) in einem Frequenzband drahtlos kommuniziert, welches von einer Mehrzahl von Kommunikationssystemen zur Kommunikation genutzt wird,

wobei die Basisstation (104) ausgebildet ist, um ein Signal (120) zu senden, wobei das Signal (120) eine Information über ein netzwerkspezifisches Kanalzugriffsmuster (110) aufweist, wobei das netzwerkspezifische Kanalzugriffsmuster (110) eine für die Kommunikation des Kommunikationssystems (102) verwendbare frequenz- und zeitsprungbasierte Belegung von Ressourcen des Frequenzbands angibt,

wobei die Basisstation (104) ausgebildet ist, um Daten (160) unter Verwendung von einem relativen Kanalzugriffsmuster (116) zu übertragen, wobei das relative Kanalzugriffsmuster (116) eine für die Übertragung zu verwendende Belegung von Ressourcen (118) aus der verwendbaren frequenz- und zeitsprungbasierten Belegung von Ressourcen (112) des netzwerkspezifischen Kanalzugriffsmusters angibt,

wobei die Information einen Zustand (142) eines Zahlenfolgengenerators (134) zur Erzeugung einer Zahlenfolge beschreibt oder wobei die Information eine Zahl (143_1,143_2) einer Zahlenfolge beschreibt, wobei die Zahlenfolge das Kanalzugriffsmuster (110) bestimmt,

wobei die für die Übertragung zu verwendende Belegung von Ressourcen (118) des relativen Kanalzugriffsmusters (116) eine Teilmenge der verwendbaren frequenz- und zeitsprungbasierten Belegung von Ressourcen (112) des netzwerkspezifischen Kanalzugriffsmusters (110) ist.

7. Basisstation (104) nach einem der vorangehenden Ansprüche,

wobei sich das relative Kanalzugriffsmuster (116) von einem anderen relativen Kanalzugriffsmuster (117), basierend auf dem die Basisstation (104) andere Daten überträgt, unterscheidet,

wobei das andere relative Kanalzugriffsmuster (117) eine für die Übertragung zu verwendende Belegung von Ressourcen (119) aus der verwendbaren frequenz- und zeitsprungbasierten Belegung von Ressourcen (112) des netzwerkspezifischen Kanalzugriffsmusters (110) angibt.

8. Basisstation (104) nach einem der vorangehenden Ansprüche,
wobei das netzwerkspezifische Kanalzugriffsmuster (110) die für die Kommunikation des Kommunikationssystems (102) verwendbare frequenz- und zeitsprungbasierte Belegung von Ressourcen (112) des Frequenzbands in Frequenzkanälen und zugeordneten Zeitschlitzen oder in Frequenzkanalindizes und zugordneten Zeitschlitzindizes angibt.

9. Basisstation (104) nach einem der vorangehenden Ansprüche,
wobei die Basisstation (104) ausgebildet ist, um das relative Kanalzugriffsmuster (116) in Abhängigkeit von Anforderungen der zu übertragenen Daten (160) an Übertragungseigenschaften zu erzeugen.

10. Basisstation (104) nach einem der vorangehenden Ansprüche,
wobei die Basisstation (104) ausgebildet ist, um als Daten (160) ein Datenpaket, welches in eine Mehrzahl von Sub-Datenpaketen aufgeteilt ist entsprechend des relativen Kanalzugriffsmuster (116) zu übertragen, wobei die Mehrzahl von Sub-Datenpaketen jeweils nur einen Teil des Datenpakets aufweisen.

11. Kommunikationssystem (102), mit folgenden Merkmalen:

zumindest einem Endpunkt (106_1) nach einem der Ansprüche 1 bis 5, und
einer Basisstation (104) nach einem der Ansprüche 6 bis 10.

**12.** Verfahren (200) zum Betreiben eines Endpunkts (106_1) eines Kommunikationssystems (102), wobei das Kommunikationssystem (102) in einem Frequenzband drahtlos kommuniziert, welches von einer Mehrzahl von Kommunikationssystemen zur Kommunikation genutzt wird, wobei das Verfahren aufweist:

Empfangen (202) eines Signals (120), wobei das Signal (120) eine Information über ein netzwerkspezifisches Kanalzugriffsmuster (110) aufweist, wobei das netzwerkspezifische Kanalzugriffsmuster (110) eine für die Kommunikation des Kommunikationssystems (102) verwendbare frequenz- und zeitsprungbasierte Belegung von Ressourcen des Frequenzbands angibt, und

Übertragen (204) von Daten (160) unter Verwendung eines relativen Kanalzugriffsmusters (116), wobei das relative Kanalzugriffsmuster (116) eine für die Übertragung zu verwendende Belegung von Ressourcen (118) aus der verwendbaren frequenz- und zeitsprungbasierten Belegung von Ressourcen (112) des netzwerkspezifischen Kanalzugriffsmusters angibt,

wobei die Information einen Zustand (142) eines Zahlenfolgengenerators (134) zur Erzeugung einer Zahlenfolge beschreibt oder wobei die Information eine Zahl (143_1,143_2) einer Zahlenfolge beschreibt, wobei die Zahlenfolge das Kanalzugriffsmuster (110) bestimmt,

wobei die für die Übertragung zu verwendende Belegung von Ressourcen (118) des relativen Kanalzugriffsmusters (116) eine Teilmenge der verwendbaren frequenz- und zeitsprungbasierten Belegung von Ressourcen (112) des netzwerkspezifischen Kanalzugriffsmusters (110) ist.

**13.** Verfahren (210) zum Betreiben einer Basisstation (104) eines Kommunikationssystems (102), wobei das Kommunikationssystem (102) in einem Frequenzband drahtlos kommuniziert, welches von einer Mehrzahl von Kommunikationssystemen zur Kommunikation genutzt wird, wobei das Verfahren aufweist:

Senden (212) eines Signals (120), wobei das Signal (120) eine Information über ein netzwerkspezifisches Kanalzugriffsmuster (110) aufweist, wobei das netzwerkspezifische Kanalzugriffsmuster (110) eine für die Kommunikation des Kommunikationssystems (102) verwendbare frequenz- und zeitsprungbasierte Belegung von Ressourcen (112) des Frequenzbands angibt, und

Übertragen (214) von Daten (160) unter Verwendung eines relativen Kanalzugriffsmusters (116), wobei das relative Kanalzugriffsmuster (116) eine für die Übertragung zu verwendende Belegung von Ressourcen (118) aus der verwendbaren frequenz- und zeitsprungbasierten Belegung von Ressourcen (112) des netzwerkspezifischen Kanalzugriffsmusters (110) angibt,

wobei die Information einen Zustand (142) eines Zahlenfolgengenerators (134) zur Erzeugung einer Zahlenfolge beschreibt oder wobei die Information eine Zahl (143_1,143_2) einer Zahlenfolge beschreibt, wobei die Zahlenfolge das Kanalzugriffsmuster (110) bestimmt,

wobei die für die Übertragung zu verwendende Belegung von Ressourcen (118) des relativen Kanalzugriffsmusters (116) eine Teilmenge der verwendbaren frequenz- und zeitsprungbasierten Belegung von Ressourcen (112) des netzwerkspezifischen Kanalzugriffsmusters (110) ist.

**14.** Computerprogramm zur Durchführung des Verfahrens nach einem der Ansprüche 12 bis 13, wenn das Computerprogramm auf einem Computer oder Mikroprozessor abläuft.

**15.** Controller (130) für einen Teilnehmer (104, 106_1) eines Kommunikationssystems (102),

wobei das Kommunikationssystem (102) in einem Frequenzband drahtlos kommuniziert, welches von einer Mehrzahl von Kommunikationssystemen zur Kommunikation genutzt wird,

wobei der Controller (130) ausgebildet ist, um ein netzwerkspezifisches Kanalzugriffsmuster (110) zu ermitteln, wobei das netzwerkspezifische Kanalzugriffsmuster (110) eine für die Kommunikation des Kommunikationssystems verwendbare frequenz- und zeitsprungbasierte Belegung von Ressourcen (112) des Frequenzbands angibt,

wobei der Controller (130) ausgebildet ist, um ein relatives Kanalzugriffsmuster (116) zu ermitteln, wobei das relative Kanalzugriffsmuster (116) eine für eine Übertragung von Daten (160) des Teilnehmers zu verwendende Belegung von Ressourcen (118) aus der verwendbaren frequenz- und zeitsprungbasierten Belegung von Ressourcen (112) des netzwerkspezifischen Kanalzugriffsmusters (110) angibt,

wobei der Controller (130) ausgebildet ist, um das Kanalzugriffsmuster (110) in Abhängigkeit von einem Zustand (142) eines Zahlenfolgengenerators (134) zur Erzeugung einer Zahlenfolge oder einer Zahl (143_1,143_2) einer Zahlenfolge pseudozufällig zu ermitteln,

wobei die für die Übertragung zu verwendende Belegung von Ressourcen (118) des relativen Kanalzugriffsmusters (116) eine Teilmenge der verwendbaren frequenz- und zeitsprungbasierten Belegung von Ressourcen (112) des netzwerkspezifischen Kanalzugriffsmusters (110) ist.

**Claims**

1. Terminal point (106_1) of a communication system (102),

   wherein the communication system (102) wirelessly communicates in a frequency band used for communication by a plurality of communication systems,
   wherein the terminal point (106_1) is configured to receive a signal (120), wherein the signal (120) comprises information about a network-specific channel access pattern (110), wherein the network-specific channel access pattern (110) indicates a frequency hop-based and time hop-based occupancy of resources (112) of the frequency band that is usable for the communication of the communication system (102),
   wherein the terminal point (106_1) is configured to transfer data (160) by using a relative channel access pattern (116), wherein the relative channel access pattern (116) indicates, from the usable frequency hop-based and time hop-based occupancy of resources (112) of the network-specific channel access pattern (110), an occupancy of resources (118) that is to be used for the transfer,
   wherein the information describes a state (142) of a numerical sequence generator (134) for generating a numerical sequence, or wherein the information describes a number (143_1, 143_2) of a numerical sequence, wherein the numerical sequence determines the channel access pattern (110),
   wherein the occupancy of resources (118) of the relative channel access pattern (116) that is to be used for the transfer is a subset of the usable frequency hop-based and time hop-based occupancy of resources (112) of the network-specific channel access pattern (110).

2. Terminal point (106_1) according to any one of the preceding claims,

   wherein the relative channel access pattern (116) differs from another relative channel access pattern (117) based on which another participant of the communication system (102) transfers data,
   wherein the other relative channel access pattern (117) indicates, from the usable frequency hop-based and time hop-based occupancy of resources (112) of the network-specific channel access pattern (110), an occupancy of resources (119) that is to be used for the transfer by the other participant.

3. Terminal point (106_1) according to any one of the preceding claims,
   wherein the network-specific channel access pattern (110) indicates the frequency hop-based and time hop-based occupancy of resources (112) of the frequency band, usable for the communication of the communication system (102), in frequency channels and associated time slots or in frequency channel indices and associated time slot indices.

4. Terminal point (106_1) according to any one of the preceding claims,

   wherein the terminal point (106_1) is configured to select the relative channel access pattern (116) from a set of M relative channel access patterns,
   wherein the M relative channel access patterns indicate, from the usable frequency hop-based and time hop-based occupancy of resources (112) of the network-specific channel access pattern (110), an occupancy of resources that is to be used for the transfer,
   wherein the M relative channel access patterns are different.

5. Terminal point (106_1) according to any one of the preceding claims,
   wherein the terminal point (106_1) is configured to transfer, according to the relative channel access pattern, as data (160) a data packet divided into a plurality of sub-data packets, wherein the plurality of sub-data packets each comprises only a part of the data packet.

6. Base station (104) of a communication system (102),

   wherein the communication system (102) wirelessly communicates in a frequency band used for communication by a plurality of communication systems,
   wherein the base station (104) is configured to transmit a signal (120), wherein the signal (120) comprises information about a network-specific channel access pattern (110), wherein the network-specific channel access pattern (110) indicates a frequency hop-based and time hop-based occupancy of resources of the frequency band that is usable for the communication of the communication system (102),

wherein the base station (104) is configured to transfer data (160) by using a relative channel access pattern (116), wherein the relative channel access pattern (116) indicates, from the usable frequency hop-based and time hop-based occupancy of resources (112) of the network-specific channel access pattern, an occupancy of resources (118) that is to be used for the transfer,

wherein the information describes a state (142) of a numerical sequence generator (134) for generating a numerical sequence, or wherein the information describes a number (143_1, 143_2) of a numerical sequence, wherein the numerical sequence determines the channel access pattern (110),

wherein the occupancy of resources (118) of the relative channel access pattern (116) that is to be used for the transfer is a subset of the usable frequency hop-based and time hop-based occupancy of resources (112) of the network-specific channel access pattern (110).

7. Base station (104) according to any one of the preceding claims,

wherein the relative channel access pattern (116) differs from another relative channel access pattern (117) based on which the base station (104) transfers other data,

wherein the other relative channel access pattern (117) indicates, from the usable frequency hop-based and time hop-based occupancy of resources (112) of the network-specific channel access pattern (110), an occupancy of resources (119) that is to be used for the transfer.

8. Base station (104) according to any one of the preceding claims,
wherein the network-specific channel access pattern (110) indicates the frequency hop-based and time hop-based occupancy of resources (112) of the frequency band, usable for the communication of the communication system (102), in frequency channels and associated time slots or in frequency channel indices and associated time slot indices.

9. Base station (104) according to any one of the preceding claims,
wherein the base station (104) is configured to generate the relative channel access pattern (116) as a function of requirements of the data (160) to be transferred with respect to transfer characteristics.

10. Base station (104) according to any one of the preceding claims,
wherein the base station (104) is configured to transfer, according to the relative channel access pattern (116), as data (160) a data packet divided into a plurality of sub-data packets, wherein the plurality of sub-data packets each comprises only a part of the data packet.

11. Communication system (102), comprising:

at least one terminal point (106_1) according to any one of claims 1 to 5, and
a base station (104) according to any one of claims 6 to 10.

12. Method (200) for operating a terminal point (106_1) of a communication system (102), wherein the communication system (102) wirelessly communicates in a frequency band used for communication by a plurality of communication systems, the method comprising:

receiving (202) a signal (120), wherein the signal (120) comprises information about a network-specific channel access pattern (110), wherein the network-specific channel access pattern (110) indicates a frequency hop-based and time hop-based occupancy of resources of the frequency band that is usable for the communication of the communication system (102), and

transferring (204) data (160) by using a relative channel access pattern (116), wherein the relative channel access pattern (116) indicates, from the usable frequency hop-based and time hop-based occupancy of resources (112) of the network-specific channel access pattern, an occupancy of resources (118) that is to be used for the transfer,

wherein the information describes a state (142) of a numerical sequence generator (134) for generating a numerical sequence, and wherein the information describes a number (143_1, 143_2) of a numerical sequence, wherein the numerical sequence determines the channel access pattern (110),

wherein the occupancy of resources (118) of the relative channel access pattern (116) that is to be used for the transfer is a subset of the usable frequency hop-based and time hop-based occupancy of resources (112) of the network-specific channel access pattern (110).

13. Method (210) for operating a base station (104) of a communication system (102), wherein the communication system (102) wirelessly communicates in a frequency band used for communication by a plurality of communication systems, the method comprising:

transmitting (212) a signal (120), wherein the signal (120) comprises information about a network-specific channel access pattern (110), wherein the network-specific channel access pattern (110) indicates a frequency hop-based and time hop-based occupancy of resources (112) of the frequency band that is usable for the communication of the communication system (102), and
transferring (214) data (160) by using a relative channel access pattern (116), wherein the relative channel access pattern (116) indicates, from the usable frequency hop-based and time hop-based occupancy of resources (112) of the network-specific channel access pattern (110), an occupancy of resources (118) that is to be used for the transfer,
wherein the information describes a state (142) of a numerical sequence generator (134) for generating a numerical sequence, or wherein the information describes a number (143_1, 143_2) of a numerical sequence, wherein the numerical sequence determines the channel access pattern (110),
wherein the occupancy of resources (118) of the relative channel access pattern (116) that is to be used for the transfer is a subset of the usable frequency hop-based and time hop-based occupancy of resources (112) of the network-specific channel access pattern (110).

14. Computer program for performing the method according to any one of claims 12 to 13 when the computer program runs on a computer or a microprocessor.

15. Controller (130) for a participant (104, 106_1) of a communication system (102),

wherein the communication system (102) wirelessly communicates in a frequency band used for communication by a plurality of communication systems,
wherein the controller (130) is configured to identify a network-specific channel access pattern (110), wherein the network-specific channel access pattern (110) indicates a frequency hop-based and time hop-based occupancy of resources (112) of the frequency band that is usable for the communication of the communication system,
wherein the controller (130) is configured to identify a relative channel access pattern (116), wherein the relative channel access pattern (116) indicates, from the usable frequency hop-based and time hop-based occupancy of resources (112) of the network-specific channel access pattern (110), an occupancy of resources (118) that is to be used for the transfer of data (160) of the participant,
wherein the controller (130) is configured to pseudo-randomly identify the channel access pattern (110) as a function of a state (142) of a numerical sequence generator (134) for generating a numerical sequence or a number (143_1, 143_2) of a numerical sequence,
wherein the occupancy of resources (118) of the relative channel access pattern (116) that is to be used for the transfer is a subset of the usable frequency hop-based and time hop-based occupancy of resources (112) of the network-specific channel access pattern (110).

**Revendications**

1. Point d'extrémité (106_1) d'un système de communication (102),

dans lequel le système de communication (102) communique sans fil dans une bande de fréquences qui est utilisée pour la communication par une pluralité de systèmes de communication,
dans lequel le point d'extrémité (106_1) est conçu pour recevoir un signal (120), dans lequel le signal (120) présente une information sur un modèle d'accès au canal spécifique au réseau (110), dans lequel le modèle d'accès au canal spécifique au réseau (110) indique une occupation de ressources (112) de la bande de fréquences à base de sauts en fréquence et dans le temps utilisable pour la communication du système de communication (102),
dans lequel le point d'extrémité (106_1) est conçu pour transmettre les données (160) à l'aide d'un modèle d'accès au canal (116) relatif, dans lequel le modèle d'accès au canal (116) relatif indique une occupation de ressources (118) à utiliser pour la transmission parmi l'occupation de ressources (112) à base de sauts en fréquence et dans le temps utilisable du modèle d'accès au canal spécifique au réseau (110),
dans lequel l'information décrit un état (142) d'un générateur de séquence de numéros (134) destiné à générer une séquence de numéros ou dans lequel l'information décrit un numéro (143_1, 143_2) d'une séquence de numéros, dans lequel la séquence de numéros détermine le modèle d'accès au canal (110),
dans lequel l'occupation de ressources (118) du modèle d'accès au canal (116) relatif à utiliser pour la transmission est une quantité partielle de l'occupation de ressources (112) à base de sauts en fréquence et dans le temps utilisable du modèle d'accès au canal spécifique au réseau (110).

2. Point d'extrémité (106_1) selon l'une des revendications précédentes,

dans lequel le modèle d'accès au canal (116) relatif diffère d'un autre modèle d'accès au canal (117) relatif sur base duquel un autre abonné du système de communication (102) transmet les données,
dans lequel l'autre modèle d'accès au canal (117) relatif indique une occupation de ressources (119) à utiliser pour la transmission par l'autre abonné parmi l'occupation de ressources (112) à base de sauts en fréquence et dans le temps utilisable du modèle d'accès au canal spécifique au réseau (110).

3. Point d'extrémité (106_1) selon l'une des revendications précédentes,
dans lequel le modèle d'accès au canal spécifique au réseau (110) indique l'occupation de ressources à base de sauts en fréquence et dans le temps (112) de la bande de fréquences en canaux de fréquence et créneaux de temps associés ou en indices de canal de fréquence et indices de créneau de temps associés utilisable pour la communication du système de communication (102).

4. Point d'extrémité (106_1) selon l'une des revendications précédentes,

dans lequel le point d'extrémité (106_1) est conçu pour sélectionner le modèle d'accès au canal (116) relatif parmi un ensemble de M modèles d'accès au canal relatifs,
dans lequel les M modèles d'accès au canal relatifs indiquent une occupation de ressources à utiliser pour la transmission parmi l'occupation de ressources (112) à base de sauts en fréquence et dans le temps utilisable du modèle d'accès au canal spécifique au réseau (110),
dans lequel les M modèles d'accès aux canaux relatifs sont différents.

5. Point d'extrémité (106_1) selon l'une des revendications précédentes,
dans lequel le point d'extrémité (106_1) est conçu pour transmettre, comme données (160), un paquet de données qui est divisé en une pluralité de sous-paquets de données selon le modèle d'accès au canal relatif, dans lequel la pluralité de sous-paquets de données ne présentent, chacun, qu'une partie du paquet de données.

6. Station de base (104) d'un système de communication (102),

dans laquelle le système de communication (102) communique sans fil dans une bande de fréquences qui est utilisée pour la communication par une pluralité de systèmes de communication,
dans laquelle la station de base (104) est conçue pour transmettre un signal (120), dans laquelle le signal (120) présente une information sur un modèle d'accès au canal spécifique au réseau (110), dans laquelle le modèle d'accès au canal spécifique au réseau (110) est une occupation de ressources de la bande de fréquences à base de sauts en fréquence et dans le temps utilisable pour la communication du système de communication (102),
dans laquelle la station de base (104) est conçue pour transmettre les données (160) à l'aide d'un modèle d'accès au canal (116) relatif, dans laquelle le modèle d'accès au canal (116) relatif indique une occupation de ressources (118) à utiliser pour la transmission parmi l'occupation de ressources (112) à base de sauts en fréquence et dans le temps utilisable du modèle d'accès au canal spécifique au réseau,
dans laquelle l'information décrit un état (142) d'un générateur de séquence de numéros (134) destiné à générer une séquence de numéros ou dans laquelle l'information décrit un numéro (143_1, 143_2) d'une séquence de numéros, dans laquelle la séquence de numéros détermine le modèle d'accès au canal (110),
dans laquelle l'occupation de ressources (118) du modèle d'accès au canal (116) relatif à utiliser pour la transmission est une quantité partielle de l'occupation de ressources (112) à base de sauts en fréquence et dans le temps utilisable du modèle d'accès au canal spécifique au réseau (110).

7. Station de base (104) selon l'une des revendications précédentes,

dans laquelle le modèle d'accès au canal relatif (116) diffère d'un autre modèle d'accès au canal relatif (117) sur base duquel la station de base (104) transmet d'autres données,

dans laquelle l'autre modèle d'accès au canal (117) relatif indique une occupation de ressources (119) à utiliser pour la transmission parmi l'occupation de ressources (112) à base de sauts en fréquence et dans le temps utilisable du modèle d'accès au canal spécifique au réseau (110).

8. Station de base (104) selon l'une des revendications précédentes,
dans laquelle le modèle d'accès au canal spécifique au réseau (110) indique l'occupation de ressources (112) à base de sauts en fréquence et dans le temps de la bande de fréquences en canaux de fréquences et créneaux de temps associés ou en indices de canal de fréquence et indices de créneau de temps associés utilisable pour la communication du système de communication (102).

9. Station de base (104) selon l'une des revendications précédentes,
dans laquelle la station de base (104) est conçue pour générer le modèle d'accès au canal (116) relatif en fonction des conditions requises des données (160) à transmettre en ce qui concerne les propriétés de transmission.

10. Station de base (104) selon l'une des revendications précédentes,
dans laquelle la station de base (104) est conçue pour transmettre, comme données (160), un paquet de données qui est divisé en une pluralité de sous-paquets de données selon le modèle d'accès au canal (116) relatif, dans laquelle la pluralité de sous-paquets de données ne présentent, chacun, qu'une partie du paquet de données.

11. Système de communication (102), aux caractéristiques suivantes:

au moins un point d'extrémité (106_1) selon l'une des revendications 1 à 5, et
une station de base (104) selon l'une des revendications 6 à 10.

12. Procédé (200) permettant de faire fonctionner un point d'extrémité (106_1) d'un système de communication (102), dans lequel le système de communication (102) communique sans fil dans une bande de fréquences qui est utilisée par une pluralité de systèmes de communication pour la communication, dans lequel le procédé présente le fait de:

recevoir (202) un signal (120), où le signal (120) présente une information sur un modèle d'accès au canal spécifique au réseau (110), où le modèle d'accès au canal spécifique au réseau (110) indique une occupation de ressources à base de sauts en fréquence et dans le temps de la bande de fréquences utilisable pour la communication du système de communication (102), et
transmettre (204) les données (160) à l'aide d'un modèle d'accès au canal (116) relatif, où le modèle d'accès au canal (116) relatif indique une occupation de ressources (118) à utiliser pour la transmission parmi l'occupation de ressources (112) à base de sauts en fréquence et dans le temps utilisable du modèle d'accès au canal spécifique au réseau,
dans lequel l'information décrit un état (142) d'un générateur de séquence de numéros (134) destiné à générer une séquence de numéros ou dans lequel l'information décrit un numéro (143_1, 143_2) d'une séquence de numéros, dans lequel la séquence de numéros détermine le modèle d'accès au canal (110),
dans lequel l'occupation de ressources (118) du modèle d'accès au canal (116) relatif à utiliser pour la transmission est une quantité partielle de l'occupation de ressources (112) à base de sauts en fréquence et dans le temps utilisable du modèle d'accès au canal spécifique au réseau (110).

13. Procédé (210) permettant de faire fonctionner une station de base (104) d'un système de communication (102), dans lequel le système de communication (102) communique sans fil dans une bande de fréquences qui est utilisée par une pluralité de systèmes de communication pour la communication, dans lequel le procédé présente le fait de:

envoyer (212) un signal (120), où le signal (120) présente une information sur un modèle d'accès au canal spécifique au réseau (110), où le modèle d'accès au canal spécifique au réseau (110) indique une occupation de ressources (112) à base de sauts en fréquence et dans le temps de la bande de fréquences utilisable pour la communication du système de communication (102), et
transmettre (204) les données (160) à l'aide d'un modèle d'accès de canal (116) relatif, où le modèle d'accès au canal (116) relatif indique une occupation de ressources (118) à utiliser pour la transmission parmi l'occupation de ressources (112) à base de sauts en fréquence et dans le temps utilisable du modèle d'accès au canal spécifique au réseau (110),
dans lequel l'information décrit un état (142) d'un générateur de séquence de numéros (134) destiné à générer une séquence de numéros ou dans lequel l'information décrit un numéro (143_1, 143_2) d'une séquence de numéros, dans lequel la séquence de numéros détermine le modèle d'accès au canal (110),

dans lequel l'occupation de ressources (118) du modèle d'accès au canal (116) relatif à utiliser pour la transmission est une quantité partielle de l'occupation de ressources (112) à base de sauts en fréquence et dans le temps utilisable du modèle d'accès au canal spécifique au réseau (110).

14. Programme d'ordinateur pour la mise en oeuvre du procédé selon l'une des revendications 12 à 13 lorsque le programme d'ordinateur est exécuté sur un ordinateur ou un microprocesseur.

15. Contrôleur (130) pour un abonné (104, 106_1) d'un système de communication (102),

dans lequel le système de communication (102) communique sans fil dans une bande de fréquences qui est utilisée pour la communication par une pluralité de systèmes de communication,

dans lequel le contrôleur (130) est conçu pour déterminer un modèle d'accès au canal spécifique au réseau (110), dans lequel le modèle d'accès au canal spécifique au réseau (110) indique une occupation de ressources (112) à base de sauts en fréquence et dans le temps de la bande de fréquences utilisable pour la communication du système de communication,

dans lequel le contrôleur (130) est conçu pour déterminer un modèle d'accès au canal (116) relatif, dans lequel le modèle d'accès au canal (116) relatif indique une occupation de ressources (118) à utiliser pour une transmission de données (160) de l'abonné parmi l'occupation de ressources (112) à base de sauts en fréquence et dans le temps utilisable du modèle d'accès au canal spécifique au réseau (110),

dans lequel le contrôleur (130) est conçu pour déterminer de manière pseudo-aléatoire le modèle d'accès au canal (110) en fonction d'un état (142) d'un générateur de séquence de nombres (134) destiné à générer une séquence de nombres ou un nombre (143_1, 143_2) d'une séquence de nombres,

dans lequel l'occupation de ressources (118) du modèle d'accès au canal (116) relatif à utiliser pour la transmission est une quantité partielle de l'occupation de ressources (112) à base de sauts en fréquence et dans le temps utilisable du modèle d'accès au canal spécifique au réseau (110).

Fig. 1

Fig. 2

EP 3 811 704 B1

Fig. 3

EP 3 811 704 B1

102

106_4

Endpunkt

Controller — 130

106_1

Endpunkt

130 — Controller

104

Basisstation

Controller — 130

120

106_3

Endpunkt

130 — Controller

106_2

Endpunkt

130 — Controller

Fig. 4

Fig. 5

<u>130</u>

132                    135_1                  135_2

| netzwerkspezifischer Identifikator | periodischer Bakenindex | periodischer Zeitschlitzindex |

140            143_1          143_2

ID                              Z1              Z2

randomisierender Zuordner
R=map_rand(ID, Z1, Z2)                                    136

144

R

Frequenz-/Zeitpunkt-Zuordner
$(f,t=map\_ft(R)$                                          138

146                              148

Frequenzinformation f

Zeitinformation t

Kanalzugriffsmuster

# Fig. 6

130

R ⤳

| |
|---|
| Frequenzdifferenz-/Zeitpunkt-Zuordner<br>($\Delta fi, t = map\_\Delta ft(R)$) |

138

$\Delta fi_n$

$fi_n$

154

150

Verzögerung

152 $\oplus$

$\Delta fi_{n+1}$

Frequenzkanalinformation fi

Zeitinformation t

Fig. 7

Fig. 8

EP 3 811 704 B1

Fig. 9

EP 3 811 704 B1

Fig. 10

Fig. 11

EP 3 811 704 B1

EP 3 811 704 B1

Fig. 12

110

Kanalzugriffsmuster

| Aktivitätsrate $A_1$ | Aktivitätsrate $A_2$ | Aktivitätsrate $A_3$ |
|---|---|---|

Bereich 1      Bereich 2      Bereich 3      Zeit

Fig. 13

Fig. 14

= Ressourceelemente des Grund-Kanalzugriffsmusters

= bei Bedarf zusätzlich aktivierbare Elemente des Kanalzugriffsmusters

EP 3 811 704 B1

Fig. 15

EP 3 811 704 B1

Fig. 16

EP 3 811 704 B1

Fig. 17

EP 3 811 704 B1

Fig. 18

Fig. 19

Fig. 20

relativer Frequenz-kanal-index

gleichzeitige Belegung von zwei Frequenzkanälen

relatives Kanalzugriffsmuster
mit gleichzeitiger Aussendung auf
mehreren Frequenzkanälen
(116)

Fig. 21

Fig. 22

EP 3 811 704 B1

110

112

118

Ressourcen-Frame der Länge $T_{Frame} = T_{RE} \cdot (Z/A)$ sec

118

118

118

118

F Frequenz-kanäle

F-1
F-2
2
1
0

0 1 2 3 4 5 6 ... Z-3 Z-2 Z-1

Z Zeitschlitze

118

118

118

relatives Kanalzugriffsmuster mit D Ressourcen
(116)

Fig. 23

62

| Anwendungsfälle | $T_{frame}$ (ms) | A | $T_{RE}$ (ms) | F | Z | F x Z Ressourceelemente je Ressourcen-Frame |
|---|---|---|---|---|---|---|
| Latenzkritisch (Batteriebetrieben) | 360 | 0,33 | 15 | 1 | 8 | 8 |
| Latenzkritisch (Stromnetz) | 480 | 0,50 | 15 | 5 | 16 | 80 |
| Interferenzrobust (Batteriebetrieben) | 9000 | 0,10 | 30 | 1 | 30 | 30 |
| Interferenzrobust (Stromnetz) | 9000 | 0,33 | 30 | 10 | 100 | 1000 |

Fig. 24

$N_{sim} = 500000$, $F=1$, $Z=360$, $D=18$

→PER

→Anzahl der N gleichzeitig im Ressourcen-Frame aktiven Endgeräte

| | |
|---|---|
| △ | M= 16 |
| ○ | M= 64 |
| ✦ | M= 256 |
| ■ | M= 1024 |
| ◇ | M= 2048 |
| □ | M= "inf" |

Fig. 25

$N_{sim}=500000$, F=1, Z=60, D=15

Fig. 26

EP 3 811 704 B1

Fig. 27

EP 3 811 704 B1

<u>200</u>

Empfangen eines Signals, wobei das Signal eine Information über ein netzwerkspezifisches Kanalzugriffsmuster aufweist, wobei das netzwerkspezifische Kanalzugriffsmuster eine für die Kommunikation des Kommunikationssystems verwendbare frequenz- und/oder zeitsprungbasierte Belegung von Ressourcen des Frequenzbands angibt ⌇202

Übertragen von Daten unter Verwendung eines relativen Kanalzugriffsmusters, wobei das relative Kanalzugriffsmuster eine für die Übertragung zu verwendende Belegung von Ressourcen aus der verwendbaren frequenz- und/oder zeitsprungbasierten Belegung von Ressourcen des netzwerkspezifischen Kanalzugriffsmusters angibt ⌇204

Fig. 28

<u>210</u>

Senden eines Signals, wobei das Signal eine Information über
ein netzwerkspezifisches Kanalzugriffsmuster aufweist,
wobei das netzwerkspezifische Kanalzugriffsmuster eine
für die Kommunikation des Kommunikationssystems verwendbare
frequenz- und/oder zeitsprungbasierte Belegung von
Ressourcen des Frequenzbands angibt

~212

Übertragen von Daten unter Verwendung eines relativen
Kanalzugriffsmusters, wobei das relative Kanalzugriffsmuster
eine für die Übertragung zu verwendende Belegung von
Ressourcen aus der verwendbaren frequenz- und/oder
zeitsprungbasierten Belegung von Ressourcen des
netzwerkspezifischen Kanalzugriffsmusters angibt

~214

Fig. 29

<u>220</u>

Ermitteln eines netzwerkspezifischen Kanalzugriffsmusters, wobei das netzwerkspezifische Kanalzugriffsmuster eine für die Kommunikation des Kommunikationssystems verwendbare frequenz- und/oder zeitsprungbasierte Belegung von Ressourcen des Frequenzbands angibt ～222

Ermitteln eines relativen Kanalzugriffsmusters, wobei das relative Kanalzugriffsmuster eine für eine Übertragung von Daten des Teilnehmers zu verwendende Belegung von Ressourcen aus der verwendbaren frequenz- und/oder zeitsprungbasierten Belegung von Ressourcen des netzwerkspezifischen Kanalzugriffsmusters angibt ～224

Fig. 30

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2015163814 A1
- US 2009074033 A1
- WO 2017162742 A2
- DE 102011082098 B4